# EUROPEAN PATENT APPLICATION

(11) **EP 4 844 557 A1**
(43) Date of publication of application: **25.11.2026**
(21) Application number: 26179480.4
(22) Date of filing: 19.05.2026
(51) Int. Cl.: G06F 3/0488, H04M 1/72436

(54) **USER INTERFACES FOR GENERATING AND INTERACTING WITH BACKGROUNDS**

(30) Priority: 19.05.2025 US 202563808288 P; 13.05.2026 US 202619676524
(71) Applicant: Apple Inc., Cupertino, CA 95014 (US)
(72) Inventor: DALONZO, Christian X., San Francisco (US); PAUL, Grant R., San Francisco (US)
(74) Representative: COPA Copenhagen Patents

(57) **Abstract**

In some embodiments, an electronic device displays one or more visual representations of a background layer based on a detected event, such as to provide response to user interaction with the messaging conversation. In some embodiments, an electronic device displays one or more visual representations of a background associated with a messaging conversation based on one or more criteria, such as to determine when the messaging conversation is not safe. In some embodiments, an electronic device generates, via an automatically generated visual media application, a visual representation of a respective background layer for the messaging user interface based on the contents of the messaging conversation.

## Description

### Cross-Reference to Related Applications

This application claims the benefit of U.S. Provisional Application No. 63/808,288, filed May 19, 2025, and U.S. Patent Application No. 19/676,524, filed May 13, 2026, the contents of which are herein incorporated by reference in their entireties for all purposes.

### Field of the Disclosure

This disclosure relates generally to an electronic device presenting user interfaces corresponding to generating, sharing, and/or interacting with backgrounds such as displayed in association with a messaging conversation in a messaging application.

### Background of the Disclosure

User interaction with electronic devices has increased significantly in recent years. These devices can be devices such as computers, tablet computers, televisions, multimedia devices, or mobile devices. In some circumstances, users may wish to have increased interaction with backgrounds associated with a messaging conversation. In some circumstances, one or more users may wish to not display a background associated with a messaging conversation when certain factors (e.g., message sender, background content, based on preselected preference of user at the local electronic device, etc.) satisfy one or more criteria. In some circumstances, users may wish to apply a background layer to a current messaging conversation based on a recommended background layer generated from an automatically-generated visual media application. The user may therefore desire efficient ways of displaying and/or interacting with backgrounds such as in relation to messaging conversations.

### Summary of the Disclosure

Providing efficient ways of displaying and/or interacting with background layers, such as in relation to a messaging conversation, enhances user interactions with the electronic device by offering additional modes of interaction between the users and/or the electronic devices participating in a messaging conversation. Providing efficient ways of determining if a messaging conversation is "safe" based on factors (e.g., message sender, background content, based on preselected preference of user at the local electronic device, etc.) enhances user interactions with the electronic device by reducing time and inputs needed to opt to display or not display a particular background. Further, performing an operation when a set of conditions has been met without requiring further user input (such as generating a visual representation of a background layer in response to content within a messaging account) enhances the operability of the device by reducing unnecessary inputs and/or steps to navigate through different user interfaces or sets of controls, reducing energy usage by the device.

The full descriptions of the embodiments are provided in the Drawings and the Detailed Description, and it is understood that the Summary provided above does not limit the scope of the disclosure in any way.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

### Brief Description of the Drawings

For a better understanding of the various described embodiments, reference should be made to the Detailed Description below, in conjunction with the following drawings in which like reference numerals refer to corresponding parts throughout the figures.
Fig. 1A is a block diagram illustrating a portable multifunction device with a touch-sensitive display in accordance with some embodiments.
Fig. 1B is a block diagram illustrating exemplary components for event handling in accordance with some embodiments.
Fig. 2 illustrates a portable multifunction device having a touch screen in accordance with some embodiments.
Figs. 3A-3G are block diagrams of an exemplary multifunction device with a display and a touch-sensitive surface in accordance with some embodiments.
Fig. 4A illustrates an exemplary user interface for a menu of applications on a portable multifunction device in accordance with some embodiments.
Fig. 4B illustrates an exemplary user interface for a multifunction device with a touch-sensitive surface that is separate from the display in accordance with some embodiments.
Fig. 5A illustrates a personal electronic device in accordance with some embodiments.
Fig. 5B is a block diagram illustrating a personal electronic device in accordance with some embodiments.
Figs. 5C-5D illustrate exemplary components of a personal electronic device having a touch-sensitive display and intensity sensors in accordance with some embodiments.
Figs. 5E-5H illustrate exemplary components and user interfaces of a personal electronic device in accordance with some embodiments.
Figs. 6A-6T illustrate exemplary ways in which an electronic device displays one or more visual representations of a background layer, visual effects, and/or visual representation of messages, based on events detected at one or more electronic devices, in accordance with some embodiments of the disclosure.
Fig. 7 illustrates a flow diagram illustrating a method in which an electronic device displays one or more visual representations of a background layer associated with a messaging conversation based on detecting an event which satisfies, or does not satisfy, one or more criteria, in accordance with some embodiments of the disclosure.
Figs. 8A-8K illustrate exemplary ways in which an electronic device displays one or more visual representations of a background associated with a messaging conversation, or a different background than that associated with the messaging conversation, based on one or more criteria being satisfied according to some embodiments.
Figs. 9 illustrates a flow diagram illustrating a method in which an electronic device displays visual representations of the background layer associated with a messaging conversation based on the satisfaction of one or more first criteria according to some embodiments.
Figs. 10A-10N illustrate exemplary ways in which an electronic device generates, via an automatically generated visual media application, a visual representation of a respective background layer for the messaging user interface based on the contents of the messaging conversation and displays the visual representation to the user according to some embodiments.
Fig. 11 illustrates a flow diagram illustrating a method in which an electronic device generates, via an automatically generated visual media application, a visual representation of a respective background layer for the messaging user interface based on the contents of the messaging conversation and displays the visual representation to the user in accordance with some embodiments of the disclosure.

### Detailed Description

In the following description of embodiments, reference is made to the accompanying drawings which form a part hereof, and in which it is shown by way of illustration specific embodiments that are optionally practiced. It is to be understood that other embodiments are optionally used, and structural changes are optionally made without departing from the scope of the disclosed embodiments.

Providing efficient ways of displaying and/or interacting with background layers, such as in relation to a messaging conversation, enhances user interactions with the electronic device by offering additional modes of interaction between the users and/or the electronic devices participating in a messaging conversation. Providing efficient ways of determining if a messaging conversation is "safe" based on factors (e.g., message sender, background content, based on preselected preference of user at the local electronic device, etc.) enhances user interactions with the electronic device by reducing time and inputs needed to opt to display or not display a particular background. Further, performing an operation when a set of conditions has been met without requiring further user input (such as generating a visual representation of a background layer in response to content within a messaging account) enhances the operability of the device by reducing unnecessary inputs and/or steps to navigate through different user interfaces or sets of controls, reducing energy usage by the device.

Although the following description uses terms "first," "second," etc. to describe various elements, these elements should not be limited by the terms. These terms are only used to distinguish one element from another. For example, a first touch could be termed a second touch, and, similarly, a second touch could be termed a first touch, without departing from the scope of the various described embodiments. The first touch and the second touch are both touches, but they are not the same touch.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

### EXEMPLARY DEVICES

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, California. Other portable electronic devices, such as laptops or tablet computers with touch-sensitive surfaces (e.g., touch screen displays and/or touch pads), are, optionally, used. It should also be understood that, in some embodiments, the device is not a portable communications device, but is a desktop computer or a television with a touch-sensitive surface (e.g., a touch screen display and/or a touch pad). In some embodiments, the device does not have a touch screen display and/or a touch pad, but rather is capable of outputting display information (such as the user interfaces of the disclosure) for display on a separate display device, and capable of receiving input information from a separate input device having one or more input mechanisms (such as one or more buttons, a touch screen display and/or a touch pad). In some embodiments, the device has a display, but is capable of receiving input information from a separate input device having one or more input mechanisms (such as one or more buttons, a touch screen display and/or a touch pad). In some embodiments, the electronic device is a computer system that is in communication (e.g., via wireless communication, via wired communication) with a display generation component (e.g., a display device such as a head-mounted device (HMD), a display, a projector, a touch-sensitive display, or other device or component that presents visual content to a user, for example, on or in the display generation component itself or produced from the display generation component and visible elsewhere). The display generation component is configured to provide visual output, such as display via a CRT display, display via an LED display, or display via image projection. In some embodiments, the display generation component is integrated with the computer system. In some embodiments, the display generation component is separate from the computer system. As used herein, "displaying" content includes causing to display the content (e.g., video data rendered or decoded by display controller 156) by transmitting, via a wired or wireless connection, data (e.g., image data or video data) to an integrated or external display generation component to visually produce the content.

In the discussion that follows, an electronic device that includes a display and a touch-sensitive surface is described. It should be understood, however, that the electronic device optionally includes one or more other physical user-interface devices, such as a physical keyboard, a mouse and/or a joystick. Further, as described above, it should be understood that the described electronic device, display and touch-sensitive surface are optionally distributed amongst two or more devices. Therefore, as used in this disclosure, information displayed on the electronic device or by the electronic device is optionally used to describe information outputted by the electronic device for display on a separate display device (touch-sensitive or not). Similarly, as used in this disclosure, input received on the electronic device (e.g., touch input received on a touch-sensitive surface of the electronic device) is optionally used to describe input received on a separate input device, from which the electronic device receives input information.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, a television channel browsing application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

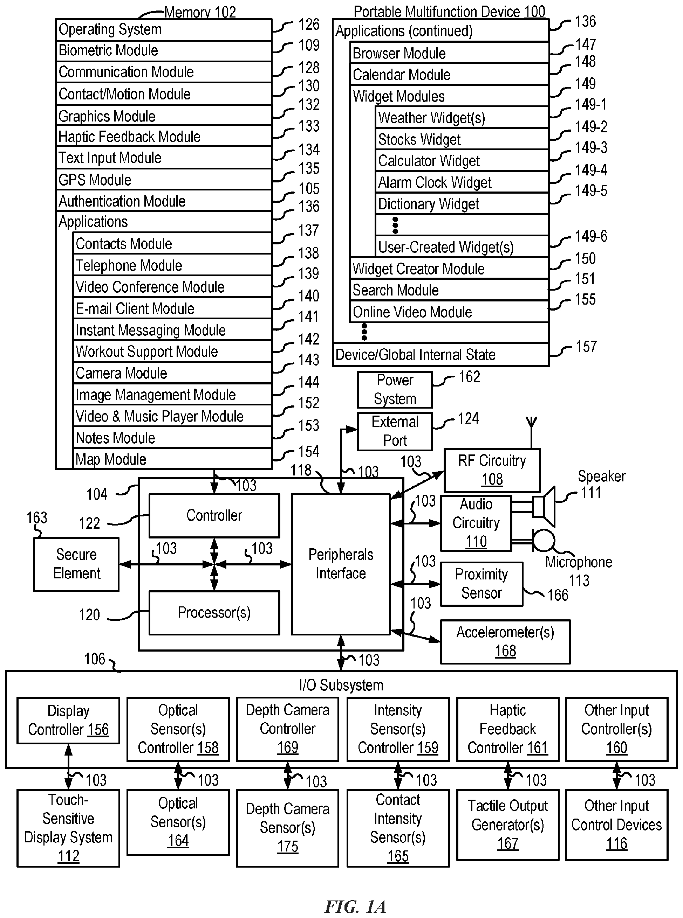

Attention is now directed toward embodiments of portable or non-portable devices with touch-sensitive displays, though the devices need not include touch-sensitive displays or displays in general, as described above. Fig. 1A is a block diagram illustrating portable or non-portable multifunction device 100 with touch-sensitive displays 112 in accordance with some embodiments. Touch-sensitive display 112 is sometimes called a "touch screen" for convenience, and is sometimes known as or called a touch-sensitive display system. Device 100 includes memory 102 (which optionally includes one or more computer readable storage mediums), memory controller 122, one or more processing units (CPU's) 120, peripherals interface 118, RF circuitry 108, audio circuitry 110, speaker 111, microphone 113, input/output (I/O) subsystem 106, other input or control devices 116, and external port 124. Device 100 optionally includes one or more optical sensors 164. Device 100 optionally includes one or more contact intensity sensors 165 for detecting intensity of contacts on device 100 (e.g., a touch-sensitive surface such as touch-sensitive display system 112 of device 100). Device 100 optionally includes one or more tactile output generators 167 for generating tactile outputs on device 100 (e.g., generating tactile outputs on a touch-sensitive surface such as touch-sensitive display system 112 of device 100 or touchpad 355 of device 300). These components optionally communicate over one or more communication buses or signal lines 103.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as a "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 100 is only one example of a portable or non-portable multifunction device, and that device 100 optionally has more or fewer components than shown, optionally combines two or more components, or optionally has a different configuration or arrangement of the components. The various components shown in Fig. 1A are implemented in hardware, software, or a combination of both hardware and software, including one or more signal processing and/or application specific integrated circuits. Further, the various components shown in Fig. 1A are optionally implemented across two or more devices; for example, a display and audio circuitry on a display device, a touch-sensitive surface on an input device, and remaining components on device 100. In such an embodiment, device 100 optionally communicates with the display device and/or the input device to facilitate operation of the system, as described in the disclosure, and the various components described herein that relate to display and/or input remain in device 100, or are optionally included in the display and/or input device, as appropriate.

Memory 102 optionally includes high-speed random access memory and optionally also includes non-volatile memory, such as one or more magnetic disk storage devices, flash memory devices, or other non-volatile solid-state memory devices. Memory controller 122 optionally controls access to memory 102 by other components of device 100.

Peripherals interface 118 can be used to couple input and output peripherals of the device to CPU 120 and memory 102. The one or more processors 120 run or execute various software programs and/or sets of instructions stored in memory 102 to perform various functions for device 100 and to process data.

In some embodiments, peripherals interface 118, CPU 120, and memory controller 122 are, optionally, implemented on a single chip, such as chip 104. In some other embodiments, they are, optionally, implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 108 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.11n, and/or IEEE 802.11ac), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

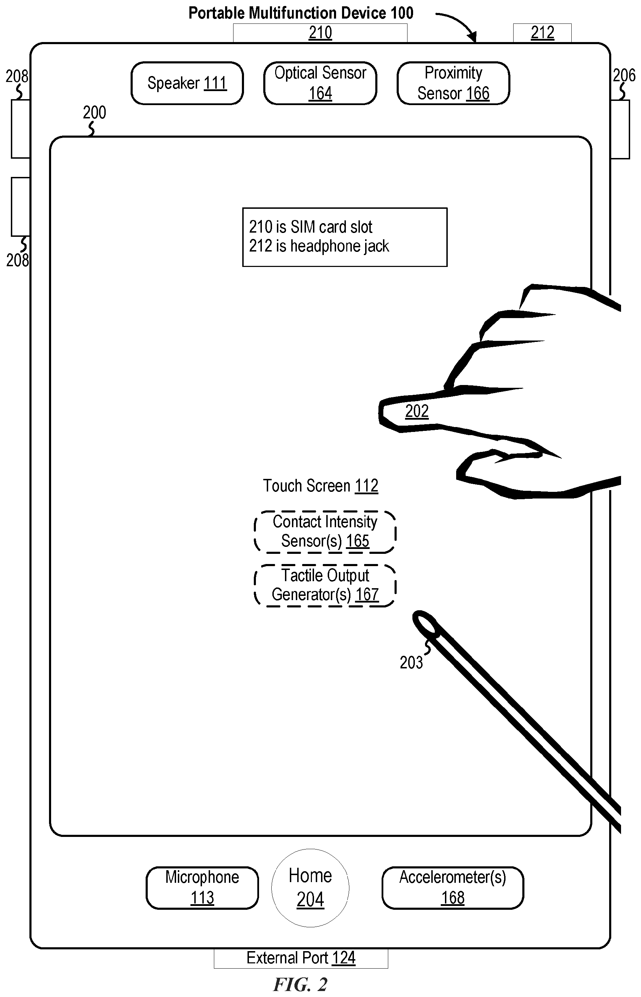

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data is, optionally, retrieved from and/or transmitted to memory 102 and/or RF circuitry 108 by peripherals interface 118. In some embodiments, audio circuitry 110 also includes a headset jack (e.g., 212, Fig. 2). The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch screen 112 and other input control devices 116, to peripherals interface 118. I/O subsystem 106 optionally includes display controller 156, optical sensor controller 158, intensity sensor controller 159, haptic feedback controller 161 and one or more input controllers 160 for other input or control devices. The one or more input controllers 160 receive/send electrical signals from/to other input or control devices 116. The other input control devices 116 optionally include physical buttons (e.g., push buttons, rocker buttons, etc.), dials, slider switches, joysticks, click wheels, and so forth. In some alternate embodiments, input controller(s) 160 are, optionally, coupled to any (or none) of the following: a keyboard, infrared port, USB port, and a pointer device such as a mouse. The one or more buttons (e.g., 208, Fig. 2) optionally include an up/down button for volume control of speaker 111 and/or microphone 113. The one or more buttons optionally include a push button (e.g., 206, Fig. 2).

A quick press of the push button optionally disengages a lock of touch screen 112 or optionally begins a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657,849, which is hereby incorporated by reference in its entirety. A longer press of the push button (e.g., 206) optionally turns power to device 100 on or off. The functionality of one or more of the buttons are, optionally, user-customizable. Touch screen 112 is used to implement virtual or soft buttons and one or more soft keyboards.

Touch-sensitive display 112 provides an input interface and an output interface between the device and a user. As described above, the touch-sensitive operation and the display operation of touch-sensitive display 112 are optionally separated from each other, such that a display device is used for display purposes and a touch-sensitive surface (whether display or not) is used for input detection purposes, and the described components and functions are modified accordingly. However, for simplicity, the following description is provided with reference to a touch-sensitive display. Display controller 156 receives and/or sends electrical signals from/to touch screen 112. Touch screen 112 displays visual output to the user. The visual output optionally includes graphics, text, icons, video, and any combination thereof (collectively termed "graphics"). In some embodiments, some or all of the visual output corresponds to user-interface objects.

Touch screen 112 has a touch-sensitive surface, sensor or set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and convert the detected contact into interaction with user-interface objects (e.g., one or more soft keys, icons, web pages or images) that are displayed on touch screen 112. In an exemplary embodiment, a point of contact between touch screen 112 and the user corresponds to a finger of the user.

Touch screen 112 optionally uses LCD (liquid crystal display) technology, LPD (light emitting polymer display) technology, or LED (light emitting diode) technology, although other display technologies are used in other embodiments. Touch screen 112 and display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an exemplary embodiment, projected mutual capacitance sensing technology is used, such as that found in the iPhone^{®}, iPod Touch^{®}, and iPad^{®} from Apple Inc. of Cupertino, California.

A touch-sensitive display in some embodiments of touch screen 112 is, optionally, analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1, each of which is hereby incorporated by reference in its entirety. However, touch screen 112 displays visual output from device 100, whereas touch-sensitive touchpads do not provide visual output.

A touch-sensitive display in some embodiments of touch screen 112 is described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/38,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006. All of these applications are incorporated by reference herein in their entirety.

Touch screen 112 optionally has a video resolution in excess of 100 dpi. In some embodiments, the touch screen has a video resolution of approximately 160 dpi. The user optionally makes contact with touch screen 112 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 optionally includes a touchpad (not shown) for activating or deactivating particular functions. In some embodiments, the touchpad is a touch-sensitive area of the device that, unlike the touch screen, does not display visual output. The touchpad is, optionally, a touch-sensitive surface that is separate from touch screen 112 or an extension of the touch-sensitive surface formed by the touch screen.

Device 100 also includes power system 162 for powering the various components. Power system 162 optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable or non-portable devices.

Device 100 optionally also includes one or more optical sensors 164. Fig. 1A shows an optical sensor coupled to optical sensor controller 158 in I/O subsystem 106. Optical sensor 164 optionally includes charge-coupled device (CCD) or complementary metal-oxide semiconductor (CMOS) phototransistors. Optical sensor 164 receives light from the environment, projected through one or more lenses, and converts the light to data representing an image. In conjunction with imaging module 143 (also called a camera module), optical sensor 164 optionally captures still images or video. In some embodiments, an optical sensor is located on the back of device 100, opposite touch screen display 112 on the front of the device so that the touch screen display is enabled for use as a viewfinder for still and/or video image acquisition. In some embodiments, an optical sensor is located on the front of the device so that the user's image is, optionally, obtained for video conferencing while the user views the other video conference participants on the touch screen display. In some embodiments, the position of optical sensor 164 can be changed by the user (e.g., by rotating the lens and the sensor in the device housing) so that a single optical sensor 164 is used along with the touch screen display for both video conferencing and still and/or video image acquisition.

Device 100 optionally also includes one or more contact intensity sensors 165. Fig. 1A shows a contact intensity sensor coupled to intensity sensor controller 159 in I/O subsystem 106. Contact intensity sensor 165 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 165 receives contact intensity information (e.g., pressure information or a proxy for pressure information) from the environment. In some embodiments, at least one contact intensity sensor is collocated with, or proximate to, a touch-sensitive surface (e.g., touch-sensitive display system 112). In some embodiments, at least one contact intensity sensor is located on the back of device 100, opposite touch screen display 112 which is located on the front of device 100.

Device 100 optionally also includes one or more proximity sensors 166. Fig. 1A shows proximity sensor 166 coupled to peripherals interface 118. Alternately, proximity sensor 166 is, optionally, coupled to input controller 160 in I/O subsystem 106. Proximity sensor 166 optionally performs as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals," which are hereby incorporated by reference in their entirety. In some embodiments, the proximity sensor turns off and disables touch screen 112 when the multifunction device is placed near the user's ear (e.g., when the user is making a phone call).

Device 100 optionally also includes one or more tactile output generators 167. Fig. 1A shows a tactile output generator coupled to haptic feedback controller 161 in I/O subsystem 106. Tactile output generator 167 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 165 receives tactile feedback generation instructions from haptic feedback module 133 and generates tactile outputs on device 100 that are capable of being sensed by a user of device 100. In some embodiments, at least one tactile output generator is collocated with, or proximate to, a touch-sensitive surface (e.g., touch-sensitive display system 112) and, optionally, generates a tactile output by moving the touch-sensitive surface vertically (e.g., in/out of a surface of device 100) or laterally (e.g., back and forth in the same plane as a surface of device 100). In some embodiments, at least one tactile output generator sensor is located on the back of device 100, opposite touch screen display 112 which is located on the front of device 100.

Device 100 optionally also includes one or more accelerometers 168. Fig. 1A shows accelerometer 168 coupled to peripherals interface 118. Alternately, accelerometer 168 is, optionally, coupled to an input controller 160 in I/O subsystem 106. Accelerometer 168 optionally performs as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer," both of which are incorporated by reference herein in their entirety. In some embodiments, information is displayed on the touch screen display in a portrait view or a landscape view based on an analysis of data received from the one or more accelerometers. Device 100 optionally includes, in addition to accelerometer(s) 168, a magnetometer (not shown) and a GPS (or GLONASS or other global navigation system) receiver (not shown) for obtaining information concerning the location and orientation (e.g., portrait or landscape) of device 100.

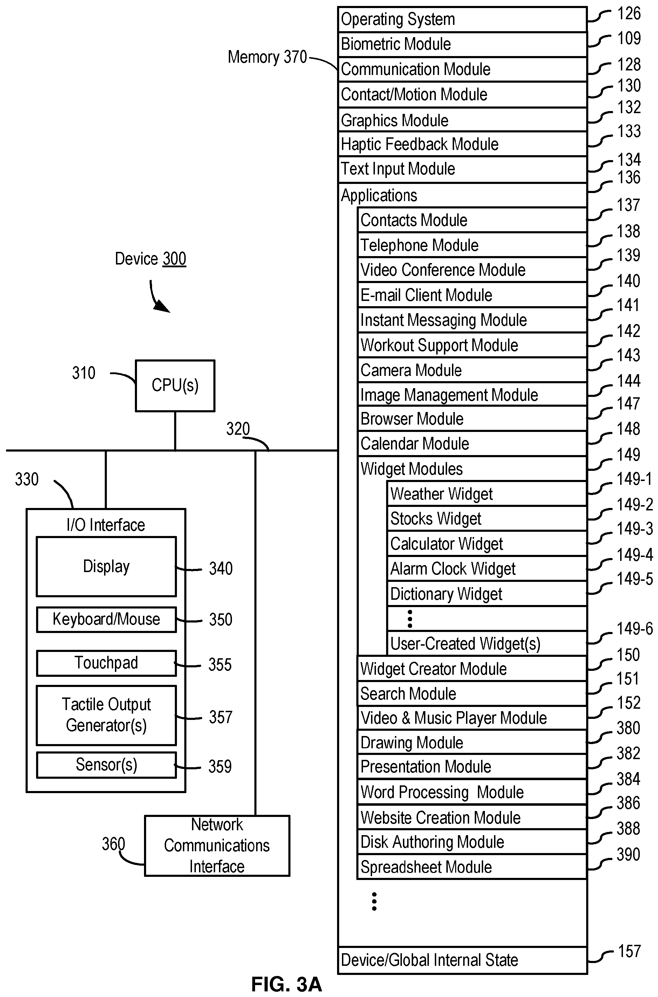

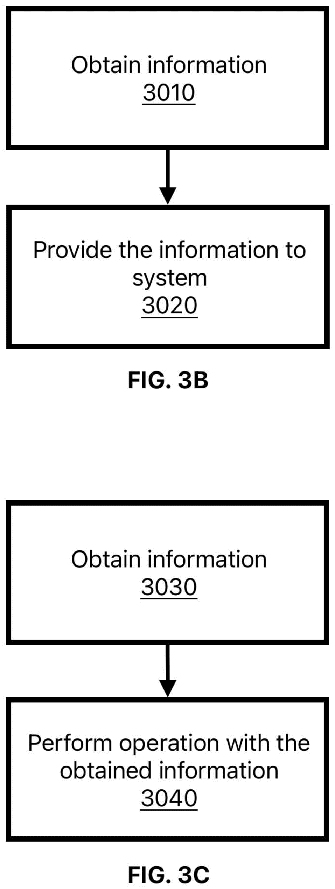

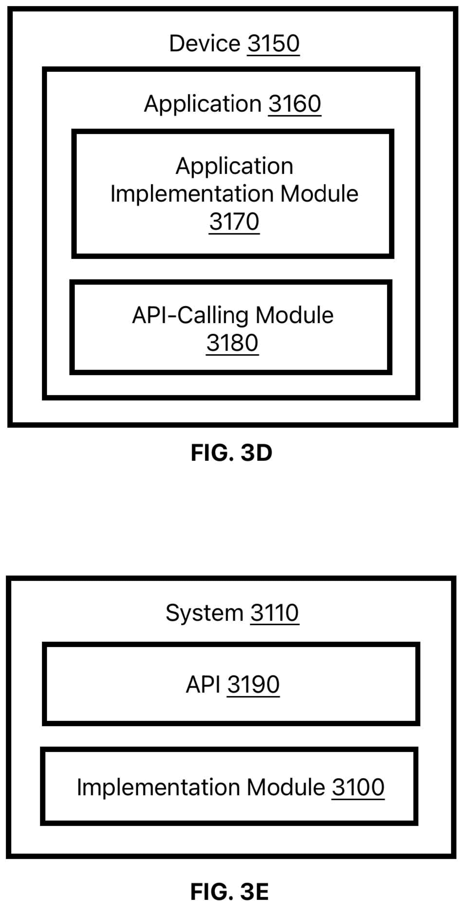

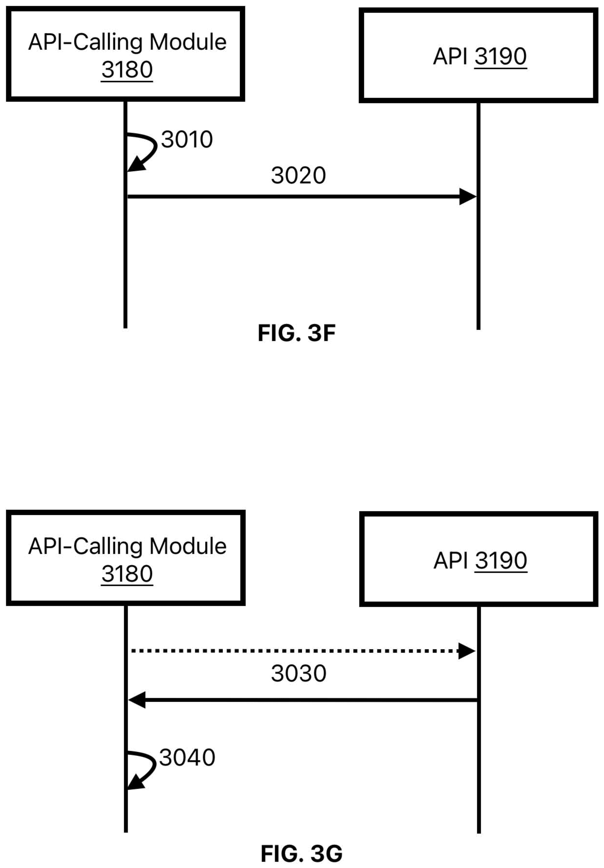

In some embodiments, the software components stored in memory 102 include operating system 126, communication module (or set of instructions) 128, contact/motion module (or set of instructions) 130, graphics module (or set of instructions) 132, text input module (or set of instructions) 134, Global Positioning System (GPS) module (or set of instructions) 135, and applications (or sets of instructions) 136. Furthermore, in some embodiments, memory 102 (Fig. 1A) or 370 (Fig. 3A) stores device/global internal state 157, as shown in Figs. 1A and 3. Device/global internal state 157 includes one or more of: active application state, indicating which applications, if any, are currently active; display state, indicating what applications, views or other information occupy various regions of touch screen display 112; sensor state, including information obtained from the device's various sensors and input control devices 116; and location information concerning the device's location and/or attitude.

Operating system 126 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with the 30-pin connector used on iPod (trademark of Apple Inc.) devices.

Contact/motion module 130 optionally detects contact with touch screen 112 (in conjunction with display controller 156) and other touch-sensitive devices (e.g., a touchpad or physical click wheel). Contact/motion module 130 includes various software components for performing various operations related to detection of contact, such as determining if contact has occurred (e.g., detecting a finger-down event), determining an intensity of the contact (e.g., the force or pressure of the contact or a substitute for the force or pressure of the contact) determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 130 and display controller 156 detect contact on a touchpad.

In some embodiments, contact/motion module 130 uses a set of one or more intensity thresholds to determine whether an operation has been performed by a user (e.g., to determine whether a user has "clicked" on an icon). In some embodiments at least a subset of the intensity thresholds are determined in accordance with software parameters (e.g., the intensity thresholds are not determined by the activation thresholds of particular physical actuators and can be adjusted without changing the physical hardware of device 100). For example, a mouse "click" threshold of a trackpad or touch screen display can be set to any of a large range of predefined threshold values without changing the trackpad or touch screen display hardware. Additionally, in some implementations a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 130 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 132 includes various known software components for rendering and displaying graphics on touch screen 112 or other display, including components for changing the visual impact (e.g., brightness, transparency, saturation, contrast or other visual property) of graphics that are displayed. As used herein, the term "graphics" includes any object that can be displayed to a user, including without limitation text, web pages, icons (such as user-interface objects including soft keys), digital images, videos, animations and the like.

In some embodiments, graphics module 132 stores data representing graphics to be used. Each graphic is, optionally, assigned a corresponding code. Graphics module 132 receives, from applications etc., one or more codes specifying graphics to be displayed along with, if necessary, coordinate data and other graphic property data, and then generates screen image data to output to display controller 156.

Haptic feedback module 133 includes various software components for generating instructions used by tactile output generator(s) 167 to produce tactile outputs at one or more locations on device 100 in response to user interactions with device 100.

Text input module 134, which is, optionally, a component of graphics module 132, provides soft keyboards for entering text in various applications (e.g., contacts 137, e-mail 140, IM 141, browser 147, and any other application that needs text input).

GPS module 135 determines the location of the device and provides this information for use in various applications (e.g., to telephone 138 for use in location-based dialing, to camera 143 as picture/video metadata, and to applications that provide location-based services such as weather widgets, local yellow page widgets, and map/navigation widgets).

Applications 136 optionally include the following modules (or sets of instructions), or a subset or superset thereof:
- contacts module 137 (sometimes called an address book or contact list);
- telephone module 138;
- video conferencing module 139;
- e-mail client module 140;
- instant messaging (IM) module 141;
- workout support module 142;
- camera module 143 for still and/or video images;
- image management module 144;
- video player module;
- music player module;
- browser module 147;
- calendar module 148;
- widget modules 149, which optionally include one or more of: weather widget 149-1, stocks widget 149-2, calculator widget 149-3, alarm clock widget 149-4, dictionary widget 149-5, and other widgets obtained by the user, as well as user-created widgets 149-6;
- widget creator module 150 for making user-created widgets 149-6;
- search module 151;
- video and music player module 152, which merges video player module and music player module;
- notes module 153;
- map module 154; and/or
- online video module 155.

Examples of other applications 136 that are, optionally, stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact/motion module 130, graphics module 132, and text input module 134, contacts module 137 are, optionally, used to manage an address book or contact list (e.g., stored in application internal state 192 of contacts module 137 in memory 102 or memory 370), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone 138, video conference module 139, e-mail 140, or IM 141; and so forth.

In conjunction with RF circuitry 108, audio circuitry 110, speaker 111, microphone 113, touch screen 112, display controller 156, contact/motion module 130, graphics module 132, and text input module 134, telephone module 138 are optionally, used to enter a sequence of characters corresponding to a telephone number, access one or more telephone numbers in contacts module 137, modify a telephone number that has been entered, dial a respective telephone number, conduct a conversation, and disconnect or hang up when the conversation is completed. As noted above, the wireless communication optionally uses any of a plurality of communications standards, protocols, and technologies.

In conjunction with RF circuitry 108, audio circuitry 110, speaker 111, microphone 113, touch screen 112, display controller 156, optical sensor 164, optical sensor controller 158, contact/motion module 130, graphics module 132, text input module 134, contacts module 137, and telephone module 138, video conference module 139 includes executable instructions to initiate, conduct, and terminate a video conference between a user and one or more other participants in accordance with user instructions.

In conjunction with RF circuitry 108, touch screen 112, display controller 156, contact/motion module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch screen 112, display controller 156, contact/motion module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages optionally include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact/motion module 130, graphics module 132, text input module 134, GPS module 135, map module 154, and music player module, workout support module 142 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 112, display controller 156, optical sensor(s) 164, optical sensor controller 158, contact/motion module 130, graphics module 132, and image management module 144, camera module 143 includes executable instructions to capture still images or video (including a video stream) and store them into memory 102, modify characteristics of a still image or video, or delete a still image or video from memory 102.

In conjunction with touch screen 112, display controller 156, contact/motion module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with RF circuitry 108, touch screen 112, display controller 156, contact/motion module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch screen 112, display controller 156, contact/motion module 130, graphics module 132, text input module 134, e-mail client module 140, and browser module 147, calendar module 148 includes executable instructions to create, display, modify, and store calendars and data associated with calendars (e.g., calendar entries, to -do lists, etc.) in accordance with user instructions.

In conjunction with RF circuitry 108, touch screen 112, display controller 156, contact/motion module 130, graphics module 132, text input module 134, and browser module 147, widget modules 149 are mini-applications that are, optionally, downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 108, touch screen 112, display controller 156, contact/motion module 130, graphics module 132, text input module 134, and browser module 147, the widget creator module 150 are, optionally, used by a user to create widgets (e.g., turning a user-specified portion of a web page into a widget).

In conjunction with touch screen 112, display controller 156, contact/motion module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch screen 112, display controller 156, contact/motion module 130, graphics module 132, audio circuitry 110, speaker 111, RF circuitry 108, and browser module 147, video and music player module 152 includes executable instructions that allow the user to download and play back recorded music and other sound files stored in one or more file formats, such as MP3 or AAC files, and executable instructions to display, present, or otherwise play back videos (e.g., on touch screen 112 or on an external, connected display via external port 124). In some embodiments, device 100 optionally includes the functionality of an MP3 player, such as an iPod (trademark of Apple Inc.).

In conjunction with touch screen 112, display controller 156, contact/motion module 130, graphics module 132, and text input module 134, notes module 153 includes executable instructions to create and manage notes, to -do lists, and the like in accordance with user instructions.

In conjunction with RF circuitry 108, touch screen 112, display controller 156, contact/motion module 130, graphics module 132, text input module 134, GPS module 135, and browser module 147, map module 154 are, optionally, used to receive, display, modify, and store maps and data associated with maps (e.g., driving directions, data on stores and other points of interest at or near a particular location, and other location-based data) in accordance with user instructions.

In conjunction with touch screen 112, display controller 156, contact/motion module 130, graphics module 132, audio circuitry 110, speaker 111, RF circuitry 108, text input module 134, e-mail client module 140, and browser module 147, online video module 155 includes instructions that allow the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007, the contents of which are hereby incorporated by reference in their entirety.

Each of the above -identified modules and applications corresponds to a set of executable instructions for performing one or more functions described above and the methods described in this application (e.g., the computer-implemented methods and other information processing methods described herein). These modules (e.g., sets of instructions) need not be implemented as separate software programs, procedures, or modules, and thus various subsets of these modules are, optionally, combined or otherwise rearranged in various embodiments. For example, video player module is, optionally, combined with music player module into a single module (e.g., video and music player module 152, Fig. 1A). In some embodiments, memory 102 optionally stores a subset of the modules and data structures identified above. Furthermore, memory 102 optionally stores additional modules and data structures not described above.

In some embodiments, device 100 is a device where operation of a predefined set of functions on the device is performed exclusively through a touch screen and/or a touchpad. By using a touch screen and/or a touchpad as the primary input control device for operation of device 100, the number of physical input control devices (such as push buttons, dials, and the like) on device 100 is, optionally, reduced.

The predefined set of functions that are performed exclusively through a touch screen and/or a touchpad optionally include navigation between user interfaces. In some embodiments, the touchpad, when touched by the user, navigates device 100 to a main, home, or root menu from any user interface that is displayed on device 100. In such embodiments, a "menu button" is implemented using a touchpad. In some other embodiments, the menu button is a physical push button or other physical input control device instead of a touchpad.

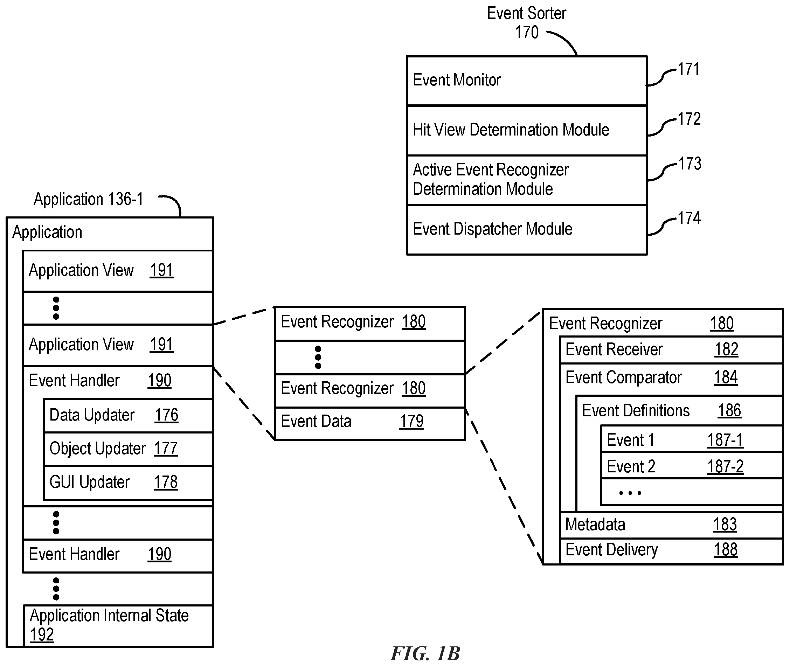

Fig. 1B is a block diagram illustrating exemplary components for event handling in accordance with some embodiments. In some embodiments, memory 102 (Fig. 1A) or 370 (Fig. 3A) includes event sorter 170 (e.g., in operating system 126) and a respective application 136-1 (e.g., any of the aforementioned applications 137-151, 155, 380-390).

Event sorter 170 receives event information and determines the application 136-1 and application view 191 of application 136-1 to which to deliver the event information. Event sorter 170 includes event monitor 171 and event dispatcher module 174. In some embodiments, application 136-1 includes application internal state 192, which indicates the current application view(s) displayed on touch-sensitive display 112 when the application is active or executing. In some embodiments, device/global internal state 157 is used by event sorter 170 to determine which application(s) is (are) currently active, and application internal state 192 is used by event sorter 170 to determine application views 191 to which to deliver event information.

In some embodiments, application internal state 192 includes additional information, such as one or more of: resume information to be used when application 136-1 resumes execution, user interface state information that indicates information being displayed or that is ready for display by application 136-1, a state queue for enabling the user to go back to a prior state or view of application 136-1, and a redo/undo queue of previous actions taken by the user.

Event monitor 171 receives event information from peripherals interface 118. Event information includes information about a sub-event (e.g., a user touch on touch-sensitive display 112, as part of a multi-touch gesture). Peripherals interface 118 transmits information it receives from I/O subsystem 106 or a sensor, such as proximity sensor 166, accelerometer(s) 168, and/or microphone 113 (through audio circuitry 110). Information that peripherals interface 118 receives from I/O subsystem 106 includes information from touch-sensitive display 112 or a touch-sensitive surface.

In some embodiments, event monitor 171 sends requests to the peripherals interface 118 at predetermined intervals. In response, peripherals interface 118 transmits event information. In other embodiments, peripherals interface 118 transmits event information only when there is a significant event (e.g., receiving an input above a predetermined noise threshold and/or for more than a predetermined duration).

In some embodiments, event sorter 170 also includes a hit view determination module 172 and/or an active event recognizer determination module 173.

Hit view determination module 172 provides software procedures for determining where a sub-event has taken place within one or more views when touch-sensitive display 112 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected optionally correspond to programmatic levels within a programmatic or view hierarchy of the application. For example, the lowest level view in which a touch is detected is, optionally, called the hit view, and the set of events that are recognized as proper inputs are, optionally, determined based, at least in part, on the hit view of the initial touch that begins a touch-based gesture.

Hit view determination module 172 receives information related to sub-events of a touch-based gesture. When an application has multiple views organized in a hierarchy, hit view determination module 172 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 172, the hit view typically receives all sub-events related to the same touch or input source for which it was identified as the hit view.

Active event recognizer determination module 173 determines which view or views within a view hierarchy should receive a particular sequence of sub-events. In some embodiments, active event recognizer determination module 173 determines that only the hit view should receive a particular sequence of sub-events. In other embodiments, active event recognizer determination module 173 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 174 dispatches the event information to an event recognizer (e.g., event recognizer 180). In embodiments including active event recognizer determination module 173, event dispatcher module 174 delivers the event information to an event recognizer determined by active event recognizer determination module 173. In some embodiments, event dispatcher module 174 stores in an event queue the event information, which is retrieved by a respective event receiver 182.

In some embodiments, operating system 126 includes event sorter 170. Alternatively, application 136-1 includes event sorter 170. In yet other embodiments, event sorter 170 is a stand-alone module, or a part of another module stored in memory 102, such as contact/motion module 130.

In some embodiments, application 136-1 includes a plurality of event handlers 190 and one or more application views 191, each of which includes instructions for handling touch events that occur within a respective view of the application's user interface. Each application view 191 of the application 136-1 includes one or more event recognizers 180. Typically, a respective application view 191 includes a plurality of event recognizers 180. In other embodiments, one or more of event recognizers 180 are part of a separate module, such as a user interface kit (not shown) or a higher level object from which application 136-1 inherits methods and other properties. In some embodiments, a respective event handler 190 includes one or more of: data updater 176, object updater 177, GUI updater 178, and/or event data 179 received from event sorter 170. Event handler 190 optionally utilizes or calls data updater 176, object updater 177, or GUI updater 178 to update the application internal state 192. Alternatively, one or more of the application views 191 include one or more respective event handlers 190. Also, in some embodiments, one or more of data updater 176, object updater 177, and GUI updater 178 are included in a respective application view 191.

A respective event recognizer 180 receives event information (e.g., event data 179) from event sorter 170 and identifies an event from the event information. Event recognizer 180 includes event receiver 182 and event comparator 184. In some embodiments, event recognizer 180 also includes at least a subset of: metadata 183, and event delivery instructions 188 (which optionally include sub-event delivery instructions).

Event receiver 182 receives event information from event sorter 170. The event information includes information about a sub-event, for example, a touch or a touch movement. Depending on the sub-event, the event information also includes additional information, such as location of the sub-event. When the sub-event concerns motion of a touch, the event information optionally also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 184 compares the event information to predefined event or sub-event definitions and, based on the comparison, determines an event or sub-event, or determines or updates the state of an event or sub-event. In some embodiments, event comparator 184 includes event definitions 186. Event definitions 186 contain definitions of events (e.g., predefined sequences of sub-events), for example, event 1 (187-1), event 2 (187-2), and others. In some embodiments, sub-events in an event (187) include, for example, touch begin, touch end, touch movement, touch cancellation, and multiple touching. In one example, the definition for event 1 (187-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (187-2) is a dragging on a displayed object. The dragging, for example, comprises a touch (or contact) on the displayed object for a predetermined phase, a movement of the touch across touch-sensitive display 112, and liftoff of the touch (touch end). In some embodiments, the event also includes information for one or more associated event handlers 190.

In some embodiments, event definition 187 includes a definition of an event for a respective user-interface object. In some embodiments, event comparator 184 performs a hit test to determine which user-interface object is associated with a sub-event. For example, in an application view in which three user-interface objects are displayed on touch-sensitive display 112, when a touch is detected on touch-sensitive display 112, event comparator 184 performs a hit test to determine which of the three user-interface objects is associated with the touch (sub-event). If each displayed object is associated with a respective event handler 190, the event comparator uses the result of the hit test to determine which event handler 190 should be activated. For example, event comparator 184 selects an event handler associated with the sub-event and the object triggering the hit test.

In some embodiments, the definition for a respective event (187) also includes delayed actions that delay delivery of the event information until after it has been determined whether the sequence of sub-events does or does not correspond to the event recognizer's event type.

When a respective event recognizer 180 determines that the series of sub-events do not match any of the events in event definitions 186, the respective event recognizer 180 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 180 includes metadata 183 with configurable properties, flags, and/or lists that indicate how the event delivery system should perform sub-event delivery to actively involved event recognizers. In some embodiments, metadata 183 includes configurable properties, flags, and/or lists that indicate how event recognizers interact, or are enabled to interact, with one another. In some embodiments, metadata 183 includes configurable properties, flags, and/or lists that indicate whether sub-events are delivered to varying levels in the view or programmatic hierarchy.

In some embodiments, a respective event recognizer 180 activates event handler 190 associated with an event when one or more particular sub-events of an event are recognized. In some embodiments, a respective event recognizer 180 delivers event information associated with the event to event handler 190. Activating an event handler 190 is distinct from sending (and deferred sending) sub-events to a respective hit view. In some embodiments, event recognizer 180 throws a flag associated with the recognized event, and event handler 190 associated with the flag catches the flag and performs a predefined process.

In some embodiments, event delivery instructions 188 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 176 creates and updates data used in application 136-1. For example, data updater 176 updates the telephone number used in contacts module 137, or stores a video file used in video player module. In some embodiments, object updater 177 creates and updates objects used in application 136-1. For example, object updater 177 creates a new user-interface object or updates the position of a user-interface object. GUI updater 178 updates the GUI. For example, GUI updater 178 prepares display information and sends it to graphics module 132 for display on a touch-sensitive display.

In some embodiments, event handler(s) 190 includes or has access to data updater 176, object updater 177, and GUI updater 178. In some embodiments, data updater 176, object updater 177, and GUI updater 178 are included in a single module of a respective application 136-1 or application view 191. In other embodiments, they are included in two or more software modules.

It shall be understood that the foregoing discussion regarding event handling of user touches on touch-sensitive displays also applies to other forms of user inputs to operate multifunction devices 100 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

Fig. 2 illustrates a portable or non-portable multifunction device 100 having a touch screen 112 in accordance with some embodiments. As stated above, multifunction device 100 is described as having the various illustrated structures (such as touch screen 112, speaker 111, accelerometer 168, microphone 113, etc.); however, it is understood that these structures optionally reside on separate devices. For example, display-related structures (e.g., display, speaker, etc.) and/or functions optionally reside on a separate display device, input-related structures (e.g., touch-sensitive surface, microphone, accelerometer, etc.) and/or functions optionally reside on a separate input device, and remaining structures and/or functions optionally reside on multifunction device 100.

The touch screen 112 optionally displays one or more graphics within user interface (UI) 200. In this embodiment, as well as others described below, a user is enabled to select one or more of the graphics by making a gesture on the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward) and/or a rolling of a finger (from right to left, left to right, upward and/or downward) that has made contact with device 100. In some implementations or circumstances, inadvertent contact with a graphic does not select the graphic. For example, a swipe gesture that sweeps over an application icon optionally does not select the corresponding application when the gesture corresponding to selection is a tap.

Device 100 optionally also includes one or more physical buttons, such as "home" or menu button 204. As previously described, menu button 204 is, optionally, used to navigate to any application 136 in a set of applications that are, optionally executed on device 100. Alternatively, in some embodiments, the menu button is implemented as a soft key in a GUI displayed on touch screen 112.

In one embodiment, device 100 includes touch screen 112, menu button 204, push button 206 for powering the device on/off and locking the device, volume adjustment button(s) 208, Subscriber Identity Module (SIM) card slot 210, head set jack 212, and docking/charging external port 124. Push button 206 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 100 also accepts verbal input for activation or deactivation of some functions through microphone 113. Device 100 also, optionally, includes one or more contact intensity sensors 165 for detecting intensity of contacts on touch screen 112 and/or one or more tactile output generators 167 for generating tactile outputs for a user of device 100.

Fig. 3A is a block diagram of an exemplary multifunction device with a display and a touch-sensitive surface in accordance with some embodiments. Device 300 need not include the display and the touch-sensitive surface, as described above, but rather, in some embodiments, optionally communicates with the display and the touch-sensitive surface on other devices. Additionally, device 300 need not be portable. In some embodiments, device 300 is a laptop computer, a desktop computer, a tablet computer, a multimedia player device (such as a television or a set-top box), a navigation device, an educational device (such as a child's learning toy), a gaming system, or a control device (e.g., a home or industrial controller). Device 300 typically includes one or more processing units (CPU's) 310, one or more network or other communications interfaces 360, memory 370, and one or more communication buses 320 for interconnecting these components. Communication buses 320 optionally include circuitry (sometimes called a chipset) that interconnects and controls communications between system components. Device 300 includes input/output (I/O) interface 330 comprising display 340, which is typically a touch screen display. I/O interface 330 also optionally includes a keyboard and/or mouse (or other pointing device) 350 and touchpad 355, tactile output generator 357 for generating tactile outputs on device 300 (e.g., similar to tactile output generator(s) 167 described above with reference to Fig. 1A), sensors 359 (e.g., optical, acceleration, proximity, touch-sensitive, and/or contact intensity sensors similar to contact intensity sensor(s) 165 described above with reference to Fig. 1A). Memory 370 includes high-speed random access memory, such as DRAM, SRAM, DDR RAM or other random access solid state memory devices; and optionally includes non-volatile memory, such as one or more magnetic disk storage devices, optical disk storage devices, flash memory devices, or other non-volatile solid state storage devices. Memory 370 optionally includes one or more storage devices remotely located from CPU(s) 310. In some embodiments, memory 370 stores programs, modules, and data structures analogous to the programs, modules, and data structures stored in memory 102 of portable or non-portable multifunction device 100 (Fig. 1A), or a subset thereof. Furthermore, memory 370 optionally stores additional programs, modules, and data structures not present in memory 102 of portable or non-portable multifunction device 100. For example, memory 370 of device 300 optionally stores drawing module 380, presentation module 382, word processing module 384, website creation module 386, disk authoring module 388, and/or spreadsheet module 390, while memory 102 of portable or non-portable multifunction device 100 (Fig. 1A) optionally does not store these modules.

Each of the above identified elements in Fig. 3A are, optionally, stored in one or more of the previously mentioned memory devices. Each of the above identified modules corresponds to a set of instructions for performing a function described above. The above identified modules or programs (e.g., sets of instructions) need not be implemented as separate software programs, procedures or modules, and thus various subsets of these modules are, optionally, combined or otherwise re-arranged in various embodiments. In some embodiments, memory 370 optionally stores a subset of the modules and data structures identified above. Furthermore, memory 370 optionally stores additional modules and data structures not described above.

Implementations within the scope of the present disclosure can be partially or entirely realized using a tangible computer-readable storage medium (or multiple tangible computer-readable storage media of one or more types) encoding one or more computer-readable instructions. It should be recognized that computer-readable instructions can be organized in any format, including applications, widgets, processes, software, and/or components.

Implementations within the scope of the present disclosure include a computer-readable storage medium that encodes instructions organized as an application (e.g., application 3160) that, when executed by one or more processing units, control an electronic device (e.g., device 3150) to perform the method of FIG. 3B, the method of FIG. 3C, and/or one or more other processes and/or methods described herein.

It should be recognized that application 3160 (shown in FIG. 3D) can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application. In some embodiments, application 3160 is an application that is pre-installed on device 3150 at purchase (e.g., a first-party application). In some embodiments, application 3160 is an application that is provided to device 3150 via an operating system update file (e.g., a first-party application or a second-party application). In some embodiments, application 3160 is an application that is provided via an application store. In some embodiments, the application store can be an application store that is pre-installed on device 3150 at purchase (e.g., a first-party application store). In some embodiments, the application store is a third-party application store (e.g., an application store that is provided by another application store, downloaded via a network, and/or read from a storage device).

Referring to FIG. 3B and FIG. 3F, application 3160 obtains information (e.g., 3010). In some embodiments, at 3010, information is obtained from at least one hardware component of device 3150. In some embodiments, at 3010, information is obtained from at least one software module of device 3150. In some embodiments, at 3010, information is obtained from at least one hardware component external to device 3150 (e.g., a peripheral device, an accessory device, and/or a server). In some embodiments, the information obtained at 3010 includes positional information, time information, notification information, user information, environment information, electronic device state information, weather information, media information, historical information, event information, hardware information, and/or motion information. In some embodiments, in response to and/or after obtaining the information at 3010, application 3160 provides the information to a system (e.g., 3020).

In some embodiments, the system (e.g., 3110 shown in FIG. 3E) is an operating system hosted on device 3150. In some embodiments, the system (e.g., 3110 shown in FIG. 3E) is an external device (e.g., a server, a peripheral device, an accessory, and/or a personal computing device) that includes an operating system.

Referring to FIG. 3C and FIG. 3G, application 3160 obtains information (e.g., 3030). In some embodiments, the information obtained at 3030 includes positional information, time information, notification information, user information, environment information electronic device state information, weather information, media information, historical information, event information, hardware information, and/or motion information. In response to and/or after obtaining the information at 3030, application 3160 performs an operation with the information (e.g., 3040). In some embodiments, the operation performed at 3040 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of system 3110 based on the information.

In some embodiments, one or more steps of the method of FIG. 3B and/or the method of FIG. 3C is performed in response to a trigger. In some embodiments, the trigger includes detection of an event, a notification received from system 3110, a user input, and/or a response to a call to an API provided by system 3110.

In some embodiments, the instructions of application 3160, when executed, control device 3150 to perform the method of FIG. 3B and/or the method of FIG. 3C by calling an application programming interface (API) (e.g., API 3190) provided by system 3110. In some embodiments, application 3160 performs at least a portion of the method of FIG. 3B and/or the method of FIG. 3C without calling API 3190.

In some embodiments, one or more steps of the method of FIG. 3B and/or the method of FIG. 3C includes calling an API (e.g., API 3190) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

Referring to FIG. 3D, device 3150 is illustrated. In some embodiments, device 3150 is a personal computing device, a smart phone, a smart watch, a fitness tracker, a head mounted display (HMD) device, a media device, a communal device, a speaker, a television, and/or a tablet. As illustrated in FIG. 3D, device 3150 includes application 3160 and an operating system (e.g., system 3110 shown in FIG. 3E). Application 3160 includes application implementation module 3170 and API-calling module 3180. System 3110 includes API 3190 and implementation module 3100. It should be recognized that device 3150, application 3160, and/or system 3110 can include more, fewer, and/or different components than illustrated in FIGS. 3D and 3E.

In some embodiments, application implementation module 3170 includes a set of one or more instructions corresponding to one or more operations performed by application 3160. For example, when application 3160 is a messaging application, application implementation module 3170 can include operations to receive and send messages. In some embodiments, application implementation module 3170 communicates with API-calling module 3180 to communicate with system 3110 via API 3190 (shown in FIG. 3E).

In some embodiments, API 3190 is a software module (e.g., a collection of computer-readable instructions) that provides an interface that allows a different module (e.g., API-calling module 3180) to access and/or use one or more functions, methods, procedures, data structures, classes, and/or other services provided by implementation module 3100 of system 3110. For example, API-calling module 3180 can access a feature of implementation module 3100 through one or more API calls or invocations (e.g., embodied by a function or a method call) exposed by API 3190 (e.g., a software and/or hardware module that can receive API calls, respond to API calls, and/or send API calls) and can pass data and/or control information using one or more parameters via the API calls or invocations. In some embodiments, API 3190 allows application 3160 to use a service provided by a Software Development Kit (SDK) library. In some embodiments, application 3160 incorporates a call to a function or method provided by the SDK library and provided by API 3190 or uses data types or objects defined in the SDK library and provided by API 3190. In some embodiments, API-calling module 3180 makes an API call via API 3190 to access and use a feature of implementation module 3100 that is specified by API 3190. In such embodiments, implementation module 3100 can return a value via API 3190 to API-calling module 3180 in response to the API call. The value can report to application 3160 the capabilities or state of a hardware component of device 3150, including those related to aspects such as input capabilities and state, output capabilities and state, processing capability, power state, storage capacity and state, and/or communications capability. In some embodiments, API 3190 is implemented in part by firmware, microcode, or other low level logic that executes in part on the hardware component.

In some embodiments, API 3190 allows a developer of API-calling module 3180 (which can be a third-party developer) to leverage a feature provided by implementation module 3100. In such embodiments, there can be one or more API-calling modules (e.g., including API-calling module 3180) that communicate with implementation module 3100. In some embodiments, API 3190 allows multiple API-calling modules written in different programming languages to communicate with implementation module 3100 (e.g., API 3190 can include features for translating calls and returns between implementation module 3100 and API-calling module 3180) while API 3190 is implemented in terms of a specific programming language. In some embodiments, API-calling module 3180 calls APIs from different providers such as a set of APIs from an OS provider, another set of APIs from a plug-in provider, and/or another set of APIs from another provider (e.g., the provider of a software library) or creator of the another set of APIs.

Examples of API 3190 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, photos API, camera API, and/or image processing API. In some embodiments, the sensor API is an API for accessing data associated with a sensor of device 3150. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor, and/or biometric sensor.

In some embodiments, implementation module 3100 is a system (e.g., operating system and/or server system) software module (e.g., a collection of computer-readable instructions) that is constructed to perform an operation in response to receiving an API call via API 3190. In some embodiments, implementation module 3100 is constructed to provide an API response (via API 3190) as a result of processing an API call. By way of example, implementation module 3100 and API-calling module 3180 can each be any one of an operating system, a library, a device driver, an API, an application program, or other module. It should be understood that implementation module 3100 and API-calling module 3180 can be the same or different type of module from each other. In some embodiments, implementation module 3100 is embodied at least in part in firmware, microcode, or hardware logic.

In some embodiments, implementation module 3100 returns a value through API 3190 in response to an API call from API-calling module 3180. While API 3190 defines the syntax and result of an API call (e.g., how to invoke the API call and what the API call does), API 3190 might not reveal how implementation module 3100 accomplishes the function specified by the API call. Various API calls are transferred via the one or more application programming interfaces between API-calling module 3180 and implementation module 3100. Transferring the API calls can include issuing, initiating, invoking, calling, receiving, returning, and/or responding to the function calls or messages. In other words, transferring can describe actions by either of API-calling module 3180 or implementation module 3100. In some embodiments, a function call or other invocation of API 3190 sends and/or receives one or more parameters through a parameter list or other structure.

In some embodiments, implementation module 3100 provides more than one API, each providing a different view of or with different aspects of functionality implemented by implementation module 3100. For example, one API of implementation module 3100 can provide a first set of functions and can be exposed to third-party developers, and another API of implementation module 3100 can be hidden (e.g., not exposed) and provide a subset of the first set of functions and also provide another set of functions, such as testing or debugging functions which are not in the first set of functions. In some embodiments, implementation module 3100 calls one or more other components via an underlying API and thus is both an API-calling module and an implementation module. It should be recognized that implementation module 3100 can include additional functions, methods, classes, data structures, and/or other features that are not specified through API 3190 and are not available to API-calling module 3180. It should also be recognized that API-calling module 3180 can be on the same system as implementation module 3100 or can be located remotely and access implementation module 3100 using API 3190 over a network. In some embodiments, implementation module 3100, API 3190, and/or API-calling module 3180 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

An application programming interface (API) is an interface between a first software process and a second software process that specifies a format for communication between the first software process and the second software process. Limited APIs (e.g., private APIs or partner APIs) are APIs that are accessible to a limited set of software processes (e.g., only software processes within an operating system or only software processes that are approved to access the limited APIs). Public APIs that are accessible to a wider set of software processes. Some APIs enable software processes to communicate about or set a state of one or more input devices (e.g., one or more touch sensors, proximity sensors, visual sensors, motion/orientation sensors, pressure sensors, intensity sensors, sound sensors, wireless proximity sensors, biometric sensors, buttons, switches, rotatable elements, and/or external controllers). Some APIs enable software processes to communicate about and/or set a state of one or more output generation components (e.g., one or more audio output generation components, one or more display generation components, and/or one or more tactile output generation components). Some APIs enable particular capabilities (e.g., scrolling, handwriting, text entry, image editing, and/or image creation) to be accessed, performed, and/or used by a software process (e.g., generating outputs for use by a software process based on input from the software process). Some APIs enable content from a software process to be inserted into a template and displayed in a user interface that has a layout and/or behaviors that are specified by the template.

Many software platforms include a set of frameworks that provides the core objects and core behaviors that a software developer needs to build software applications that can be used on the software platform. Software developers use these objects to display content onscreen, to interact with that content, and to manage interactions with the software platform. Software applications rely on the set of frameworks for their basic behavior, and the set of frameworks provides many ways for the software developer to customize the behavior of the application to match the specific needs of the software application. Many of these core objects and core behaviors are accessed via an API. An API will typically specify a format for communication between software processes, including specifying and grouping available variables, functions, and protocols. An API call (sometimes referred to as an API request) will typically be sent from a sending software process to a receiving software process as a way to accomplish one or more of the following: the sending software process requesting information from the receiving software process (e.g., for the sending software process to take action on), the sending software process providing information to the receiving software process (e.g., for the receiving software process to take action on), the sending software process requesting action by the receiving software process, or the sending software process providing information to the receiving software process about action taken by the sending software process. Interaction with a device (e.g., using a user interface) will in some circumstances include the transfer and/or receipt of one or more API calls (e.g., multiple API calls) between multiple different software processes (e.g., different portions of an operating system, an application and an operating system, or different applications) via one or more APIs (e.g., via multiple different APIs). For example, when an input is detected the direct sensor data is frequently processed into one or more input events that are provided (e.g., via an API) to a receiving software process that makes some determination based on the input events, and then sends (e.g., via an API) information to a software process to perform an operation (e.g., change a device state and/or user interface) based on the determination. While a determination and an operation performed in response could be made by the same software process, alternatively the determination could be made in a first software process and relayed (e.g., via an API) to a second software process, that is different from the first software process, that causes the operation to be performed by the second software process. Alternatively, the second software process could relay instructions (e.g., via an API) to a third software process that is different from the first software process and/or the second software process to perform the operation. It should be understood that some or all user interactions with a computer system could involve one or more API calls within a step of interacting with the computer system (e.g., between different software components of the computer system or between a software component of the computer system and a software component of one or more remote computer systems). It should be understood that some or all user interactions with a computer system could involve one or more API calls between steps of interacting with the computer system (e.g., between different software components of the computer system or between a software component of the computer system and a software component of one or more remote computer systems).

In some embodiments, the application can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application.

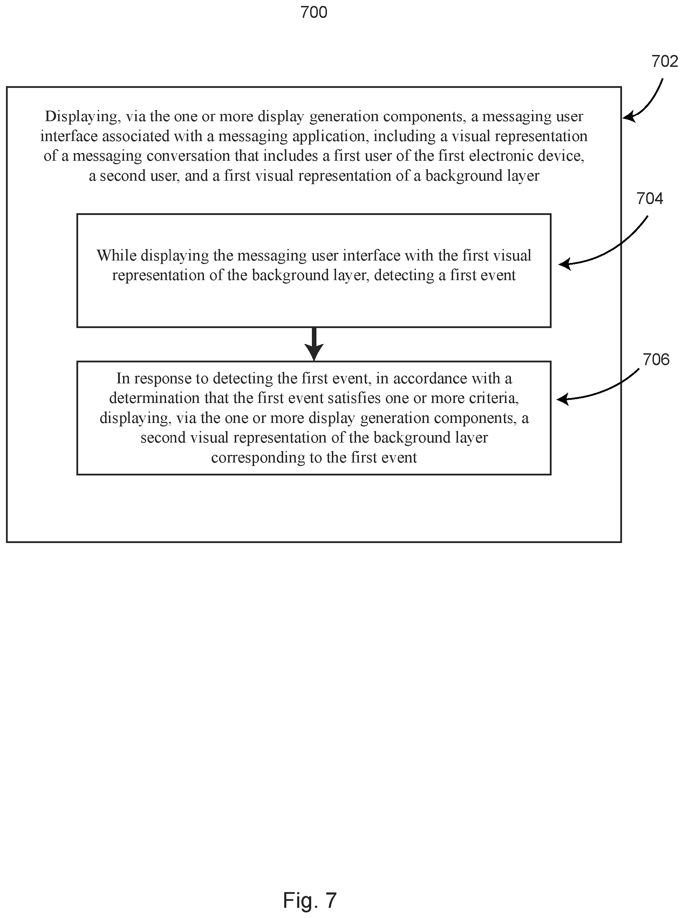

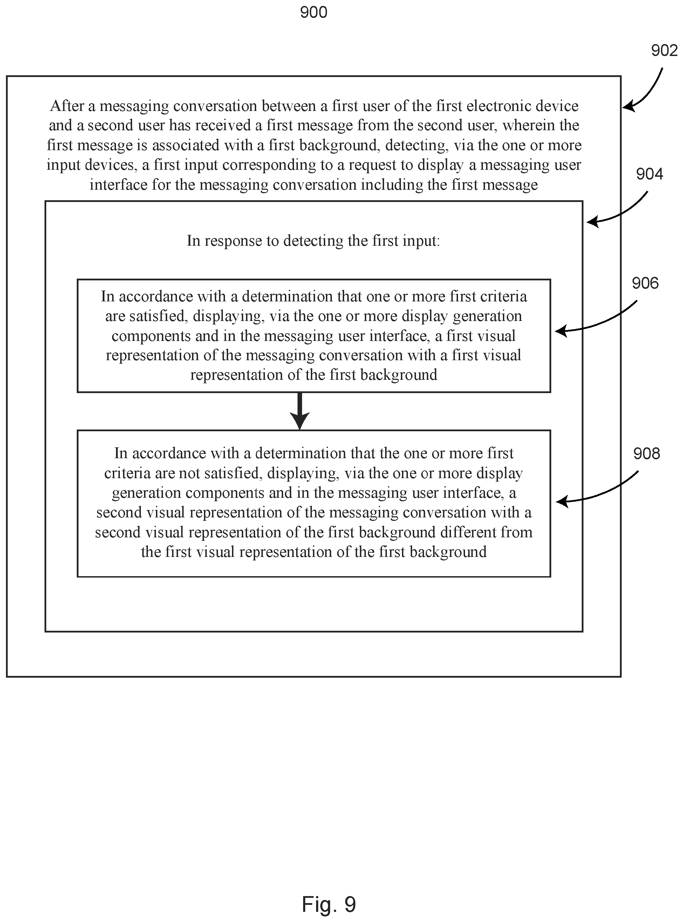

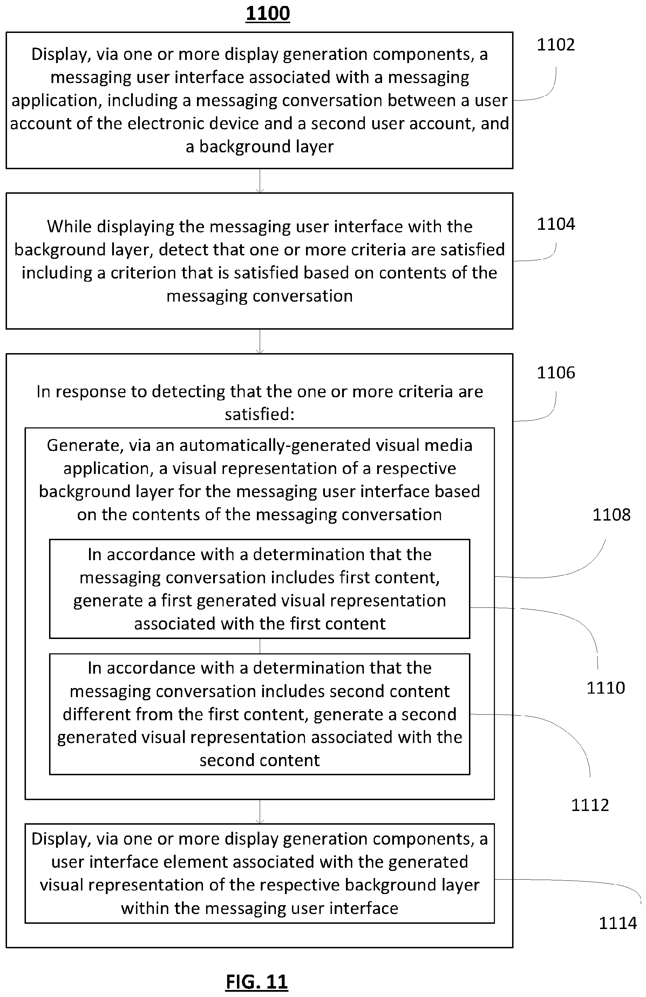

In some embodiments, the application is an application that is pre-installed on the first computer system at purchase (e.g., a first-party application). In some embodiments, the application is an application that is provided to the first computer system via an operating system update file (e.g., a first-party application). In some embodiments, the application is an application that is provided via an application store. In some embodiments, the application store is pre-installed on the first computer system at purchase (e.g., a first-party application store) and allows download of one or more applications. In some embodiments, the application store is a third-party application store (e.g., an application store that is provided by another device, downloaded via a network, and/or read from a storage device). In some embodiments, the application is a third-party application (e.g., an app that is provided by an application store, downloaded via a network, and/or read from a storage device). In some embodiments, the application controls the first computer system to perform method 700 (FIG. 7), method 900 (FIG. 9) and/or method 1100 (FIG. 11) by calling an application programming interface (API) provided by the system process using one or more parameters.

In some embodiments, exemplary APIs provided by the system process include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, a photos API, a camera API, and/or an image processing API.

In some embodiments, at least one API is a software module (e.g., a collection of computer-readable instructions) that provides an interface that allows a different module (e.g., API-calling module) to access and use one or more functions, methods, procedures, data structures, classes, and/or other services provided by an implementation module of the system process. The API can define one or more parameters that are passed between the API-calling module and the implementation module. In some embodiments, API 3190 defines a first API call that can be provided by API-calling module 3180. The implementation module is a system software module (e.g., a collection of computer-readable instructions) that is constructed to perform an operation in response to receiving an API call via the API. In some embodiments, the implementation module is constructed to provide an API response (via the API) as a result of processing an API call. In some embodiments, the implementation module is included in the device (e.g., 3150) that runs the application. In some embodiments, the implementation module is included in an electronic device that is separate from the device that runs the application.

Attention is now directed towards embodiments of user interfaces that are, optionally, implemented on, for example, portable multifunction device 100.

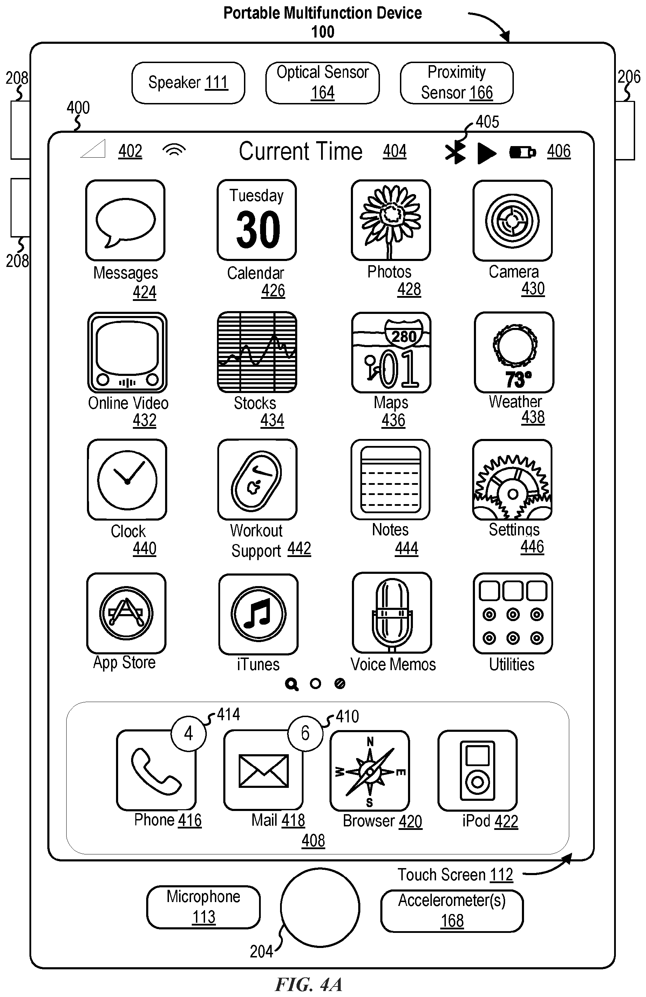

Fig. 4A illustrates an exemplary user interface for a menu of applications on portable multifunction device 100 in accordance with some embodiments. Similar user interfaces are, optionally, implemented on device 300. In some embodiments, user interface 400 includes the following elements, or a subset or superset thereof:
- Signal strength indicator(s) 402 for wireless communication(s), such as cellular and Wi-Fi signals;
- Time 404;
- Bluetooth indicator 405;
- Battery status indicator 406;
- Tray 408 with icons for frequently used applications, such as:
   - Icon 416 for telephone module 138, labeled "Phone," which optionally includes an indicator 414 of the number of missed calls or voicemail messages;
   - Icon 418 for e-mail client module 140, labeled "Mail," which optionally includes an indicator 410 of the number of unread e-mails;
   - Icon 420 for browser module 147, labeled "Browser;" and
   - Icon 422 for video and music player module 152, also referred to as iPod (trademark of Apple Inc.) module 152, labeled "iPod;" and
- Icons for other applications, such as:
   - Icon 424 for IM module 141, labeled "Messages;"
   - Icon 426 for calendar module 148, labeled "Calendar;"
   - Icon 428 for image management module 144, labeled "Photos;"
   - Icon 430 for camera module 143, labeled "Camera;"
   - Icon 432 for online video module 155, labeled "Online Video;"
   - Icon 434 for stocks widget 149-2, labeled "Stocks;"
   - Icon 436 for map module 154, labeled "Maps;"
   - Icon 438 for weather widget 149-1, labeled "Weather;"
   - Icon 440 for alarm clock widget 149-4, labeled "Clock;"
   - Icon 442 for workout support module 142, labeled "Workout Support;"
   - Icon 444 for notes module 153, labeled "Notes;" and
   - Icon 446 for a settings application or module, labeled "Settings," which provides access to settings for device 100 and its various applications 136.

It should be noted that the icon labels illustrated in Fig. 4A are merely exemplary. For example, icon 422 for video and music player module 152 is labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

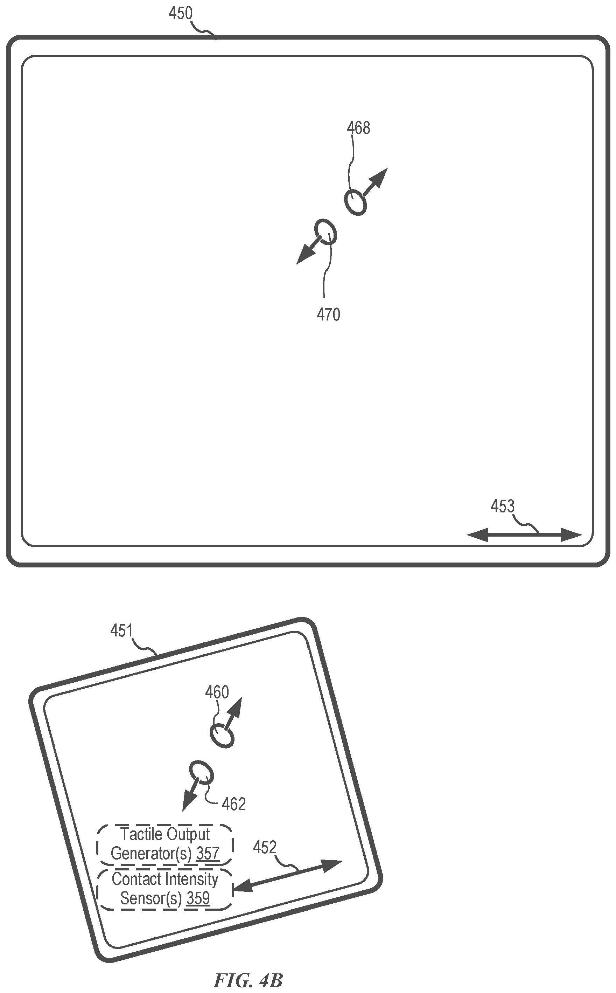

Fig. 4B illustrates an exemplary user interface on a device (e.g., device 300, Fig. 3A) with a touch-sensitive surface 451 (e.g., a tablet or touchpad 355, Fig. 3A) that is separate from the display 450 (e.g., touch screen display 112). Device 300 also, optionally, includes one or more contact intensity sensors (e.g., one or more of sensors 359) for detecting intensity of contacts on touch-sensitive surface 451 and/or one or more tactile output generators 357 for generating tactile outputs for a user of device 300.

Although some of the examples that follow will be given with reference to inputs on touch screen display 112 (where the touch-sensitive surface and the display are combined), in some embodiments, the device detects inputs on a touch-sensitive surface that is separate from the display, as shown in Fig. 4B. In some embodiments, the touch-sensitive surface (e.g., 451 in Fig. 4B) has a primary axis (e.g., 452 in Fig. 4B) that corresponds to a primary axis (e.g., 453 in Fig. 4B) on the display (e.g., 450). In accordance with these embodiments, the device detects contacts (e.g., 460 and 462 in Fig. 4B) with the touch-sensitive surface 451 at locations that correspond to respective locations on the display (e.g., in Fig. 4B, 460 corresponds to 468 and 462 corresponds to 470). In this way, user inputs (e.g., contacts 460 and 462, and movements thereof) detected by the device on the touch-sensitive surface (e.g., 451 in Fig. 4B) are used by the device to manipulate the user interface on the display (e.g., 450 in Fig. 4B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

As used herein, the term "focus selector" refers to an input element that indicates a current part of a user interface with which a user is interacting. In some implementations that include a cursor or other location marker, the cursor acts as a "focus selector," so that when an input (e.g., a press input) is detected on a touch-sensitive surface (e.g., touchpad 355 in Fig. 3A or touch-sensitive surface 451 in Fig. 4B) while the cursor is over a particular user interface element (e.g., a button, window, slider or other user interface element), the particular user interface element is adjusted in accordance with the detected input. In some implementations that include a touch-screen display (e.g., touch-sensitive display system 112 in Fig. 1A) that enables direct interaction with user interface elements on the touch-screen display, a detected contact on the touch-screen acts as a "focus selector," so that when an input (e.g., a press input by the contact) is detected on the touch-screen display at a location of a particular user interface element (e.g., a button, window, slider or other user interface element), the particular user interface element is adjusted in accordance with the detected input. In some implementations focus is moved from one region of a user interface to another region of the user interface without corresponding movement of a cursor or movement of a contact on a touch-screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch-screen display) that is controlled by the user so as to communicate the user's intended interaction with the user interface (e.g., by indicating, to the device, the element of the user interface with which the user is intending to interact). For example, the location of a focus selector (e.g., a cursor, a contact or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally, based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds optionally includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation), rather than being used to determine whether to perform a first operation or a second operation.

In some embodiments described herein, one or more operations are performed in response to detecting a gesture that includes a respective press input or in response to detecting the respective press input performed with a respective contact (or a plurality of contacts), where the respective press input is detected based at least in part on detecting an increase in intensity of the contact (or plurality of contacts) above a press-input intensity threshold. In some embodiments, the respective operation is performed in response to detecting the increase in intensity of the respective contact above the press-input intensity threshold (e.g., a "down stroke" of the respective press input). In some embodiments, the press input includes an increase in intensity of the respective contact above the press-input intensity threshold and a subsequent decrease in intensity of the contact below the press-input intensity threshold, and the respective operation is performed in response to detecting the subsequent decrease in intensity of the respective contact below the press-input threshold (e.g., an "up stroke" of the respective press input).

In some embodiments, the device employs intensity hysteresis to avoid accidental inputs sometimes termed "jitter," where the device defines or selects a hysteresis intensity threshold with a predefined relationship to the press-input intensity threshold (e.g., the hysteresis intensity threshold is X intensity units lower than the press-input intensity threshold or the hysteresis intensity threshold is 75%, 90% or some reasonable proportion of the press-input intensity threshold). Thus, in some embodiments, the press input includes an increase in intensity of the respective contact above the press-input intensity threshold and a subsequent decrease in intensity of the contact below the hysteresis intensity threshold that corresponds to the press-input intensity threshold, and the respective operation is performed in response to detecting the subsequent decrease in intensity of the respective contact below the hysteresis intensity threshold (e.g., an "up stroke" of the respective press input). Similarly, in some embodiments, the press input is detected only when the device detects an increase in intensity of the contact from an intensity at or below the hysteresis intensity threshold to an intensity at or above the press-input intensity threshold and, optionally, a subsequent decrease in intensity of the contact to an intensity at or below the hysteresis intensity, and the respective operation is performed in response to detecting the press input (e.g., the increase in intensity of the contact or the decrease in intensity of the contact, depending on the circumstances).

For ease of explanation, the description of operations performed in response to a press input associated with a press-input intensity threshold or in response to a gesture including the press input are, optionally, triggered in response to detecting either: an increase in intensity of a contact above the press-input intensity threshold, an increase in intensity of a contact from an intensity below the hysteresis intensity threshold to an intensity above the press-input intensity threshold, a decrease in intensity of the contact below the press-input intensity threshold, and/or a decrease in intensity of the contact below the hysteresis intensity threshold corresponding to the press-input intensity threshold. Additionally, in examples where an operation is described as being performed in response to detecting a decrease in intensity of a contact below the press-input intensity threshold, the operation is, optionally, performed in response to detecting a decrease in intensity of the contact below a hysteresis intensity threshold corresponding to, and lower than, the press-input intensity threshold.

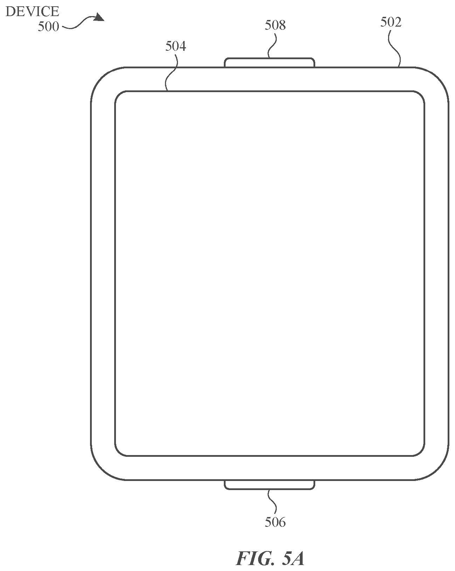

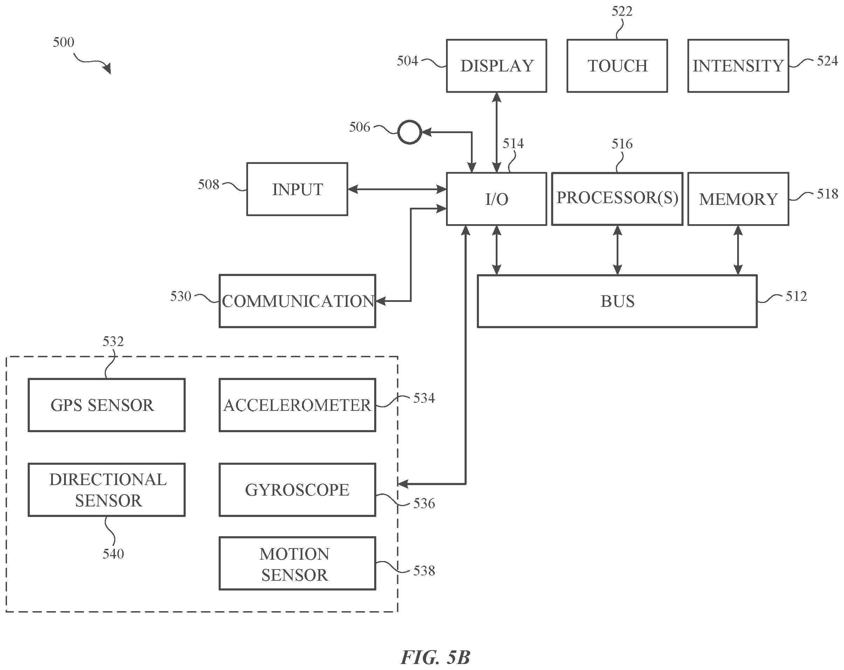

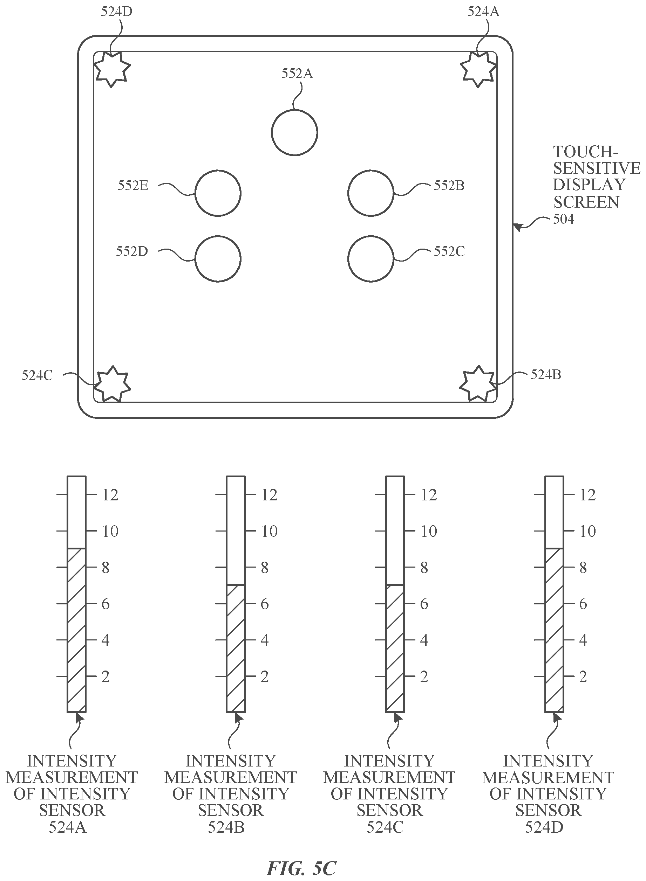

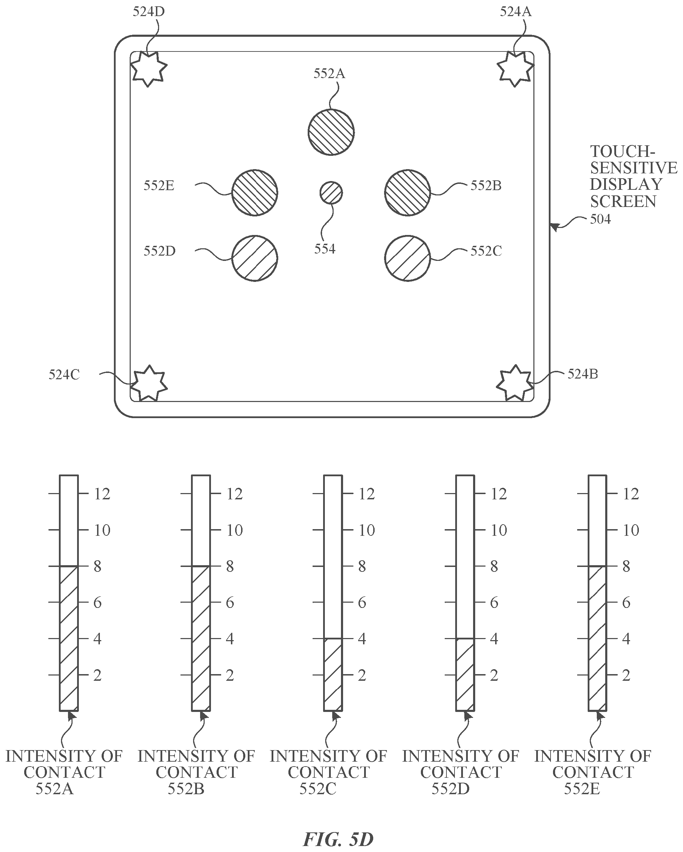

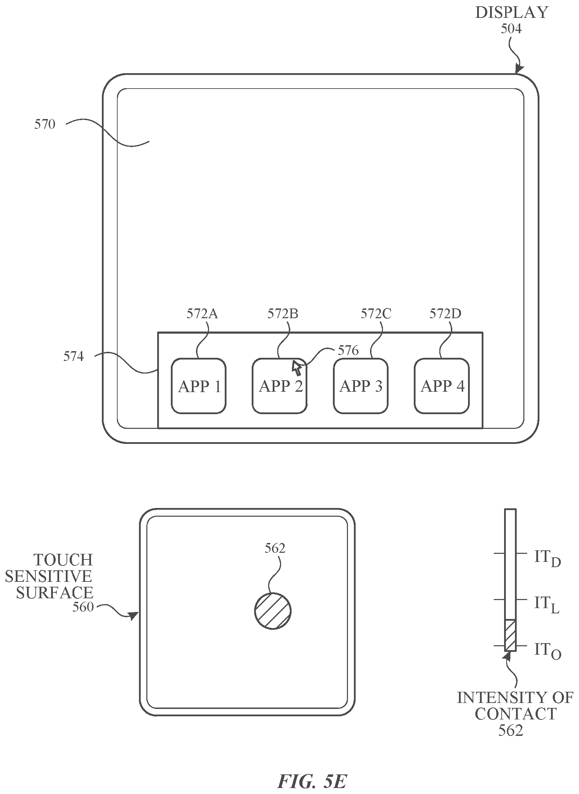

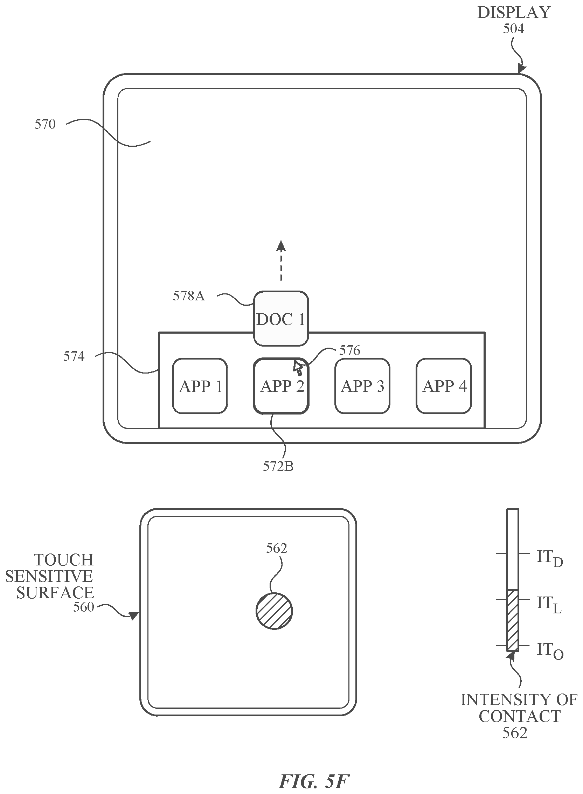

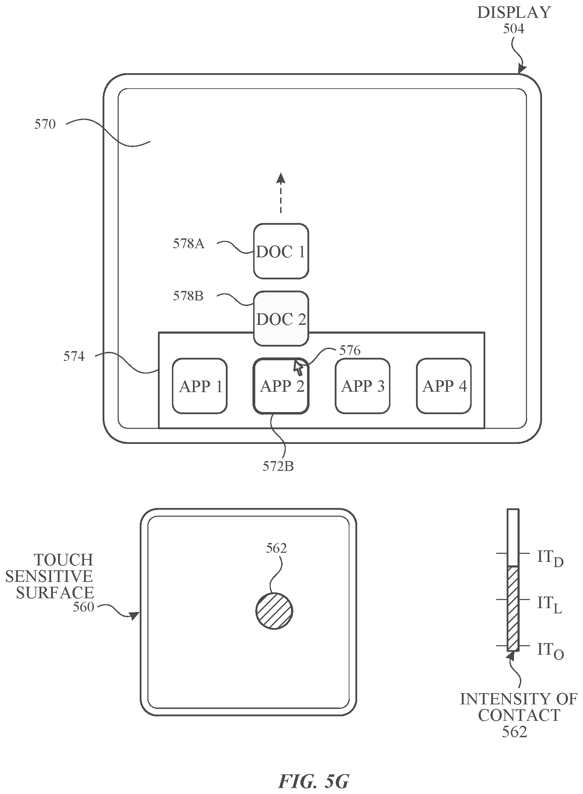

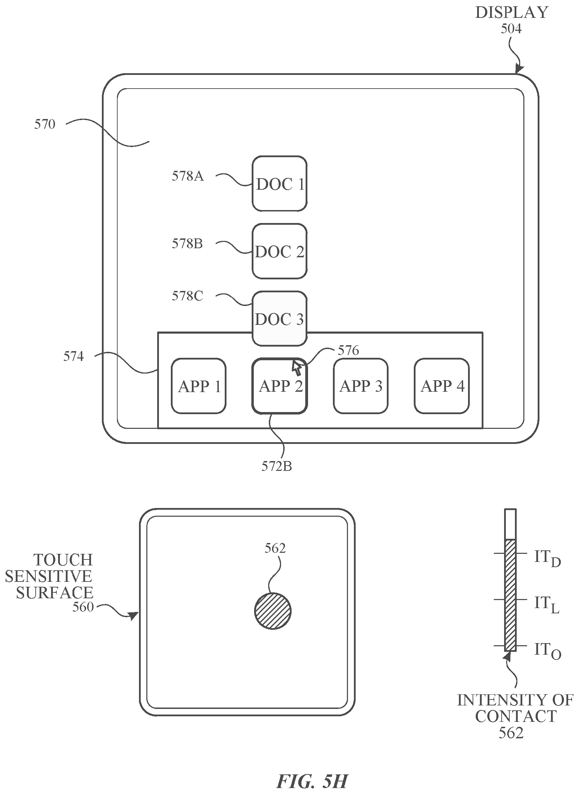

Fig. 5A illustrates a block diagram of an exemplary architecture for the device 500 according to some embodiments of the disclosure. In the embodiment of Fig. 5A, media or other content is optionally received by device 500 via network interface 502, which is optionally a wireless or wired connection. The one or more processors 516 optionally execute any number of programs stored in memory 506 or storage, which optionally includes instructions to perform one or more of the methods and/or processes described herein (e.g., methods 700, 900, and/or 1100). A computer-readable storage medium can be any medium that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on CD, DVD, or Blu-ray technologies, as well as persistent solid-state memory such as flash, solid-state drives, and the like. Personal electronic device 500 is not limited to the components and configuration of Figs. 5, but can include other or additional components in multiple configurations.

In addition, in methods described herein where one or more steps are contingent upon one or more conditions having been met, it should be understood that the described method can be repeated in multiple repetitions so that over the course of the repetitions all of the conditions upon which steps in the method are contingent have been met in different repetitions of the method. For example, if a method requires performing a first step if a condition is satisfied, and a second step if the condition is not satisfied, then a person of ordinary skill would appreciate that the claimed steps are repeated until the condition has been both satisfied and not satisfied, in no particular order. Thus, a method described with one or more steps that are contingent upon one or more conditions having been met could be rewritten as a method that is repeated until each of the conditions described in the method has been met. This, however, is not required of system or computer readable medium claims where the system or computer readable medium contains instructions for performing the contingent operations based on the satisfaction of the corresponding one or more conditions and thus is capable of determining whether the contingency has or has not been satisfied without explicitly repeating steps of a method until all of the conditions upon which steps in the method are contingent have been met. A person having ordinary skill in the art would also understand that, similar to a method with contingent steps, a system or computer readable storage medium can repeat the steps of a method as many times as are needed to ensure that all of the contingent steps have been performed.

As used here, the term "affordance" refers to a user-interactive graphical user interface object that is, optionally, displayed on the display screen of devices 100, 300, and/or 500 (Figs. 1A, 3, and 5A-5B). For example, an image (e.g., icon), a button, and text (e.g., hyperlink) each optionally constitute an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 355 in Fig. 3A or touch-sensitive surface 451 in Fig. 4B) while the cursor is over a particular user interface element (e.g., a button, window, slider, or other user interface element), the particular user interface element is adjusted in accordance with the detected input. In some implementations that include a touch screen display (e.g., touch-sensitive display system 112 in Fig. 1A or touch screen 112 in Fig. 4A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally, based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds optionally includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation), rather than being used to determine whether to perform a first operation or a second operation.

Fig. 5C illustrates detecting a plurality of contacts 552A-552E on touch-sensitive display screen 504 with a plurality of intensity sensors 524A-524D. Fig. 5C additionally includes intensity diagrams that show the current intensity measurements of the intensity sensors 524A-524D relative to units of intensity. In this example, the intensity measurements of intensity sensors 524A and 524D are each 9 units of intensity, and the intensity measurements of intensity sensors 524B and 524C are each 7 units of intensity. In some implementations, an aggregate intensity is the sum of the intensity measurements of the plurality of intensity sensors 524A-524D, which in this example is 32 intensity units. In some embodiments, each contact is assigned a respective intensity that is a portion of the aggregate intensity. Fig. 5D illustrates assigning the aggregate intensity to contacts 552A-552E based on their distance from the center of force 554. In this example, each of contacts 552A, 552B, and 552E are assigned an intensity of contact of 8 intensity units of the aggregate intensity, and each of contacts 552C and 552D are assigned an intensity of contact of 4 intensity units of the aggregate intensity. More generally, in some implementations, each contact j is assigned a respective intensity Ij that is a portion of the aggregate intensity, A, in accordance with a predefined mathematical function, Ij = A·(Dj/ΣDi), where Dj is the distance of the respective contact j to the center of force, and ΣDi is the sum of the distances of all the respective contacts (e.g., i=1 to last) to the center of force. The operations described with reference to Figs. 5C-5D can be performed using an electronic device similar or identical to device 100, 300, or 500. In some embodiments, a characteristic intensity of a contact is based on one or more intensities of the contact. In some embodiments, the intensity sensors are used to determine a single characteristic intensity (e.g., a single characteristic intensity of a single contact). It should be noted that the intensity diagrams are not part of a displayed user interface, but are included in Figs. 5C-5D to aid the reader.

In some embodiments, a portion of a gesture is identified for purposes of determining a characteristic intensity. For example, a touch-sensitive surface optionally receives a continuous swipe contact transitioning from a start location and reaching an end location, at which point the intensity of the contact increases. In this example, the characteristic intensity of the contact at the end location is, optionally, based on only a portion of the continuous swipe contact, and not the entire swipe contact (e.g., only the portion of the swipe contact at the end location). In some embodiments, a smoothing algorithm is, optionally, applied to the intensities of the swipe contact prior to determining the characteristic intensity of the contact. For example, the smoothing algorithm optionally includes one or more of: an unweighted sliding-average smoothing algorithm, a triangular smoothing algorithm, a median filter smoothing algorithm, and/or an exponential smoothing algorithm. In some circumstances, these smoothing algorithms eliminate narrow spikes or dips in the intensities of the swipe contact for purposes of determining a characteristic intensity.

The intensity of a contact on the touch-sensitive surface is, optionally, characterized relative to one or more intensity thresholds, such as a contact-detection intensity threshold, a light press intensity threshold, a deep press intensity threshold, and/or one or more other intensity thresholds. In some embodiments, the light press intensity threshold corresponds to an intensity at which the device will perform operations typically associated with clicking a button of a physical mouse or a trackpad. In some embodiments, the deep press intensity threshold corresponds to an intensity at which the device will perform operations that are different from operations typically associated with clicking a button of a physical mouse or a trackpad. In some embodiments, when a contact is detected with a characteristic intensity below the light press intensity threshold (e.g., and above a nominal contact-detection intensity threshold below which the contact is no longer detected), the device will move a focus selector in accordance with movement of the contact on the touch-sensitive surface without performing an operation associated with the light press intensity threshold or the deep press intensity threshold. Generally, unless otherwise stated, these intensity thresholds are consistent between different sets of user interface figures.

An increase of characteristic intensity of the contact from an intensity below the light press intensity threshold to an intensity between the light press intensity threshold and the deep press intensity threshold is sometimes referred to as a "light press" input. An increase of characteristic intensity of the contact from an intensity below the deep press intensity threshold to an intensity above the deep press intensity threshold is sometimes referred to as a "deep press" input. An increase of characteristic intensity of the contact from an intensity below the contact-detection intensity threshold to an intensity between the contact-detection intensity threshold and the light press intensity threshold is sometimes referred to as detecting the contact on the touch-surface. A decrease of characteristic intensity of the contact from an intensity above the contact-detection intensity threshold to an intensity below the contact-detection intensity threshold is sometimes referred to as detecting liftoff of the contact from the touch-surface. In some embodiments, the contact-detection intensity threshold is zero. In some embodiments, the contact-detection intensity threshold is greater than zero.

In some embodiments described herein, one or more operations are performed in response to detecting a gesture that includes a respective press input or in response to detecting the respective press input performed with a respective contact (or a plurality of contacts), where the respective press input is detected based at least in part on detecting an increase in intensity of the contact (or plurality of contacts) above a press-input intensity threshold. In some embodiments, the respective operation is performed in response to detecting the increase in intensity of the respective contact above the press-input intensity threshold (e.g., a "down stroke" of the respective press input). In some embodiments, the press input includes an increase in intensity of the respective contact above the press-input intensity threshold and a subsequent decrease in intensity of the contact below the press-input intensity threshold, and the respective operation is performed in response to detecting the subsequent decrease in intensity of the respective contact below the press-input threshold (e.g., an "up stroke" of the respective press input).

Figs. 5E-5H illustrate detection of a gesture that includes a press input that corresponds to an increase in intensity of a contact 562 from an intensity below a light press intensity threshold (e.g., "IT_{L}") in Fig. 5E, to an intensity above a deep press intensity threshold (e.g., "IT_{D}") in Fig. 5H. The gesture performed with contact 562 is detected on touch-sensitive surface 560 while cursor 576 is displayed over application icon 572B corresponding to App 2, on a displayed user interface 570 that includes application icons 572A-572D displayed in predefined region 574. In some embodiments, the gesture is detected on touch-sensitive display 504. The intensity sensors detect the intensity of contacts on touch-sensitive surface 560. The device determines that the intensity of contact 562 peaked above the deep press intensity threshold (e.g., "IT_{D}"). Contact 562 is maintained on touch-sensitive surface 560. In response to the detection of the gesture, and in accordance with contact 562 having an intensity that goes above the deep press intensity threshold (e.g., "IT_{D}") during the gesture, reduced-scale representations 578A-578C (e.g., thumbnails) of recently opened documents for App 2 are displayed, as shown in Figs. 5F-5H. In some embodiments, the intensity, which is compared to the one or more intensity thresholds, is the characteristic intensity of a contact. It should be noted that the intensity diagram for contact 562 is not part of a displayed user interface, but is included in Figs. 5E-5H to aid the reader.

In some embodiments, the display of representations 578A-578C includes an animation. For example, representation 578A is initially displayed in proximity of application icon 572B, as shown in Fig. 5F. As the animation proceeds, representation 578A moves upward and representation 578B is displayed in proximity of application icon 572B, as shown in Fig. 5G. Then, representations 578A moves upward, 578B moves upward toward representation 578A, and representation 578C is displayed in proximity of application icon 572B, as shown in Fig. 5H. Representations 578A-578C form an array above icon 572B. In some embodiments, the animation progresses in accordance with an intensity of contact 562, as shown in Figs. 5F-5G, where the representations 578A-578C appear and move upwards as the intensity of contact 562 increases toward the deep press intensity threshold (e.g., "IT_{D}"). In some embodiments, the intensity, on which the progress of the animation is based, is the characteristic intensity of the contact. The operations described with reference to Figs. 5E-5H can be performed using an electronic device similar or identical to device 100, 300, or 500.

In some embodiments, the device employs intensity hysteresis to avoid accidental inputs sometimes termed "jitter," where the device defines or selects a hysteresis intensity threshold with a predefined relationship to the press-input intensity threshold (e.g., the hysteresis intensity threshold is X intensity units lower than the press-input intensity threshold or the hysteresis intensity threshold is 75%, 90%, or some reasonable proportion of the press-input intensity threshold). Thus, in some embodiments, the press input includes an increase in intensity of the respective contact above the press-input intensity threshold and a subsequent decrease in intensity of the contact below the hysteresis intensity threshold that corresponds to the press-input intensity threshold, and the respective operation is performed in response to detecting the subsequent decrease in intensity of the respective contact below the hysteresis intensity threshold (e.g., an "up stroke" of the respective press input). Similarly, in some embodiments, the press input is detected only when the device detects an increase in intensity of the contact from an intensity at or below the hysteresis intensity threshold to an intensity at or above the press-input intensity threshold and, optionally, a subsequent decrease in intensity of the contact to an intensity at or below the hysteresis intensity, and the respective operation is performed in response to detecting the press input (e.g., the increase in intensity of the contact or the decrease in intensity of the contact, depending on the circumstances).

For ease of explanation, the descriptions of operations performed in response to a press input associated with a press-input intensity threshold or in response to a gesture including the press input are, optionally, triggered in response to detecting either: an increase in intensity of a contact above the press-input intensity threshold, an increase in intensity of a contact from an intensity below the hysteresis intensity threshold to an intensity above the press-input intensity threshold, a decrease in intensity of the contact below the press-input intensity threshold, and/or a decrease in intensity of the contact below the hysteresis intensity threshold corresponding to the press-input intensity threshold. Additionally, in examples where an operation is described as being performed in response to detecting a decrease in intensity of a contact below the press-input intensity threshold, the operation is, optionally, performed in response to detecting a decrease in intensity of the contact below a hysteresis intensity threshold corresponding to, and lower than, the press-input intensity threshold.

As used herein, an "installed application" refers to a software application that has been downloaded onto an electronic device (e.g., devices 100, 300, and/or 500) and is ready to be launched (e.g., become opened) on the device. In some embodiments, a downloaded application becomes an installed application by way of an installation program that extracts program portions from a downloaded package and integrates the extracted portions with the operating system of the computer system.

As used herein, the terms "open application" or "executing application" refer to a software application with retained state information (e.g., as part of device/global internal state 157 and/or application internal state 192). An open or executing application is, optionally, any one of the following types of applications:
- an active application, which is currently displayed on a display screen of the device that the application is being used on;
- a background application (or background processes), which is not currently displayed, but one or more processes for the application are being processed by one or more processors; and
- a suspended or hibernated application, which is not running, but has state information that is stored in memory (volatile and non-volatile, respectively) and that can be used to resume execution of the application.

As used herein, the term "closed application" refers to software applications without retained state information (e.g., state information for closed applications is not stored in a memory of the device). Accordingly, closing an application includes stopping and/or removing application processes for the application and removing state information for the application from the memory of the device. Generally, opening a second application while in a first application does not close the first application. When the second application is displayed and the first application ceases to be displayed, the first application becomes a background application.

Attention is now directed towards embodiments of user interfaces ("UI") and associated processes that are implemented on an electronic device, such as device 100, device 300, or device 500.

Communicating via messaging applications has become an important mode via which users communicate between each other individually, as well as in group conversations which include three or more users. Interactions between users and forms of communication within messaging applications include textual communications, interactions between users via multimedia (e.g., images, videos, animations, emojis, stickers, etc.) and interactions and/or reaction sot individual messages. However, such messaging conversations take place in a messaging user interface which includes a generic background layer including a predetermined background and/or plain background which is based on predetermined options included with the messaging application and/or operating system of the electronic device.

The use of customized and interactive backgrounds provides users participating in messaging conversations with an additional dimension of interactivity and engagement while communicating with other users. The embodiments described below are directed toward interactive backgrounds and visual effects which result from user interactions with the background, the one or more messages corresponding to messaging conversation while displaying the messaging user interface.

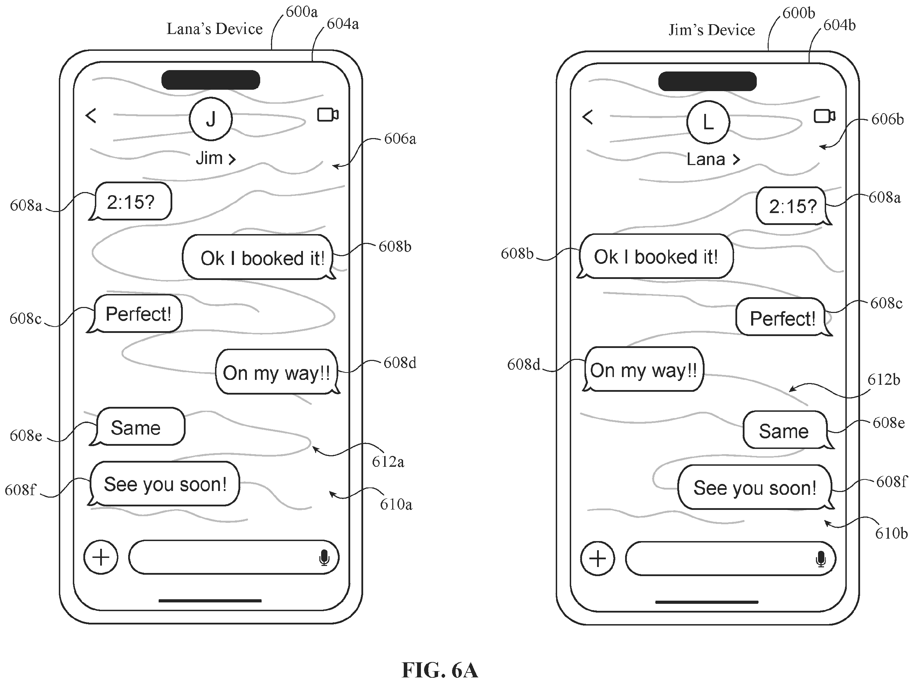

Fig. 6A-Fig. 6T illustrate exemplary ways, based on one or more criteria, in which interactions with elements corresponding to the messaging conversation result in changes to the background and/or the messages corresponding to the messaging conversation.

The embodiments in these figures are used to illustrate the processes described below, including the processes described in Fig. 7 of how user interactions and/or events detected at respective electronic devices result in interactive changes within the messaging conversation. Although Figs. 6A-6T illustrate various examples of ways an electronic device is able to perform the processes described below with respect to Fig. 7, it should be understood that these examples are not meant to be limiting, and the electronic device is able to perform one or more processes described below with reference to Fig. 7 in ways not expressly described with reference to Figs. 6A-6T. In some embodiments, while the methods for displaying visual effects (such as in response to user interactions with the electronic device) while displaying the messaging user interface, the context should be seen as exemplary, and should not be viewed as limiting to the disclosure. In some embodiments, the methods and processes described herein can be applied in multiple contexts where the display of one or more backgrounds, one or more background layers, one or more messaging conversations, one or more visual effects based on user interaction which optionally differ and/or share one or more characteristics with various embodiments as desired.

As shown in Fig. 6A, a first electronic device 600a ("Lana's Device") and a second electronic device 600b ("Jim's Device") are included in a messaging conversation together. The electronic devices (e.g., 600a, and/or 600b), optionally correspond to one or more electronic devices 500 as described herein. The display generation components (e.g., 604a, and/or 604b), optionally correspond to one or more display generation components 504 as described herein. The respective electronic devices display respective messaging user interfaces (e.g., 606a and 606b), via display generation components (e.g., 604a-604b). In some embodiments visual representations of one or more messages (e.g., 608a-608e) that have been sent to the messaging conversation are displayed at the respective electronic devices. Messages sent by Lana via the first electronic device 600a (e.g., visual representation of messages 608b, and 608d) are shown on the right side of the messaging user interface 606a of the first electronic device 600a, and at the left side of the messaging user interface 606b at the second electronic device 600b. Furthermore, messages sent by Jim via the second electronic device 600b (e.g., visual representation of messages 608a, 608c, 608e, and 608f) are shown on the right side of the messaging user interface 606b of the second electronic device 600b, and at the left side of the messaging user interface 606a at the first electronic device 600a. The messages displayed in the messaging user interface are listed in chronological order vertically in the respective messaging user interfaces of the respective electronic devices such that more recent messages are shown vertically below less recent messages. That is, for instance, message 608f was sent to the messaging conversation more recently than message 608e, and message 608e was sent to the messaging conversation more recently than messages 608a-608d. The messaging conversation, as displayed at the respective electronic devices includes a first visual representation of a background layer 610a-610b with background content 612a-612b corresponding to imagery of water. As shown in Fig. 6A, the first visual representation of the background layer 610a shown at the first electronic device 600a is the same as the first visual representation of the background layer 610b shown at the second electronic device 600b. Interactions with the messaging user interface optionally result in displaying a change to the visual representation of the background layer 610a at the first device and/or the second device. Certain inputs result in local changes to the visual representation of the background layer 610a-610b at the respective electronic device 600a or 600b that detected the inputs, while certain inputs result in changes that are communicated to the one or more other devices participating in the messaging conversation, resulting in changes to the visual representation of the background layer 610a-610b at multiple electronic devices included in the messaging conversation.

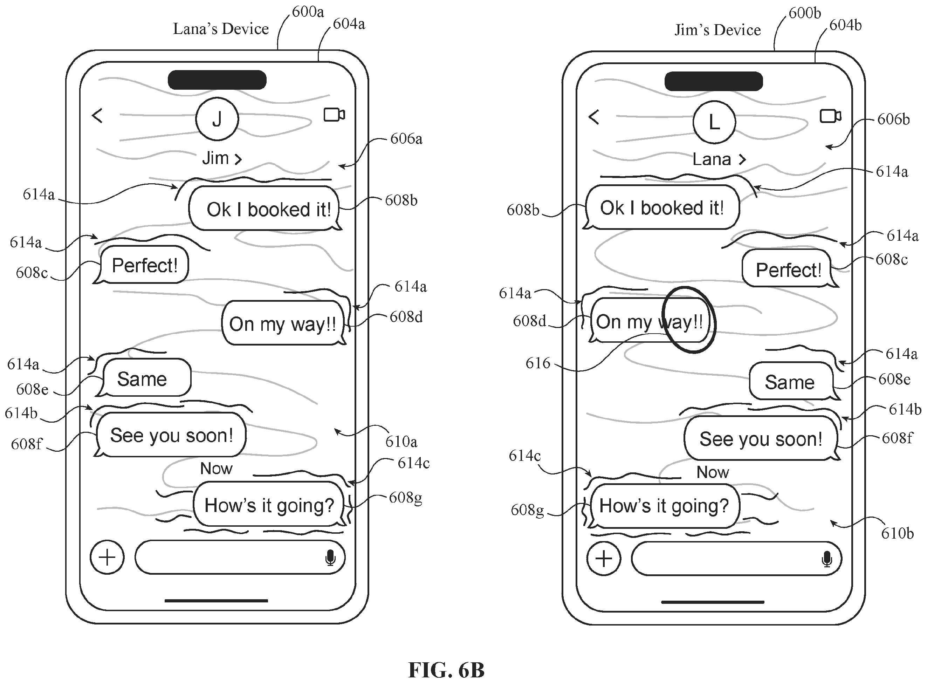

As shown in Fig. 6B, an additional message 608g including "How's it going?" is sent to the messaging conversation by Jim at the second electronic device 600b, which is displayed in chronological order at the respective electronic devices, in response to the message being sent, which results in the messaging conversation shifting upward. As shown, Lana has sent a message 608g to the messaging user interface via the first electronic device 600a, which is displayed at the bottom of the respective messaging user interfaces at the respective electronic devices. The addition of the visual representation of message 608g to the messaging conversation results in shifting of the messages upward to accommodate displaying the most recent messages at the bottom of the messaging conversation, while retaining the chronological order in which the messages are displayed. Based on the upward movement of the visual representation of the messages shown in the messaging user interface, portions of the background layer 610a and 610b corresponding to the location of the previously displayed messages includes a visual effect that is contextually aligned with the background content 612a-612b. As shown, the portions of the background layer corresponding to the earlier messages that were previously shown (e.g., visual representations of messages 608b-608f) are now shown with a visual effect 614a-614b simulating water ripples to simulate the movement of the messages across a water surface at the respective electronic devices 600a and 600b. In some embodiments, with respect to interactive background layer 610a-610b described herein (e.g., a simulation of a water surface, reflective particles, etc.), includes an animation which is displayed without detecting an event such as a user input or delivery of a message to the messaging conversation. Optionally, as shown, the most recent of the previously displayed visual representation of message 608f is shown with increased ripples 614b based on proximity to the visual representation of message 608g. Visual representation of message 608g is displayed with water ripples 614c corresponding with a simulation of movement and/or dropping the visual representation of the message 608g onto a water surface. In some embodiments, with respect to background and background layers 610a-610b described herein, certain backgrounds are reactive (e.g., display an animation or visual effect) in response to detecting an event (e.g., user input) and certain backgrounds are not reactive such as described in relation to method 700.

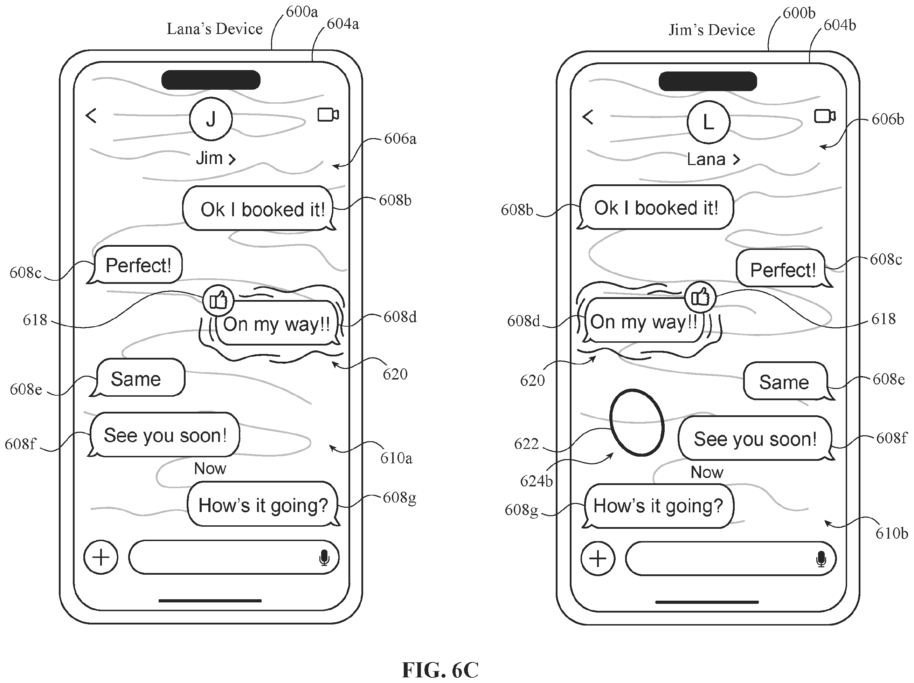

As further shown in Fig. 6B, a user input 614 included in a user input sequence is detected at the second electronic device 600b including selection of the visual representation of message 608d reciting "On my way!!" The user input sequence further selecting a tap-back response to the visual representation of message 608d. As shown in Fig. 6C, in response to detecting the user input sequence, the electronic devices 600a and 600b display an emoji 618 overlaid on the visual representation of message 608d. Based on the tap-back response to the visual representation of message 608d being sent to the messaging conversation, the electronic devices participating in the messaging conversation displays the background layer 610a and 610b with an effect to illustrate interaction and draw further attention to the tap-back response to the message 608d.

As shown in Fig. 6C, in response to detecting the sequence of inputs including the input 616 shown in Fig. 6B, of the respective electronic devices participating in the messaging conversation displays the emoji 618 associated with the visual representation of message 608d, and displays the portion of the background layer 610a-610b corresponding with the visual representation of message 608d with a visual effect 620 simulating that the visual representation of message 608d has been dropped and/or pressed into a water surface resulting in water ripples emanating from around the message 608d. While the respective electronic devices 600a-600b are displaying the visual effect 620, the second electronic device 600b detects a user input 622 directed to the background layer 610b in a first location 624a. The forementioned animations, and following animations described herein, which are displayed at one or more electronic devices, (e.g., 600a-600b) optionally require the messaging conversation to be displayed at the respective electronic device. For instance, when the visual representation of the message 608g is displayed in the messaging conversation, the respective electronic devices 600a and 600b display the corresponding animations (e.g., 614a-614c) only when the messaging conversation is displayed at the respective electronic device. In some embodiments, the animation is delayed until the respective electronic device (e.g., the receiving electronic device) such as second electronic device 600b receives a user input to display the messaging conversation for the first time since the transmission of the message 608g to the messaging conversation.

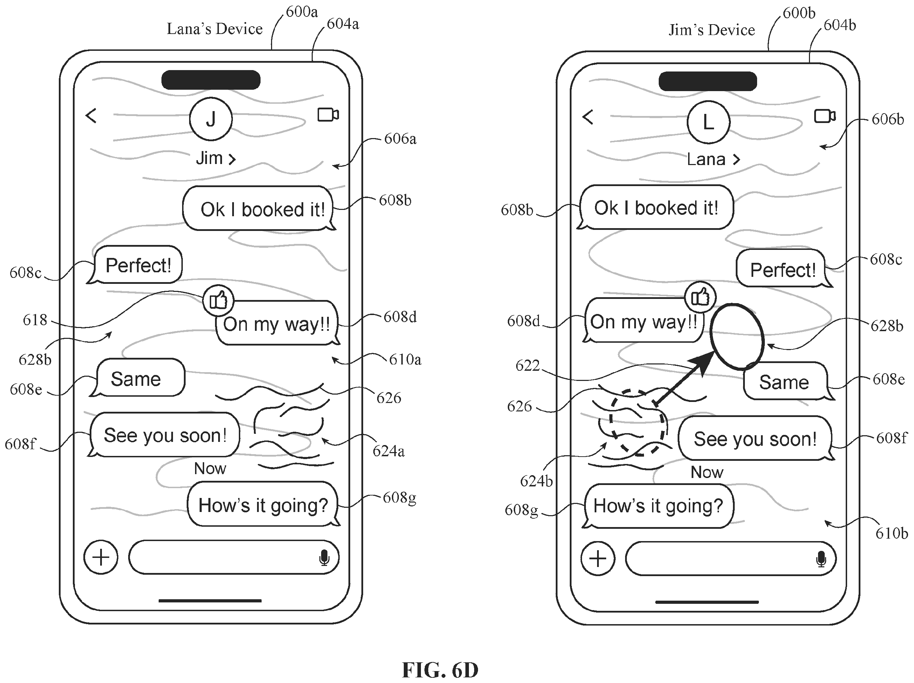

As shown in Fig. 6D, the electronic device 600b detecting the user input 622 directed to the background layer 610b, causes the electronic devices 600a and 600b to display a visual effect 626 simulating a disturbance (e.g., ripples, turbulence, splashing, etc.) of a water surface at the first location 624a-624b relative to the portion of the background layer 610a-610b in proximity to the location corresponding to the detection of the user input 622. As shown, the first location 624a the first electronic device 600a is mirrored as related to the first location 624b at the second electronic device 600b, based on the display of the messages on the left side or right side of the messaging user interface of the respective electronic devices, based on the user (e.g., Lana or Jim) that sent the respective message to the messaging conversation. In some embodiments, the first location 624a at the first electronic device 600a and the first location 624b at the second electronic device 600b is relative to the background layer 610b, and thus results in the first location 624a-624b being the same location at the respective electronic devices. As further shown in Fig. 6D, the user input 622 further includes a movement of the input (e.g., a touch and drag of a finger) across the messaging user interface 606b of the second electronic device 600b wherein the input moves from the first location 624a to a second location 628b.

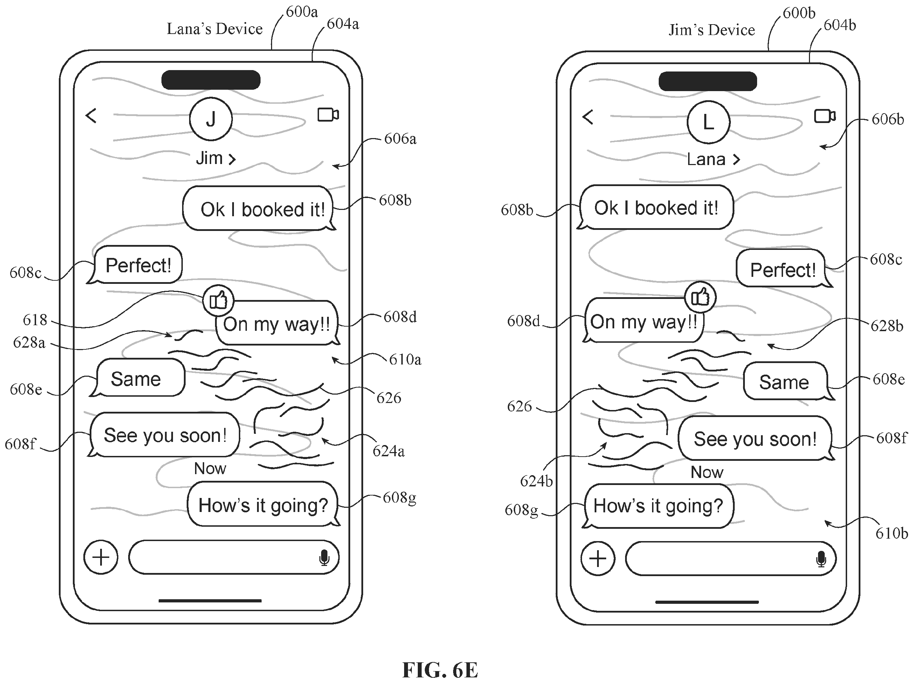

As shown in Fig. 6E, at the second electronic device 600b, in response to detecting the movement of the user input 622 (shown in Fig. 6D) from the first location 624b to the second location 628b, the portions of the background layer 610-610b associated with the movement of the input from the first location 624b to the second location 628b, are displayed with a visual effect which includes a simulation of the propagation of the visual effect 626 (shown in Fig. 6D) simulating disturbance of the water from the first location 624b to the second location 628b. As shown in Fig. 6E, the propagation of the visual effect 626 is also applied to the background layer 610a at the first electronic device 600a in relation to the first location 624a and the second location 628a. In some embodiments, the propagation of the visual effect displayed at the first electronic device 600a is mirrored in relation to the propagation of the visual effect displayed at the second electronic device 600b. Additionally or alternatively, the propagation of the visual effect displayed at the first electronic device 600a is displayed in the same manner (e.g., not mirrored) in which propagation of the visual effect displayed at the second electronic device 600b.

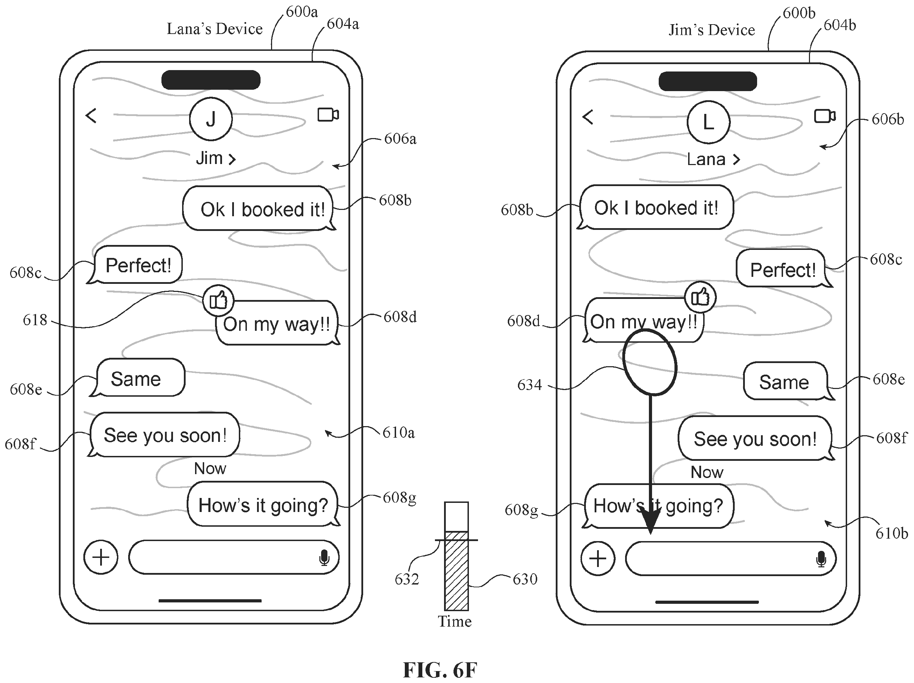

As shown in Fig 6F, after displaying visual effects, such as the forementioned visual effects (e.g., 614a-614c, 620, and/or 626) described in relation to 6B-6E, when one or more of the respective electronic devices 600a-600b determine that the amount of lapsed time 630 from the detected event exceeds a predetermined time period 632. In some embodiments the time measured from the detected event corresponds to initiation of the last animation, detecting user input that caused the animation, and/or termination of the last animation. In response to the amount of lapsed time exceeding a predetermined time period 632 the respective electronic devices cease displaying the visual effects applied to the respective background layers 610a-610b, and optionally revert to displaying the respective background layers as originally displayed prior to applying the visual effects, such as shown in Fig. 6A prior to receiving user input. While the messaging conversation is displayed in the messaging user interface 606b at the second electronic device 600b, the second electronic device 600b detects a user input 634 (e.g., touch and drag) corresponding to a request to display older messages which have been sent to the messaging conversation (e.g., by scrolling).

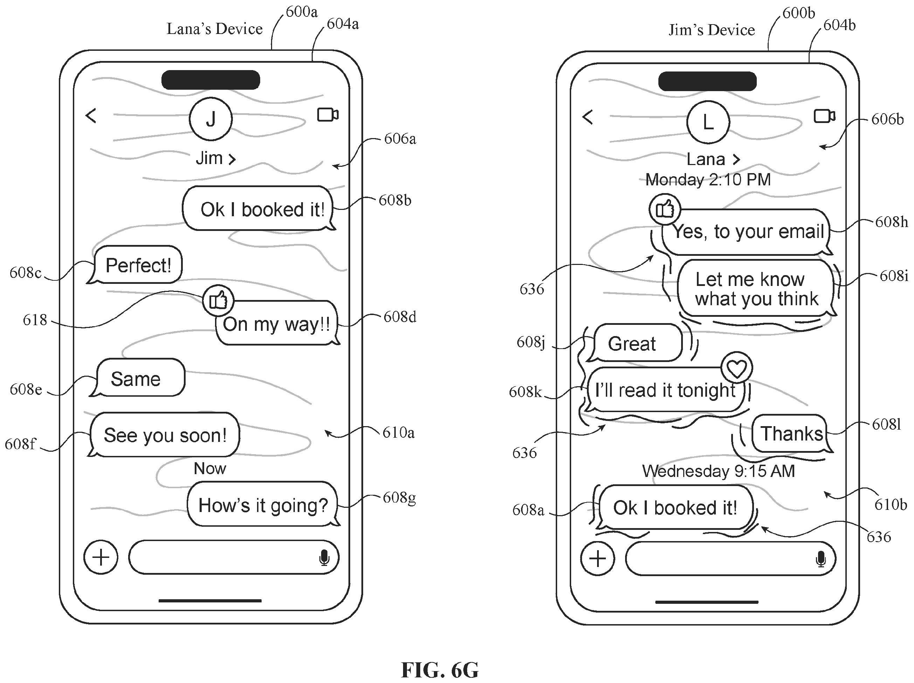

As shown in Fig. 6G, in response to detecting the user input 634 corresponding to a request to display older messages which have been sent to the messaging conversation (e.g., by scrolling), the second electronic device 600b displays messages 608a and 608h-608k in the messaging user interface 606b. The displayed messages are displayed with a visual effect 636 applied to the background layer 610b which simulates the visible messages, which have been dragged downward in the messaging user interface. The user input of including the request to drag the displayed messages downward in the messaging user interface, results in the second electronic device 600b displaying a visual effect 636 simulating a disturbance in the water surface during the dragging action as if the messages 608a and 608h-608k were dragged through the water surface. The visual effect 636 is optionally not displayed at the first electronic device 600a due to the change of the displayed messages is local to the second electronic device 600b and not communicated to the messaging conversation and/or the first electronic device 600a.

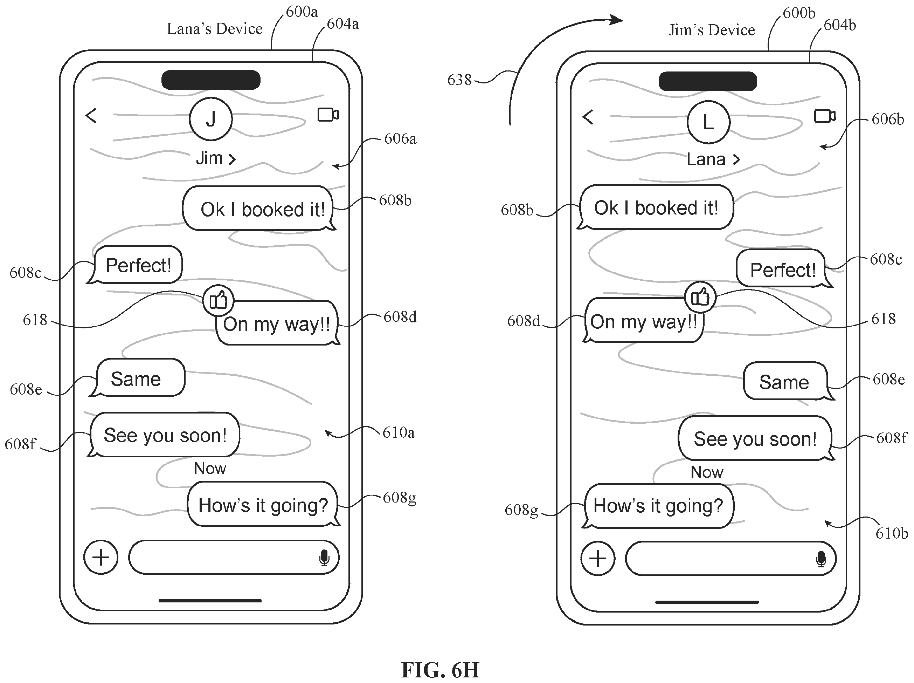

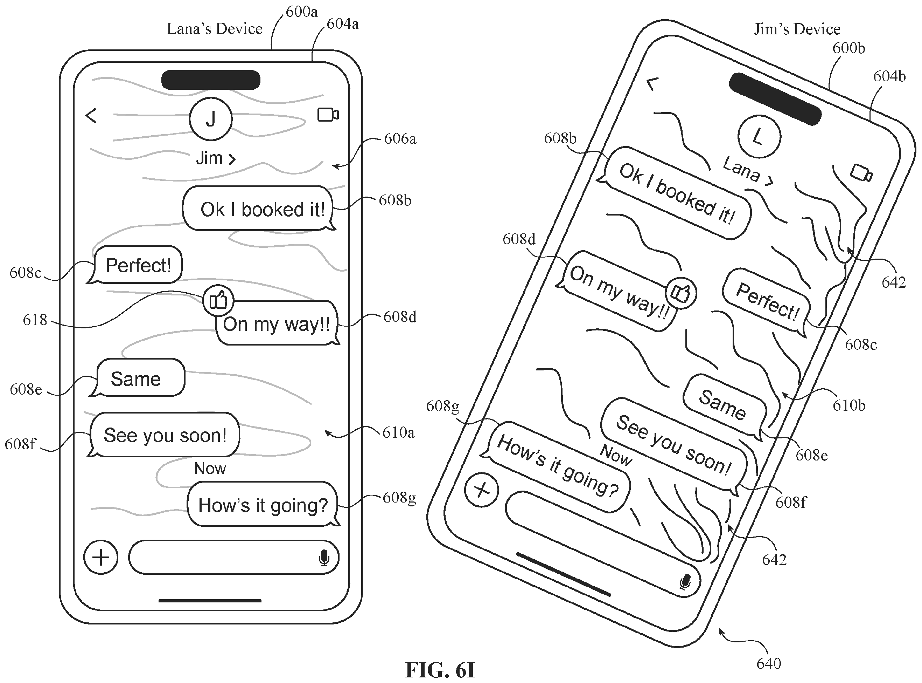

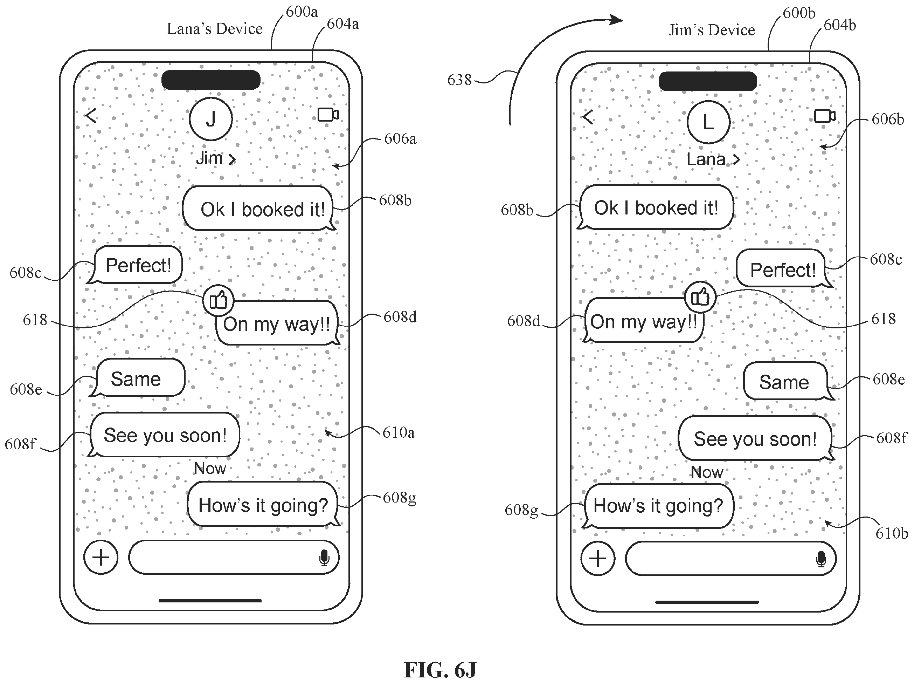

Certain events and/or inputs detected at local devices result in changes to the background layer 610a-610b at the local electronic device 600a or 600b where the input and/or event was detected as shown in the following figures. As shown in Fig 6H, the second electronic device 600b detects a rotational movement 638 of the second electronic device 600b (e.g., via accelerometer(s) 168 such as shown in Fig. 1A) such as when Jim is handling the second electronic device 600b in a manner which the second electronic device 600b rotates from an upright orientation as shown in Fig. 6H, to a tilted upright orientation as shown in Fig. 6I with the bottom right corner 640 of the second electronic device 600b being vertically below other portions of the second electronic device 600b. The rotational movement 638 is detected while the background layer 610b associated with the messaging conversation includes a simulation of water. In response to detecting the rotational movement 638 at the second electronic device 600b, the electronic device displays an animation 642 simulating water of the background layer 610b flowing toward the bottom right corner 640 of the second electronic device 600b. However, the animation 642 is played only at the second electronic device 600b where the rotational movement 638 was detected, and not at the first electronic device 600a. Additionally or alternatively, the display of a visual effect and/or animation based on an event and/or inputs detected at a respective electronic optionally depends on the content of the background associated with the background layer (e.g., 610a-610b), as described in more detail below with reference to Figs. 6J-Fig. 6N and/or method 700.

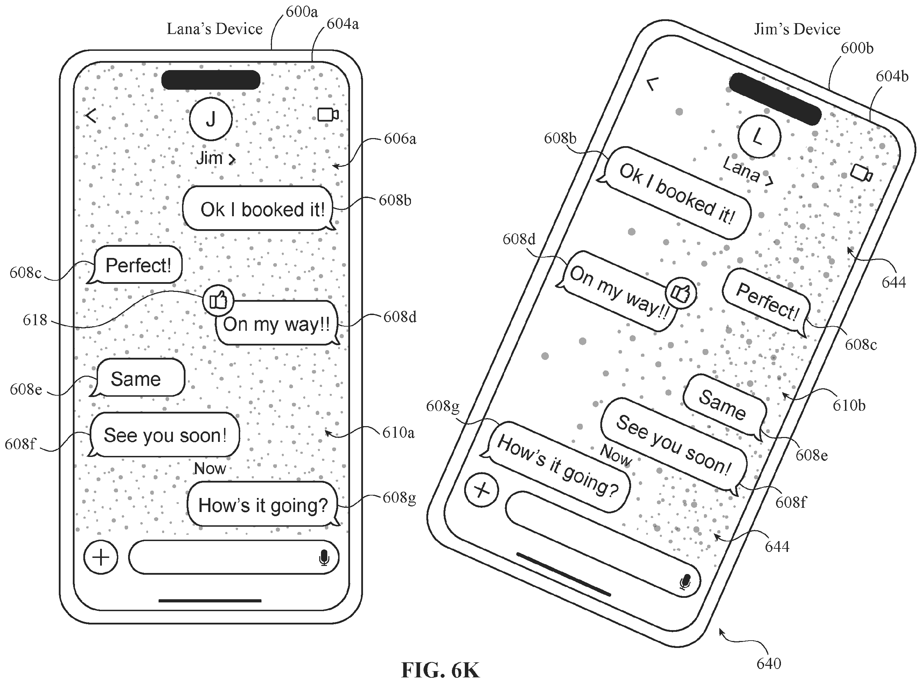

As shown in Fig. 6J, the background layers 610a-610b include content which provides a visual representation of refractive particles (e.g., mirrors, glitter, etc.) in suspension which optionally includes an animation (e.g., baseline animation) which plays without requiring input from a user or detecting an event. The second electronic device 600b detects a rotational movement 638 of the second electronic device 600b (e.g., via accelerometer(s) 168 such as shown in Fig. 1A) such as when Jim is handling the second electronic device 600b in a manner which the second electronic device 600b rotates from an upright orientation as shown in Fig. 6J, to a tilted upright orientation as shown in Fig. 6K with the bottom right corner 640 of the second electronic device 600b being vertically below other portions of the second electronic device 600b. The detected event including the rotation movement 638 is the same as shown in Fig. 6H, however the resulting animation and/or visual effect is different based on the background associated with the background layer 610b.

As shown in Fig. 6K, in response to detecting the rotational movement 638 at the second electronic device 600b, the second electronic device 600b displays an animation 644 which simulates the refractive particles floating toward the right side 646 of the display generation component 604b of the second electronic device 600b. Due to the difference of the content of the background layers 610a-610b shown in Fig. 6H in relation to Fig. 6J, the same rotational input 638 detected in Fig. 6J, as compared to Fig. 6H, results in a different animation being displayed at the same location of the second electronic device 600b. Additionally or alternatively, in some embodiments, while a respective electronic device displays a background layer including a background displaying a representation of refractive and/or reflective particles, when the respective electronic device (e.g., first electronic device 600a, or second electronic device 600b) detects movement of the respective electronic device, the respective electronic device displays an animation which includes changing the background layer (e.g., 610a, and/or 610b) to change a location corresponding to one or more simulated light sources and/or angle of one or more refractive and/or reflective particles in relation to the one or more simulated light sources, based on the detected movement of the respective electronic device. Additionally or alternatively, while displaying content associated with a background layer (e.g., 610a, and/or 610b) including a representation of refractive and/or reflective particles, the respective electronic device optionally displays an animation in relation to the background layer which includes changing the angle of one or more refractive and/or reflective particles in relation to the one or more simulated light sources without detecting an input or event, thus simulating a randomized and/or pseudo-randomized redirection of light from the one or more simulated light sources.

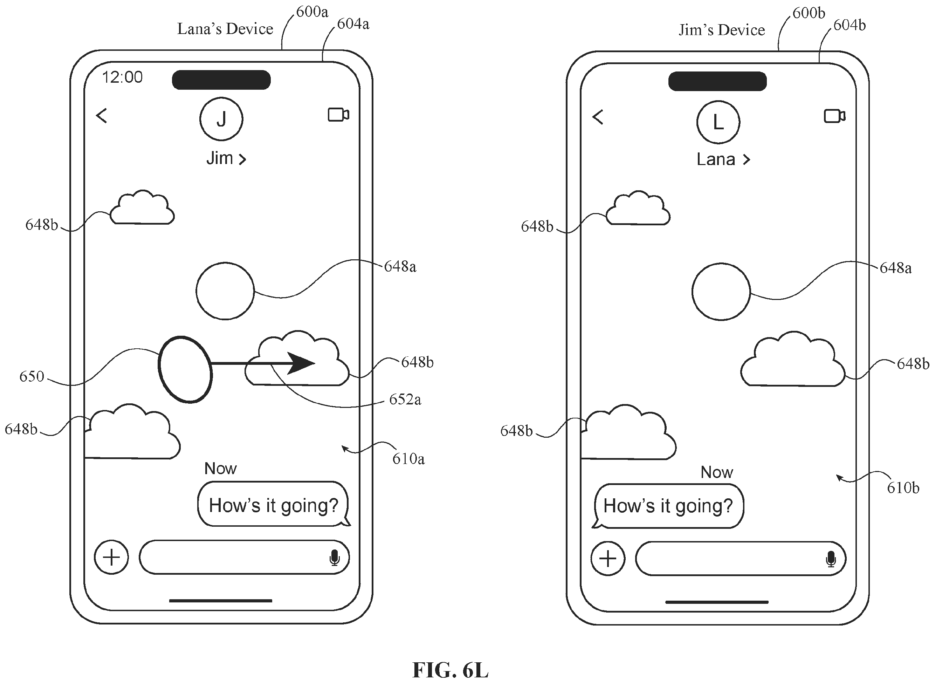

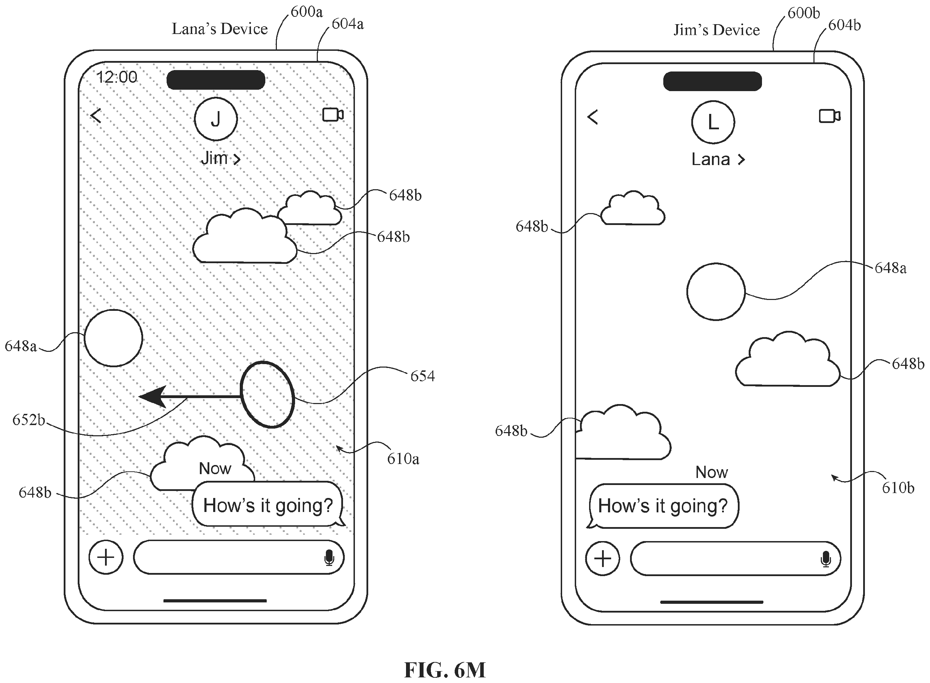

Further examples of inputs resulting in visual effects and/or animations are described in relation to the following figures. As shown in Fig. 6L, the first electronic device 600a and the second electronic device 600b have content displayed associated with their respective background layers 610a-610b which includes content corresponding to a skyscape including a representation of the sun 648a and multiple clouds 648b based on the current time and/or location at the respective electronic devices. As shown in Fig. 6L, the first electronic device 600a detects a touch and swipe input 650 which includes a swipe in a first direction 652a. As related to the skyscape content, the touch and swipe input 650 corresponds to a request to move the representation of skyscape in a manner to simulate sunset wherein the left side of the first electronic device 600a correlates with West, and the right side of the first electronic device 600a correlates with East. In response to detecting the touch and swipe input 650, shown in Fig. 6M for instance, the first electronic device 600a updates the background layer 610a at the first electronic device 600a to display a representation of the sky and clouds at sunset at the first electronic device 600a 6000a while the second electronic device 600b continues to display the skyscape based on the current time and/or location of the second electronic device 600b.

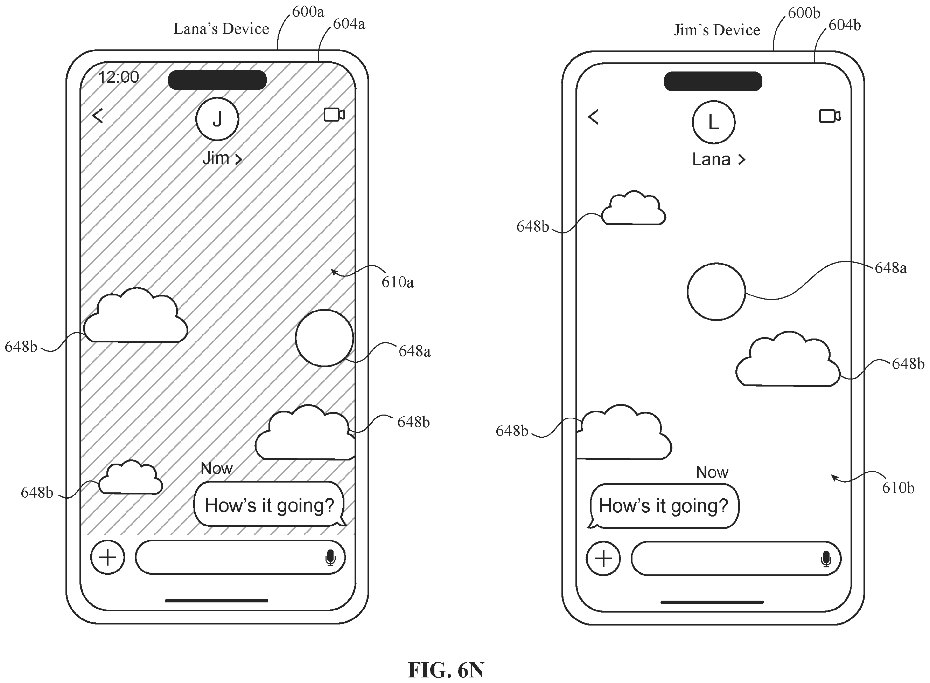

As shown in Fig. 6M, while displaying the representation of the sky and clouds at sunset based on the current time and/or location at the first electronic, the first electronic device 600a detects a second touch and swipe input 654 including a swipe in a second direction 652b, different than the first direction. As related to the skyscape content, the touch and swipe input 654 corresponds to a request to move the representation of skyscape in a manner to simulate sunrise. As shown in Fig. 6N, in response to the touch and swipe input 654, the first electronic device 600a updates the background layer 610a at the first electronic device 600a to display a representation of the sky and clouds at sunrise, while the second electronic device 600b continues to display the skyscape based on the current time and/or location of the second electronic device 600b.

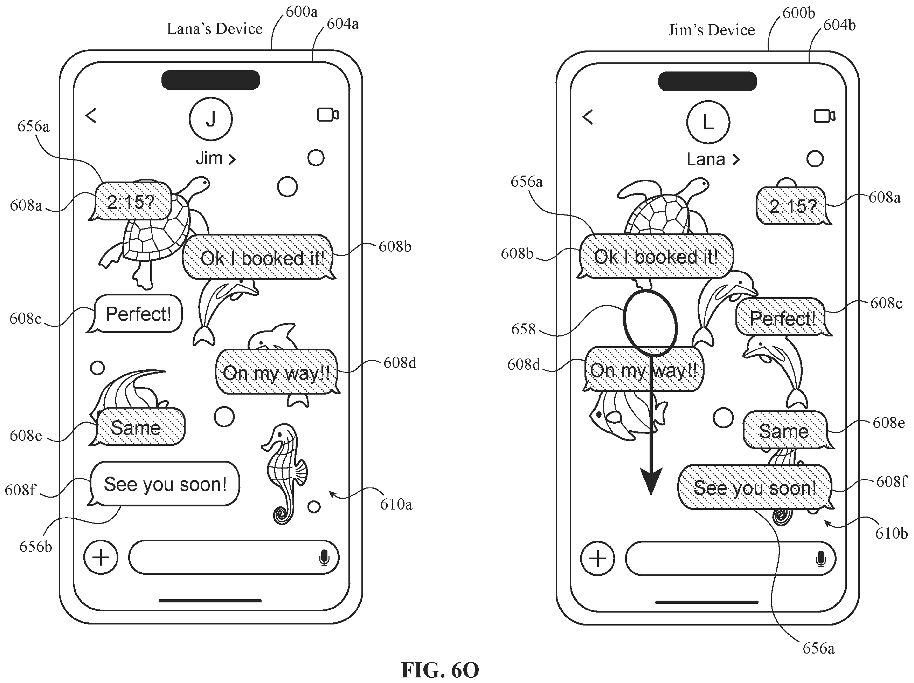

As shown in Fig. 6O, the first electronic device 600a and the second electronic device 600b display a respective background layer (610a-610b) which includes content including one or more marine animals. The respective electronic devices are displaying a messaging user interface (e.g., 606a-606b), the one or more visual representation of messages (e.g., 608a-608e) that have been sent to the messaging conversation are displayed at the respective electronic devices. The visual representations of messages displayed at the respective electronic devices are displayed with varying visual appearances based on the location of the respective message in relation to the background content. As shown in Fig 6O, the one or more messages are displayed with a first visual appearance 656a as shown in relation to visual representation of message 608a at the first electronic device 600a, or a second visual appearance 656b as shown in relation to visual representation of message 608f as shown at the first electronic device 600a. As shown, respective messages are displayed with the first visual appearance 656a when the respective message overlaps with a marine animal, and are displayed with the second visual appearance 656b when not overlapping with a marine animal. As the messages are displayed in various locations within the messaging user interface, the respective electronic device updates the visual appearance of the message. The updating of the visual appearance of the one or more messages is optionally performed for the purposes of visual aesthetics, and/or increasing visible differentiation (e.g., via contrast, brightness, and/or tonal differentiation in relation to the background layer) between respective messages and the background layer (e.g., 610a, and/or 610b). While the messaging conversation is displayed in the messaging user interface 606b at the second electronic device 600b, the second electronic device 600b detects a user input 658 (e.g., touch and drag) corresponding to a request to display older messages which have been sent to the messaging conversation (e.g., by scrolling).

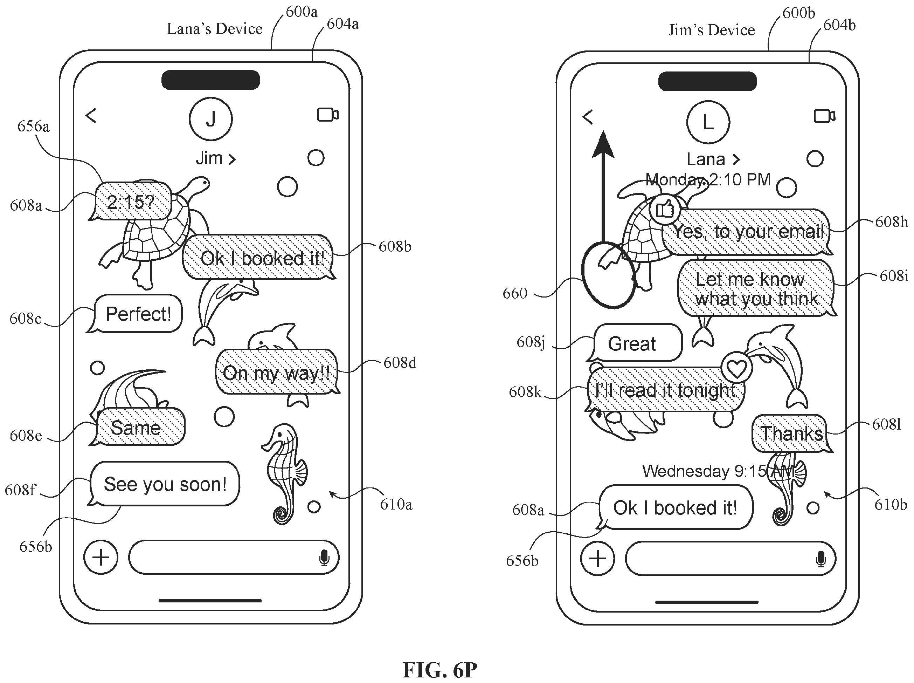

As shown in Fig. 6P, in response to detecting the user input 658 corresponding to a request to display older messages which have been sent to the messaging conversation (e.g., by scrolling), the second electronic device 600b displays visual representation of messages 608a and 608h-608k based on the user input 658. Based on the location of the displayed messages, the second electronic device 600b displays the visual representation of message 608a ("Ok! Booked it!") and message 606i ("Great") with the second visual appearance 656b, and the rest of the displayed messages with the first visual appearance 656a. While displaying the messages in the messaging user interface, the second electronic device 600b detects a user input 660 which corresponds to a request to preview the background layer 610b without displaying messages in the messaging user interface. For instance, the user input 660 corresponding to a request to preview the background optionally includes touch and swipe, and/or a long press to initiate display of a user interface menu. In response to detecting the user input 660, the second electronic device 600b ceases displaying the one or more messages, and optionally provides a visual effect which simulates sliding the displayed messages off the display generation component.

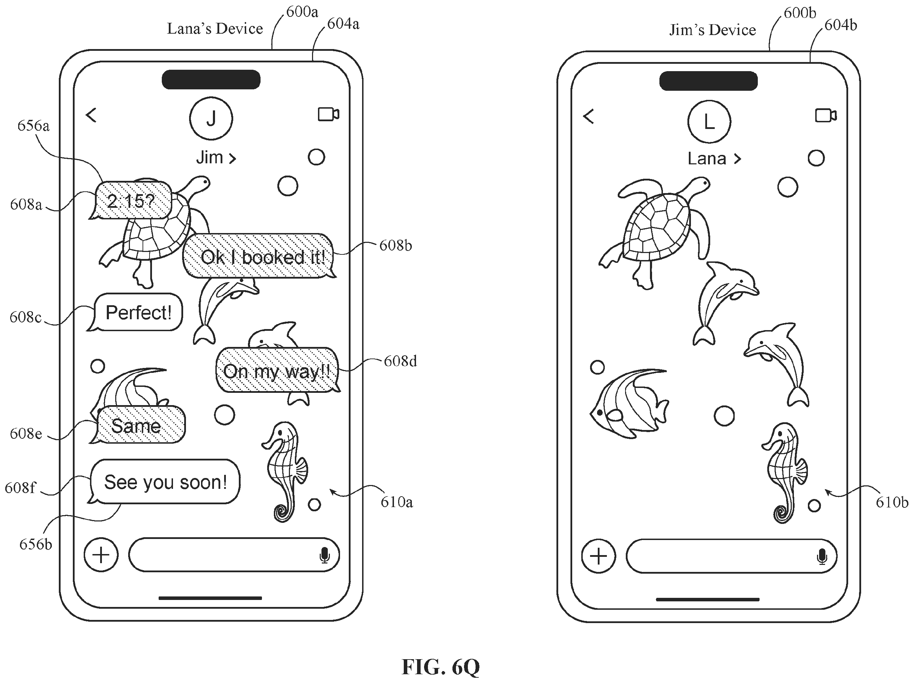

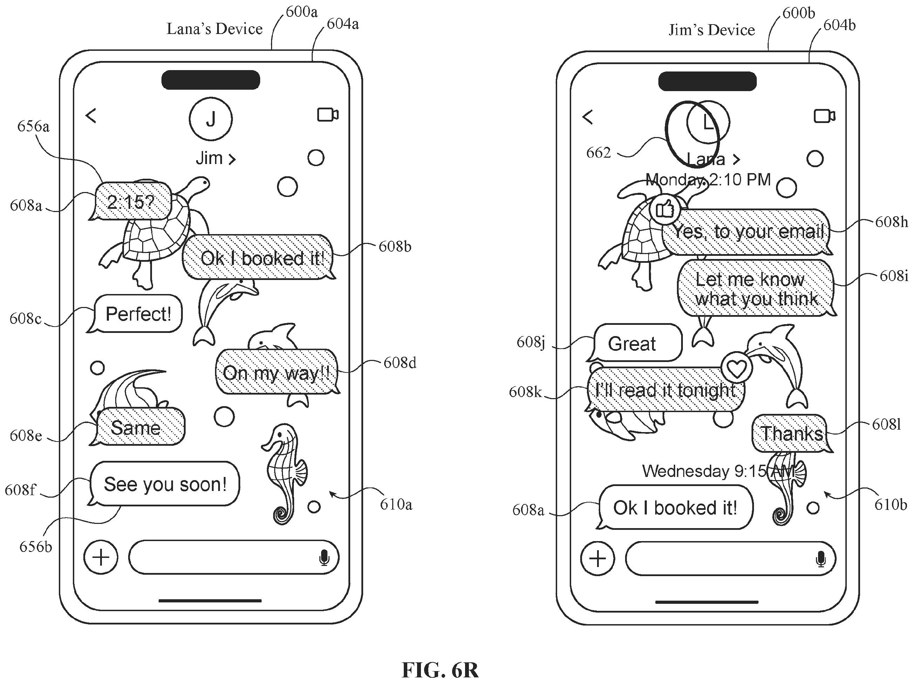

As shown in Fig. 6Q, messages which have been sent to the messaging conversation are no longer displayed at the second electronic device 600b, but are still displayed at the first electronic device 600a. In some embodiments, previewing the background layer 610b by ceasing display of messages which have been sent to the messaging conversation, a user is able to more fully view and/or interact directly with the background layer and associated content without the challenges of disambiguation between inputs directed to one or more messages or directed to background content. After receiving a user input corresponding to a request to redisplay the one or more messages in the messaging user interface, the second electronic device 600b redisplays one or more messages corresponding to the messaging conversation as shown in Fig. 6R.

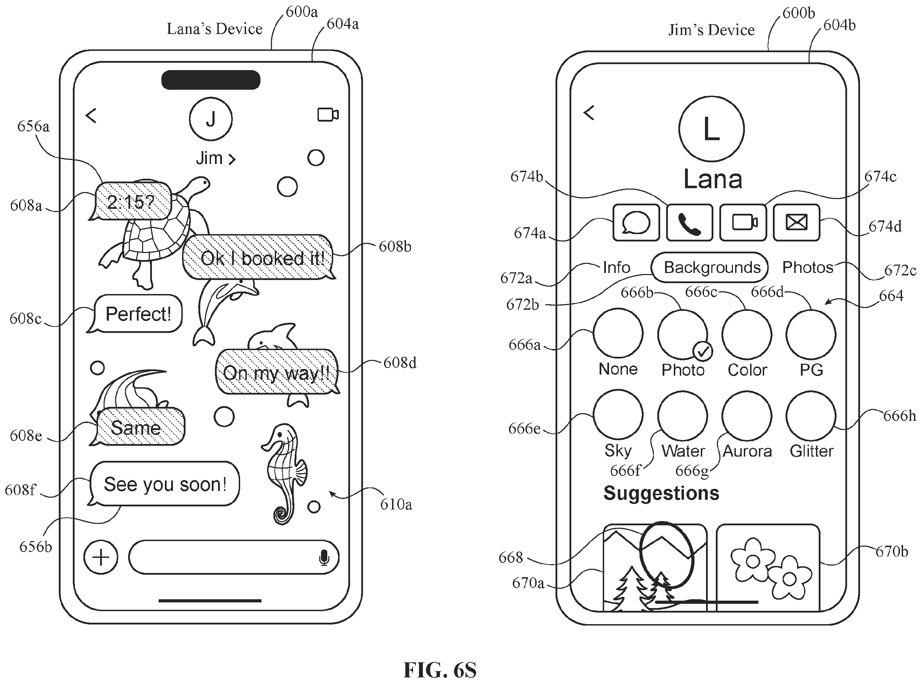

As further shown in Fig. 6R, the first electronic device 600a and the second electronic device 600b are displaying the messaging conversation with the respective backgrounds 610a-610b displaying a background including marine animals while displaying one or more messages in the messaging user interface, the second electronic device 600b detects a first input 662, of a sequence of inputs including the first input 662, which correspond to a request to change the background content associated with the background layers 610a-610b. In response to detecting the first input 662, the second electronic device 600b displays a background user interface 664 (shown in Fig. 6S) which allows a user to select, design, and/or generate (e.g., via ML) background content to send to the messaging conversation to associate with the background layer.

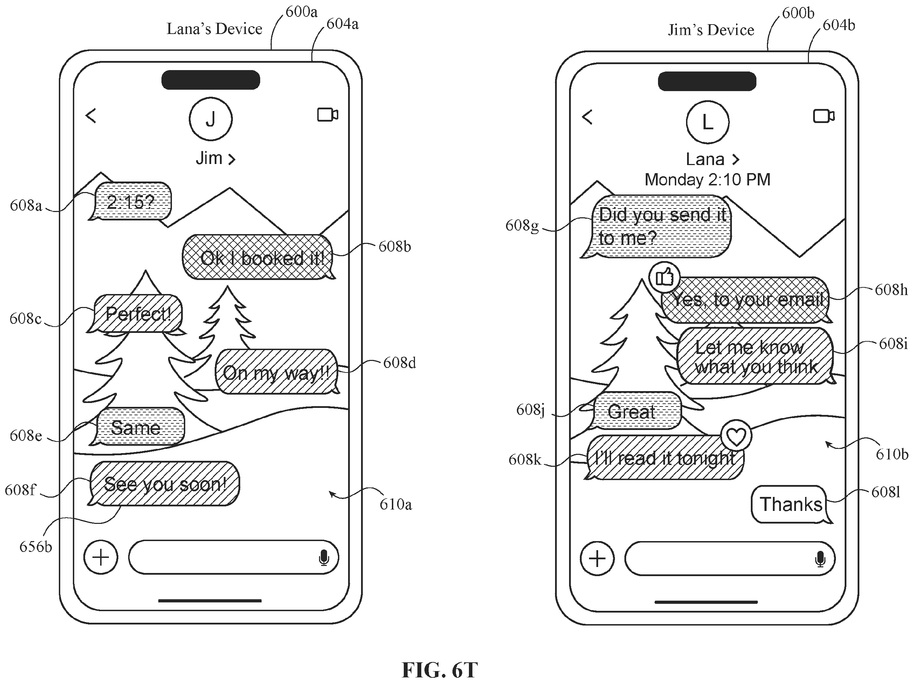

The background user interface 664 as shown in Fig. 6S, includes information corresponding to user (e.g., "Lana") toward which the user input 662 (at Fig. 6R) was directed toward. The background user interface 664 includes selectable user interface elements corresponding to a request to message (e.g., 674a), call (e.g., 674b), video call e.g., 674c) and/or send electronic mail (e.g., 674d) to the selected user. The background user interface further includes selectable user interface elements that corresponds to a request to display information about the user (e.g., 672a), change the background (e.g., 672b), and/or view photos (e.g., which have sent or received to the messaging conversation with the particular user. As shown, the current background content (shown in Fig. 6R) corresponds to a photographic image 666b. While displaying the background user interface, based on a user input directed to user interface element 672b, the second electronic device 600b displays multiple options (e.g., 666a-666h) which are selectable to update the messaging conversation to associate different background content. The updating the background associated with the messaging conversation optionally shares one or more characteristics with updating the background content as described herein in relation to methods 700, 900, and/or 1100. While displaying the background user interface 664, the second electronic device 600b detects an input 668 to a suggested background corresponding to a nature scene with trees and mountains. Either automatically in response to the input 668, or following one or more subsequent inputs, the second electronic device 600b returns to displaying the messaging user interface, as shown in Fig. 6T, where the background content associated with the background layers 610a-610b of the respective electronic devices 600a-600b display the selected nature scene. Each of the messages displayed at the respective devices are now displayed with a visual appearance based on the location of the respective message in relation to the background content associate with the background layers. Accordingly, any message displayed with a visual appearance in a particular location in relation to the background layer (e.g., 610a, and/or 610b) at the first electronic device 600a, shares a visual appearance with any message (optionally different) which is displayed in the same particular location in relation to the background layer at the second electronic device 600b. For instance, visual representation of message 608a at the first electronic device 600a, and visual representation of message 6081 at the second electronic device 600b share a visual appearance, and visual representation of message 608b at the first electronic device 600a and visual representation of message 608g share a visual appearance based on their respective locations in the messaging user interface at the respective electronic devices.

Fig. 7 illustrates a flow diagram illustrating a method in which an electronic device displays one or more visual representations of a background associated with a messaging conversation based on detecting an event which satisfies, or does not satisfy, one or more criteria. The method 700 is optionally performed at first electronic device and/or electronic devices such as device 100, device 300, or device 500 as described above with reference to Figs. 1A-1B, 2-3, 4A-4B and 5A-5H. Some operations in method 700 are, optionally combined and/or order of some operations is, optionally, changed.

The devices, methods, and/or computer-readable storage mediums described below enhance the operability of the device and makes the user-device interface more efficient (e.g., by helping the user to provide proper inputs and reducing user mistakes when operating/interacting with the device) which, additionally, reduces power usage and/or improves battery life of the device by enabling the user to use the device more quickly and efficiently. By displaying a first visual representation of the background layer or a second visual representation of the background layer with different appearances at different times, based on the first event satisfying or satisfying the one or more criteria, helps to avoid image persistence or burn in effects that can occur with some display technologies when the same object is displayed with the same appearance at the same location repeatedly or for a long period of time.

In some embodiments, method 700 is performed at a first electronic device in communication with one or more display generation components and one or more input devices. For example, the first electronic device is a mobile device (e.g., a tablet, a smartphone, a media player, or a wearable device) including wireless communication circuitry, optionally in communication with one or more of a mouse (e.g., external), trackpad (optionally integrated or external), touchpad (optionally integrated or external), remote control device (e.g., external), another mobile device (e.g., separate from the first electronic device), a handheld device (e.g., external), and/or a controller (e.g., external), etc.). In some embodiments, the one or more display generation components include a display integrated with the first electronic device (optionally a touch screen display), external display such as a monitor, projector, television, and/or a hardware component (optionally integrated or external) for projecting a user interface or causing a user interface to be visible to one or more users, etc. In some embodiments, the first electronic device to a first user wherein inputs received at the first electronic device are associated with the first user.

In some embodiments, the first electronic device displays (e.g., method step 702 at Fig. 7), via the one or more display generation components, a messaging user interface associated with a messaging application, including a visual representation of a messaging conversation that includes a first user of the first electronic device and a second user, such as messaging user interface 606a displaying messages 608a through 608f between the user of the first device 600a and the user of the second device 600b as shown in Fig. 6A. In some embodiments, the messaging application is used to send and/or receive messages which include text-based messaging, voice-based messaging, visual media based messaging (e.g., photo, video, animations, and/or Artificial Intelligence (AI) generated media, etc.), and/or social media applications.

In some embodiments, the messaging user interface includes representations of messaging activity (e.g., text-based messages, voice-recorded messages, and/or messages with graphical and/or image content between the first user and a second user). In some embodiments, a messaging application refers to an application running on the first electronic device that displays and/or facilitates messaging activity (e.g., representations of text messages, images, web-links, etc.) which are sent to and received from other users and/or electronic devices. In some embodiments, the representations of messages displayed via the messaging user interface include representations of messages between the first user and a second user. In some embodiments, the representations of messages displayed via the messaging user interface includes representations of messages between the first user and one or more second users (e.g., second user, third user, fourth user, etc.) within the same conversation, wherein one or more or any messages sent or received by each of the first user and/or the one or more second users, are received by one or more or each of the users within the conversation. In some embodiments, the representations of messages displayed via the messaging user interface includes representations of messages between the first electronic device corresponding to the first user and a one or more second electronic devices corresponding to one or more respective second users.

In some embodiments, such as shown in Fig. 6A, the first electronic device (e.g., 600a) displays (e.g., at method step 704 at Fig. 7), via the one or more display generation components (e.g., 604a), a messaging user interface (e.g., 606a) associated with a messaging application, including a first visual representation of a background layer (e.g., 610a). In some embodiments messaging conversation includes a background layer which is selectable by one or more users included in the conversation. In some embodiments, the background layer shares one or more characteristics with the background layer as described herein with respect to method 900, 1100, and/or 1300.The background layer optionally includes an image, video, or other visual content (e.g., one or more images such as photos, AI generated content, video, one or more animations, and/or representation of one or more natural phenomena). In some embodiments, the background layer is at least partially obscured and/or overlaid by one or more representations of one or more messages displayed via the messaging user interface. In some embodiments the one or more representations of the messages are moveable independent of the background layer (e.g., the representations of messages in the messaging conversation move in the user interface, optionally in response to user input such as scrolling input, and the background layer does not move in response to such input). Additionally or alternatively, the background layer is optionally moveable based on the detection of one or more events.

In some embodiments, while displaying the messaging user interface with the first visual representation of the background layer, (and optionally the representations of messages overlaid on the background layer), the first electronic device detects a first event, such as transmitting the first message 608g to the messaging conversation such as shown in relation to Fig. 6B. In some embodiments detecting a first event optionally corresponds to detecting user input at the first electronic device (e.g., touch input, voice input, input from a device in digital communication with the first electronic device (e.g., mouse, keyboard, stylus, etc.), detection of movement of the first electronic device, a change in the environment (e.g., sunrise, sunset, time change, weather change, environmental illumination, sounds, temperature, etc.) of the first electronic device, and/or receiving a communication from a second user (e.g., transmitted to the first electronic device via a second electronic device). Additionally or alternatively the detection of a first event corresponds to receiving an indication from the second electronic device of the second electronic device detecting an event at the second electronic device, such as any of the events described herein as being detected by the first electronic device. Optionally, the second electronic device detecting the first event shares one or more characteristics with detecting a first event at the first electronic device as described herein.

In some embodiments, in response to detecting the first event, in accordance with a determination that the first event satisfies one or more criteria, the first electronic device displays, via the one or more display generation components, a second visual representation of the background layer corresponding to the first event, such as displaying the background layer 610a with visual effect 614c at the first electronic device 600a, and optionally displaying the background layer 610b corresponding to the second electronic device 600a with the same visual effect 614c. For instance, when the background layer includes media which includes an animation, in response to detecting the first event, the first electronic device optionally initiates playing of the animation. In some embodiments, the second visual representation of the background layer includes a predetermined second visual representation (e.g., animation, and/or visual effect) which is displayed in response to detecting the first event. Additionally or alternatively, in some embodiments, the second visual representation of the background layer optionally includes a second visual representation which is based on the first event. In some embodiments, while displaying the second visual representation of the background layer, the first electronic device continues displaying the one or more messages of the messaging conversation overlaid over the background layer having the second visual representation. In some embodiments, the first event corresponds to user input corresponding to a request to initiate one or more operations other than changing the first background layer to a second background layer. In some embodiments, displaying the second visual representation of the background layer optionally includes displaying the first visual representation with one or more visual modifications in response to detecting the first event. Additionally or alternatively, when the first electronic device detects a first event corresponding to one or more inputs with first characteristics, the second visual representation of the background layer includes one or more first visual modifications, and when the first electronic device detects a first event corresponding to one or more inputs with second characteristics, the second visual representation of the background layer includes one or more second visual characteristics, which are different than the first visual characteristics. For instance, a first event corresponding to a touch-and-swipe input optionally results in a different visual representation than a tap input. Additionally or alternatively, when displaying a background which is based on sun tracking and/or moon phase for instance, the environmental change of the time at the geographic location of the first electronic device optionally corresponds to the first event and results in displaying the sun and/or the moon in a portion of the user interface which corresponds to the time of day, and the current location of the sun and/or the moon in relation to the location of the first electronic device. In some embodiments, when displaying a background which corresponds to a simulation of a flowable material (e.g., water, glitter, etc.) the orientation of the first electronic device optionally corresponds to a first event, wherein the change in the orientation of the first electronic device (e.g., as detected by one or more accelerometers) results in displaying the background based on the orientation of the phone wherein the flowable material flows in the direction corresponding the direction of a gravity induced flow. In some embodiments, when the first event is based on a touch input, the magnitude and/or visual effect of the second visual representation is based on the force and/or area of the touch input detected. In some embodiments, the second visual representation of the background layer is based on the type of the user input (e.g., receiving and/or transmitting a message, receiving and/or transmitting a reaction to a message, detecting movement of the messages within the messaging user interface, and/or movement of the first electronic device and/or a second electronic device).

In some embodiments, in response to detecting the first event, in accordance with a determination that the first event does not satisfy the one or more criteria, the first electronic device maintains displaying the first visual representation of the background layer, such as shown with respect to Fig. 6F wherein the second electronic device 600b detects a user input 634 corresponding to scrolling the visual representation of the messages 608b through 608g, but the input is not detected at the first electronic device 600a, resulting in the background layer 610a at the first electronic device being displayed without the visual effect 636 which is displayed at the second electronic device 600b at Fig. 6G. In some embodiments, in response to detecting the first event, when the first event fails to satisfy the one or more first criteria, the electronic device forgoes displaying the second visual representation of the background layer and/or maintains displaying the first visual representation of the background layer. For instance, when the first electronic device detects the first event, and the first event does not include an input, (e.g., touch input, input via a device in digital communication with the electronic device (e.g., keyboard, mouse, stylus, etc.), voice input, gaze, and/or user movement of the electronic device) that corresponds to the initiating an animation of content associated with the background layer, the first electronic device forgoes initiating the animation of the content associated with the background layer. Accordingly, when the first electronic device detects a first event that does not include one or more inputs that satisfy the one or more criteria, the first electronic device optionally continues to display the first visual representation of the background layer. For instance, when the first electronic device detects a first event that corresponds to one or more inputs directed to increasing a volume output level of one or more speakers of the first electronic device, the first electronic device optionally forgoes displaying the second visual representation of the background layer.

In some embodiments, detecting the first event includes receiving an indication of an input (e.g., from the second user) detected at the second electronic device, such as the forementioned user inputs detected at the second electronic device 600b with respect to Fig. 6F-Fig. 6G, and/or as shown with respect to Fig. 6D-Fig. 6E wherein a user input 622 detected at the second electronic device 600b results in displaying a visual effect 626 at the first electronic device 600a and the second electronic device 600b. In some embodiments detecting the first event includes receiving an indication that an input, (e.g., touch input, input via a device in digital communication with the second electronic device (e.g., keyboard, mouse, stylus, etc.), voice input, gaze, and/or user movement of the electronic device) has been detected at a second electronic device. In some embodiments, receiving the indication of the input is received from the second electronic device, and/or via a server (e.g., cloud server, and/or messaging server). For instance, when the first electronic device detects that an event has occurred including a user input at the second electronic device which results in the display of the second visual representation of the background layer via one or more display generation components at the second electronic device, the first electronic device optionally displays the second visual representation of the background layer. In some embodiments, the second visual representation of the background layer as displayed at the first electronic device is the same as the second visual representation of the background layer as displayed at the second electronic device. For example, the first electronic device and second electronic device display an animation of the background layer in a synchronized manner in response to an input detected at the first electronic device or the second electronic device.

In some embodiments, the one or more criteria include a criterion that is satisfied when the first event includes an input directed to the background layer, such as the user input 622 detected directed toward the background layer 610b at the second electronic device 600b in relation to Fig. 6C-Fig. 6D. In some embodiments, the one or more criteria include a criterion that is satisfied when the first event includes an input (e.g., touch input, input via a device in digital communication with the electronic device (e.g., keyboard, mouse, stylus, etc.), voice input, gaze, and/or user movement of the electronic device) that is directed to the background layer at a respective electronic device (e.g., first electronic device, second electronic device, etc.). For instance, when a user taps or taps-and swipes the background layer in a manner to interact with the background layer wherein the inputs to the background layer optionally do not correspond to functionalities corresponding with the messaging user interface. For instance, a tap or double-tap to an area that does not correspond with the one or more messages of the messaging conversation optionally satisfies the one or more criteria. Additionally or alternatively, when the gaze of the user is directed toward the background and not one of the one or more messages of the messaging conversation, the gaze of the user optionally satisfies the one or more criteria. For instance, when the background layer includes background content corresponding to a visual representation of water, and the first electronic device detects a touch input directed to a portion of the visual representation of water, the electronic device optionally displays a second visual representation of visual representation of water including ripples emanating from the portion of the touch event. Additionally or alternatively, in some embodiments, when the input is directed to a portion of the messaging user interface corresponding to composing messages, the first electronic device optionally forgoes displaying the second visual representation of the background layer.

In some embodiments, following displaying the second visual representation of the background layer, the first electronic device determines that one or more second criteria are satisfied (e.g., predetermined time period has elapsed, second visual representation is displayed for a predetermined time period, an animation associated with the second visual representation has concluded), such as detecting that the lapsed amount of time 630 exceeds a predetermined time period 632 as shown in Fig. 6F. In some embodiments, after initiating the display of the second visual representation of the background layer and/or while displaying the second visual representation of the background layer, the first electronic device determines that one or more second criteria are satisfied. The one or more second criteria optionally include a criterion that is satisfied when a first time period (e.g., 5 seconds, 10 seconds, 30 seconds, 60 seconds, and/or more than 60 seconds) has elapsed from a first time corresponding to the first event. In some embodiments, the first time is measured from the initiation displaying the second visual representation of the background layer, or the termination of an animation associated with displaying the second visual representation of the background layer. In some embodiments, in response to determining that the one or more second criteria are satisfied, the first electronic device displays the first visual representation of the background layer, such as the first electronic device 600a ceasing display of the visual effect and/or animation based on a lapsed amount of time 630 exceeding a predetermined time period 632 such as shown in Fig. 6F. In some embodiments, the first visual representation of the background layer corresponds to a still image, and the second visual representation includes an animation. For instance when the first visual representation of the background layer includes a still photo, and the second visual representation includes an associated animation which plays when displaying the second visual representation, after the animation terminates playback, the first electronic device optionally displays the still photo of the first visual representation of the background layer. In some embodiments, the first electronic device plays an animation for a predetermined number of cycles (e.g., 1, 3,5, 10, 20, more than 20) prior to terminating playback of the animation.

In some embodiments, while displaying the first visual representation of the background layer following displaying the second visual representation of the background layer, the first electronic device detects a second event, such as if the second electronic device sent a new message to the messaging conversation as shown in Fig. 6F. In some embodiments, while the first electronic device displays the first visual representation following displaying the first visual representation of the background layer, the first electronic device detects a second event. In some embodiments, the second event shares one or more characteristics with the first event as described herein in relation to methods 700 and/or 900.

In some embodiments, in response to detecting the second event, in accordance with a determination that the second event satisfies the one or more first criteria, the first electronic device displays a third visual representation of the background layer (e.g., the same as the first visual representation of the background layer, different from the second visual representation of the background layer, and/or different than the first visual representation of the background layer), such as in response to detecting that the second electronic device 600b, in relation to Fig. 6F, sends a new message to the messaging conversation, the first electronic device 600a displays the background layer 610a with a visual effect 614c such as displayed in Fig. 6B. In some embodiments, in response to detecting the second event, when the second event satisfies the one or more first criteria, the first electronic device optionally displays a third visual representation of the background layer. In some embodiments, the third visual representation of the background layer is the same as the second visual representation of the background layer, while in some embodiments the third visual representation of the background layer is different than the second visual representation of the background layer. For instance, when the second event corresponds to the same input, same type of input, same portion of the messaging user interface, and/or same portion of the background layer, the third visual representation is optionally the same as the second visual representation. Additionally or alternatively, when the second event corresponds to a different input, different type of input, different portion of the messaging user interface, and/or different portion of the background layer, the third visual representation is optionally different than the second visual representation. In some embodiments, in response to detecting the second event while the second visual representation of the background layer is displayed, and the second event satisfies the one or more first criteria, the first electronic device optionally continues displaying the second visual representation of the background layer. Additionally or alternatively, in response to detecting the second event while the second visual representation of the background layer is displayed, and the second event satisfies the one or more first criteria, the first electronic device optionally ceases displaying the second visual representation of the background layer, and displays the third visual representation of the background layer. In some embodiments, the first visual representation corresponds to a visual representation of the background layer which includes a first still image, the second visual representation of the background layer includes playback of an animation, and the third visual representation of the background layer includes ceasing the animation and reverting to the first visual representation or displaying a second still image, different than the first still image. In some embodiments the first event and/or the second event include a tap-back (e.g., reaction to a message displayed in the messaging user interface, a request to display a keyboard interface (e.g., selection of a portion of the messaging user interface corresponding to composing messages for delivery to the messaging conversation), when a message is sent to the messaging conversation which is associated with a previously displayed message in the messaging conversation, detecting rotation of a respective electronic device about one or more axes, and/or a user input corresponding to a touch-and-drag.

In some embodiments, in response to detecting the second event, in accordance with a determination that the second event does not satisfy the one or more first criteria, the first electronic device forgoes displaying the third visual representation of the background layer, such as a second input corresponding to a touch-and-swipe user input 634 as shown in Fig. 6F, wherein first electronic device 600a continues to display the background layer 610a without the visual effect 636 which is displayed at the second electronic device 600b. In some embodiments, in response to detecting the second event, when the second event fails to satisfy the one or more first criteria, the first electronic device optionally forgoes displaying the third visual representation of the background layer. Additionally or alternatively, in response to detecting the second event while the second visual representation of the background layer is displayed, and the second event fails to satisfy the one or more first criteria, the first electronic device optionally ceases displaying the second visual representation of the background layer, and displays the first visual representation of the background layer. Additionally or alternatively, in response to detecting the second event while the second visual representation of the background layer is displayed, and the second event fails to satisfy the one or more first criteria, the first electronic device optionally continues displaying the second visual representation of the background layer. While the first electronic device is displaying the first visual representation of the background layer or the third visual representation of the background layer, in response to detecting the second event, and the second event does not satisfy the one or more second criteria, the first electronic device maintains display of the first visual representation of the background layer or the third visual representation of the background layer respectively.

In some embodiments, the one or more first criteria include a criterion that is satisfied when the background layer (e.g., an image, an animation, ML generated content) includes content that is configured to change from the first visual representation to the second visual representation in response to the first electronic device detecting one or more events, such as the background layer 610a displayed in relation to Fig. 6A - Fig. 6I which simulates water. In some embodiments, the background layer includes content (e.g., a background associated with the background layer) which is configured to change from a first visual representation to a second visual representation in response to one or more events. In some embodiments, the background layer includes content which is configured to animate in response to certain inputs and/or events which satisfy the one or more first criteria. In some embodiments, the background layer shares one or more characteristics with the background layer as described herein in relation to methods 700, 900, and/or 1100. In some embodiments, the background layer includes an animation, a plurality of images, a video, and/or ML generated media content which is configured to change from a first visual representation to a second visual representation in response to the first electronic device detecting one or more events that satisfy the one or more first criteria. In some embodiments, the background associated with the background layer is static and/or is not configured to animate in response to inputs and/or events which satisfy the one or more first criteria. While displaying the background layer with background content which is not configured to animate and/or visually change in response to inputs and/or events, when the first electronic device detects an input and/or event that satisfies the one or more first criteria, the first electronic device maintains the same visual representation of the background layer as displayed prior to detecting the event and/or input.

In some embodiments, the background layer includes content associated with an animation, such as a background layer (e.g., 610a and/or 610b) simulating refractive particles as shown with respect to Fig. 6J - Fig. 6K. In some embodiments, the background layer includes content which includes an animation. For instance, the background layer optionally includes content which includes a Graphics Interchange Format (GIF) file with an animation, a plurality of still images to create a representation of motion, a video, and/or an ML generated animation.

In some embodiments, displaying the background layer with the second visual representation includes initiating playback of the animation, such as the flow of the refractive particles displayed at the second electronic device 600b at Fig. 6K in response to the rotational movement 638 detected in Fig. 6H. In some embodiments, when the first electronic device displays the background layer with the second visual representation, the first electronic device initiates playback of the animation of the content associated with the background layer. For instance, when the first electronic device detects the first event which satisfies the one or more first criteria while displaying the background layer with a freeze-frame or still image, the electronic device initiates playback of the animation based on detecting the first event. In some embodiments, when the first electronic device detects an event which satisfies the one or more first criteria, the first electronic device plays the animation for a predetermined number of cycles (e.g., 1, 3,5, 10, 20, more than 20), and terminates playback of the animation after playing the animation for the predetermined number of cycles.

In some embodiments, the one or more criteria includes a criterion that is satisfied when the first event includes a movement exceeding a threshold (e.g., detected via one or more gyroscopes, one or more accelerometers, one or more inertial measurement units (IMUs), and/or detected via Global Positioning System (GPS)) of the first electronic device, such as if rotational movement 638 exceeds a rotational threshold in relation to Fig. 6H. In some embodiments the first event corresponds to the first electronic device receiving an indication of movement of a second electronic device associated with the messaging conversation, wherein the movement of the second electronic device exceeds the threshold. In some embodiments, the one or more first criteria include a criterion that is satisfied when the first event includes movement of the first electronic device or the second electronic device. For instance, when the first electronic device detects that either the first event includes shaking of the first electronic device or the second electronic device, the first electronic device displays the second visual representation of the background layer. In some embodiments, the threshold optionally corresponds to a distance (e.g., more than 1cm, more than 5cm, more than 10cm, more than 50cm, or more than 1m), a velocity (e.g., more than 20cm/s, more than 50cm/s, more than 1m/s, more than 5m/s, or more than 10 m/s), and/or duration (e.g., more than 0.25s, more than 0.5s, more than 1s, more than 3s, or more than 10s). In some embodiments, when the detected movement corresponding to the first event is less than the threshold, the first electronic device forgoes displaying the second visual representation of the background layer and/or maintains displaying the first visual representation of the background layer.

In some embodiments, the one or more criteria includes a criterion that is satisfied when the first event includes one or more dynamic inputs (e.g., touch input, input via a device in digital communication with the electronic device (e.g., keyboard, mouse, stylus, etc.), voice input, gaze, and/or user movement of the electronic device), such as user input 622 shown in relation to Fig. 6C - Fig. 6D. In some embodiments, the one or more criteria include a criterion that is satisfied when the first event includes one or more dynamic inputs (e.g., corresponding to an input corresponding to the first user and/or the second user.). A dynamic input optionally includes a selection event followed by a motion associated with the input prior to the termination of the selection event. In some embodiments, a dynamic input corresponds to a touch-and-swipe, repeated touch inputs in rapid succession, and/or shaking of an electronic device). In some embodiments, the dynamic input includes selection via gaze of the user followed by the movement of a hand of a user. In some embodiments, a dynamic input includes a mouse click and drag. In some embodiments, when the detected input corresponding to the first event is not a dynamic input and/or is a static input (e.g., a tap, touch, or click of a mouse), the first electronic device forgoes displaying the second visual representation of the background layer and/or maintains displaying the first visual representation of the background layer.

In some embodiments, the one or more criteria includes a criterion that is satisfied when the first event includes adding a reaction to a first message in the messaging conversation (e.g., corresponding to a user input from the first user and/or the second user), such as user input 616 and resulting visual effect 620 in relation to message 608d displayed at the second electronic device 600b shown in Fig. 6B - Fig. 6C. Adding a reaction to a first message optionally includes responding to the first message with an emoji within a second message which replies directly to the first message, a second message which immediately follows the first message, and/or an emoji which is directly associated with the first message. In some embodiments, a reaction to the first message corresponds to a reacting to a message with an emoji and/or or visual media. In some embodiments, a reaction corresponds to a long-press to a respective message which results in displaying a user interface including one or more options to respond to the respective message with one or more emoji and/or visual media options, wherein selection of an emoji and/or visual media option results in the selected option to be displayed in the messaging user interface overlaid on the respective message.

In some embodiments, following displaying the second visual representation of the background layer, the first electronic device detects that a first amount of time has lapsed (e.g., measured from the first event, measured from the initiation of the display of the second visual representation);

In some embodiments, after displaying the second visual representation of the background layer, the electronic device automatically (e.g., without further user input) determines when to cease displaying the second visual representation of the background layer, revert to displaying the first visual representation of the background layer, and/or display a third visual representation of the background layer.

In some embodiments, following displaying the second visual representation of the background layer, in accordance with a determination that the first amount of time is greater than a first time threshold, the first electronic device displays, via the one or more display generation components, a third visual representation (e.g., optionally the same as the first visual representation) of the background layer, different than the second visual representation of the background layer, such as shown in Fig. 6F wherein the amount of time lapsed 630 following displaying the second electronic visual representation of the background layer exceeds the predetermined time period 632, and the first electronic device 600a and the second electronic device 600b optionally revert to displaying the first visual representation of the respective background layers (e.g., 610a through 610b). The first time threshold optionally corresponds to less than 3 seconds, 3 seconds, 5 seconds, 10 seconds, or more than 10 seconds. In some embodiments, the first time threshold corresponds to the length of an animation associated with the background layer. While displaying the second visual representation of the background layer, and before the first amount of time has lapsed, the first electronic device maintains displaying the second visual representation of the background layer and/or forgoes displaying the third visual representation of the background layer. In some embodiments, in accordance with determining that the first amount of time is greater than the first time threshold, the electronic device ceases displaying the second visual representation of the background layer, and/or displaying a visual representation of the background layer that is different than the second background layer. In some embodiments, when the first electronic device determines that the first amount of time is greater than the first time threshold, the electronic device reverts to displaying the first visual representation of the background layer. Additionally or alternatively, when the first electronic device determines that the first amount of time is greater than the first time threshold, the electronic device optionally displays a third visual representation which is different than the first visual representation and different than the second visual representation.

In some embodiments, while displaying the background layer with first content, the first electronic device detects, via the one or more input devices, a second event. In some embodiments, the second event optionally shares one or more characteristics with the first event as described herein in relation to methods 700, 900, and/or 1100. In some embodiments, the second event includes a request to change the content associated with (e.g., an image included in) the background layer. In some embodiments, in response to detecting the second event, in accordance with a determination that the second event satisfies one or more second criteria, the first electronic device displays, via the one or more display generation components, a first visual representation of the background layer including second content, different from the first content, such as user inputs 662 and 668 detected at the second electronic device 600b as shown in relation to Fig. 6R-Fig. 6S, resulting in a change of the background content associated with the respective background layers 610a-610b at the respective electronic devices 600a-600b. In some embodiments, in response to detecting the second event, when the second event satisfies one or more second criteria, the first electronic device displays a first visual representation of the background layer including the second content, which is optionally different than the first content. In some embodiments, the users participating the messaging conversation are able to select and/or customize content associated with the background layer. Customizing the content corresponding with the background layer optionally shares one or more characteristics with customizing and/or selecting background content as described herein in relation to methods 700, 900, and/or 1100. For instance, when the user changes the content associated with the background layer via the second event, the second content includes elements (e.g., one or more visual characteristics, one or more animations, one or more visual effects, etc.) that are different than the first content. Accordingly, due to the inherent differences between the first content and the second content, displaying the first visual representation of the background layer including the second content optionally differs visually from displaying the first visual representation and/or the second visual representation of the background layer including the first content

In some embodiments, the one or more second criteria includes a criterion that is satisfied when the second event includes one or more inputs (e.g., touch input, input via a device in digital communication with the electronic device (e.g., keyboard, mouse, stylus, etc.), voice input, gaze, and/or user movement of the electronic device) corresponding to a selection of one or more colors, and wherein the second content includes the one or more colors, such as if the user input 668 was directed to user interface element 666c to generate background content including one or more colors. In some embodiments, the one or more second criteria include a criterion that is satisfied when the second event includes a selection of one or more colors for display in association with the background layer. In some embodiments, one or more users participating in the messaging conversation are able to customize and/or select colors associated with the background content associated with the background layer. The selection of one or more colors and/or the updating of the content of the background layer optionally shares one or more characteristics with updating and/or changing the background layer, the background, and/or content associated with the background layer as described herein in relation to methods 700, 900, and/or 1100.

In some embodiments, while not displaying the messaging user interface with the visual representation of the messaging conversation, the first electronic device detects, via the one or more input devices, one or more user inputs (e.g., touch input, input via a device in digital communication with the electronic device (e.g., keyboard, mouse, stylus, etc.), voice input, gaze, and/or user movement of the electronic device) corresponding to a request to display the messaging user interface, such as if prior to displaying the messaging conversation in the messaging user interface 606a as shown in Fig. 6A, the first electronic device was displaying a home screen user interface, prior to receiving a request to display the messaging conversation. For instance, the first electronic device optionally detects the one or more user inputs corresponding to a request to display the messaging user interface while the first electronic device is displaying an alternate user interface of the messaging application, a different messaging conversation user interface in the messaging application, a home screen, a user interface of an application other than the messaging application installed on the first electronic device, and/or a notification displayed over a user interface which does not correspond to the messaging conversation. In some embodiments, while not displaying the messaging user interface with the first visual representation of the background layer, the electronic device detects one or more inputs corresponding to a request to display the messaging user interface, such as a selection of a notification displayed overlaid over a home screen, selection of an icon corresponding to the messaging application from a home screen, and/or selection of a visual element corresponding to the messaging conversation.

In some embodiments, in response to detecting the one or more user inputs corresponding to the request to display the messaging user interface, the first electronic device displays, via the display generation component, the messaging user interface with the visual representation of the messaging conversation and a third visual representation of the background layer (optionally the second visual representation, optionally a different visual representation), including automatically initiating playback of an animation associated with the background layer, such as if in response to a user input corresponding to a request to display the messaging conversation, the first electronic device 600a displays the messaging conversation in the messaging user interface 606a such as shown in Fig. 6A, and when initially displaying the messaging conversation, the first electronic device displays the background layer 610a with an animation corresponding to natural water movements. In some embodiments, in response to detecting the one or more user inputs corresponding to a request to display the messaging conversation, the first electronic device displays the messaging user interface with the visual representation of the messaging conversation, wherein displaying the messaging conversation includes displaying a third visual representation of the background layer including initiating playback of an animation associated with the background layer. For instance, when a video is associated with the background layer, upon receiving the input corresponding to the request to display the messaging conversation, the electronic device displays the messaging conversation and initiates playback, optionally without further user input, of the video associated with the background layer.

In some embodiments, while displaying the messaging user interface including the visual representation of the messaging conversation with the third visual representation of the background layer, and during the playback of the animation, the first electronic device detects that the animation associated with the background layer has terminated, such as if the initial displaying of the messaging conversation in the messaging user interface 606a at the first electronic device as shown in Fig. 6A included displaying an animation having an end (e.g., does not continue in perpetuity).

In some embodiments, in response to detecting that the animation has terminated, the electronic device ceases displaying the third visual representation of the background layer with playback of the animation, and displaying the first visual representation (e.g., non-animated and/or still image) of the background layer, such as if an animation associated with the background layer 610a at the first electronic device as shown in Fig. 6A, has terminated and the first electronic device is displaying the first visual representation of the background layer 610a. In some embodiments, when the first electronic device detects that the animation has terminated, the electronic device ceases displaying the third visual representation of the background layer, including ceasing display of the animation associated with the background layer, and displays the first visual representation of the background layer. In some embodiments, in response to detecting that the animation has terminated, ceasing display of the animation associated with the background layer, and displaying the first visual representation of the background layer is performed without further user input (e.g., automatically). In some embodiments, the animation terminates based on a predetermined length of time associated with the animation, and/or the completion of a predetermined number of cycles (e.g., 1, 2, 3, etc.) of playback of the animation.

In some embodiments, displaying the second visual representation of the background layer corresponding to the first event includes, in accordance with a determination that displaying the background layer includes displaying, via the one or more display generation components, first background layer content displaying the first background layer including content with a first visual effect, such as shown with respect to Fig. 6H wherein the second electronic device 600b detects a rotational input 638 which results in an animation 642 (at Fig, 6I) simulating water of the background layer 610b flowing toward the bottom right corner 640 of the second electronic device 600b. In some embodiments, the one or more visual representations of a background layer (e.g., first, second, third, etc.) is dependent upon the content associated with the background layer wherein different content optionally results in different visual effects that are associated with certain content. Accordingly, when the first electronic device displays the background layer, with associated first background layer content, displaying the second visual representation of the background layer includes displaying the background layer with a first visual effect.

In some embodiments, displaying the second visual representation of the background layer corresponding to the first event includes, in accordance with a determination that displaying the background layer includes displaying, via the one or more display generation components, second background layer content, displaying the second background layer content with a second visual effect, different than the first visual effect, such as shown with respect to Fig. 6K wherein the second electronic device 600b detects a rotational input 638 which results in an animation 644 (at Fig, 6K) which results in an animation 642 (at Fig, 6I) simulating water of the background layer 610b flowing toward the bottom right corner 640 of the second electronic device 600b. In some embodiments, when displaying the background layer with second background layer content, displaying the second visual representation of the includes displaying the background layer with a second visual effect. Additionally or alternatively, in some embodiments one or more visual effects are independent of the background layer content associated with the background layer wherein the visual effect applied when displaying the background layer with associated first background layer content or second background layer content is the same. Examples of visual effects optionally correspond to movement of water, movement of atmospheric elements (e.g., clouds), movement of atmospheric phenomena (e.g., aurora borealis), movement of celestial bodies, movement of reflective elements (e.g., glitter), movement of ML generated visual effects and/or color animations. In some embodiments, different backgrounds associated with the background layer will react differently to the same input based on the context, predetermined visual effects, predetermined animations, and/or ML generated visual effects corresponding to a particular background. For instance, a tap input optionally results in a simulation of water ripples when the background layer includes a background including a visual representation of water, while a tap input to a cloud in a background layer corresponding to a sky-scape optionally results in the cloud changing form and/or producing a visual representation of rain. In some embodiments, the background content includes a visual representation of water, a visual representation of one or more atmospheric elements, a visual representation of one or more clouds, a visual representation of one or more solar phenomena, a visual representation of one or more atmospheric phenomena, a visual representation of one or more celestial bodies, a visual representation of one or more reflective elements, and/or one or more color gradients.

In some embodiments, displaying the messaging user interface with the first visual representation of the background layer includes displaying a representation of a first message in a first location relative to the first visual representation of the background layer that obscures at least a portion of the first visual representation of the background layer, such as shown in the messaging user interface 610a corresponding to the first electronic devices 600a in relation to Fig. 6O, wherein the visual representations of message 608a through 608f obscure portions of the background layer 610a which includes depictions of marine animals.

In some embodiments, while the first electronic device displays the first message in the first location, the first electronic device displays the representation of the first message with a first visual characteristic at a first level corresponding to the first location in relation to the first visual representation of the background layer, such as when a message (e.g., message 608a) obscures the depiction of a turtle corresponding to the background layer 610a, the message is displayed with a first visual appearance 656a, in relation to Fig. 6O. While displaying the messaging conversation with the representation of the first message displayed in the first location relative to the first visual representation of the background layer, wherein the representation of the first message obscures a portion of the first visual representation of the background layer corresponding to the first location the first electronic device displays the representation of the first message with a visual characteristic having a first level. The first level of the visual characteristic is optionally based on the level of the visual characteristic in the first location of the first visual representation of the background layer. In some embodiments, the first level of the visual characteristic is configured to increase visibility of the representation of the first message relative to the first visual representation of the background layer. The visual characteristic optionally corresponds to color, tone, brightness, saturation, concentration, opacity, and/or contrast. For instance, when the first visual representation of the background layer in the first location is black, the representation of the first message is displayed with a contrasting color such as white, yellow, and/or a desaturated color tone such as pink, light blue, light green, or other contrasting color.

In some embodiments, in accordance with a determination that the first event satisfies one or more second criteria, including a criterion that is satisfied when the first event includes one or more inputs corresponding to a request to move the visual representation of first message from the first location to a second location, relative to the first visual representation of the background layer, different than the first location, such as, based on user input 658, the movement of message 608a, displayed in the messaging user interface 610b at the second electronic device 600b from a first location with a first visual appearance 656a, as shown in Fig. 6O, to a second location as shown in Fig. 6P.In some embodiments, while the first electronic device displays the first message in the second location relative to the first visual representation of the background layer with the visual characteristic having a second level, different from the first level, such as shown in relation to message 608a in the second location in Fig. 6P, which does not obscure any marine animals and accordingly is displayed with a second visual appearance 656b. In some embodiments, the first user input corresponds with a request to move the visual representation of representation of the first message to a second location relative to the first visual representation of the background layer, different than the first location, which satisfies one or more first criteria. In response to detecting the first user input, the first electronic device moves the visual representation of representation of the first message to the second location relative to the first visual representation of the background layer, and displays the visual representation of representation of the first message with the visual characteristic having a second level, different than the first level. For example, the first input is a scroll input including a touch and swipe such as with a finger on a touch sensitive surface, a click and drag with a digitally connected input device such as a mouse, and/or a gaze or gesture based selection followed by a request to move the visual representation of representation of the first message such as with a Head Mounted Device (HMD) displaying a three-dimensional environment. Accordingly, when the first electronic device detects a request to move the visual representation of representation of the first message relative the first visual representation of the background layer, the first electronic device optionally updates the level of the visual characteristic to increase visibility of the visual representation of the first message in the second location relative to the second location of the first visual representation of the background layer. In some embodiments, when the first visual representation of the background layer in the second location shares one or more characteristics with the first visual representation of the background layer in the first location, the first electronic device optionally displays the visual representation of the first message in the second location with the second level of the visual characteristic being the same as the first level of the visual characteristic. Additionally or alternatively, when the first input corresponds with a request to move, modify, and/or visually alter (e.g., via animation, visual effect, or image change) the first visual representation of the background layer, and the visual representation of the first message remains in the first location, wherein the one or more visual characteristics of the first location changes, the first electronic device optionally updates the visual characteristic of the visual representation of the first message in the first location to a third level, different than the first visual characteristic. In some embodiments, the first visual characteristic corresponds to the color of the visual representation of the first message and/or the first visual representation of the background layer. In some embodiments, the first visual characteristic corresponds to the opacity of the visual representation of the first message and/or the first visual representation of the background layer. In some embodiments, the first visual characteristic corresponds to a blurring visual effect of the visual representation of the first message and/or the first visual representation of the background layer. In some embodiments, the first visual characteristic corresponds to the brightness level of the visual representation of the first message and/or the first visual representation of the background layer.

In some embodiments, when the first electronic device detects a second event that satisfies one or more second criteria, including a criterion that is satisfied when the second event includes one or more inputs requesting to hide (e.g., cease displaying, minimize, dock, etc.) the conversation, the electronic device hides the conversation and continues displaying the first visual representation of the background layer with the first visual representation, second visual representation, and/or the visual representation that is currently displayed. In some embodiments, when the conversation is shown, the first visual representation of the background layer is displayed with a first level of visual prominence (e.g., with a blurring effect), and when the messaging conversation is hidden, the first visual representation of the background layer is displayed with a second level of visual prominence (e.g., without a blurring effect). In some embodiments, when the conversation is hidden at the first electronic device, the second electronic device optionally continues displaying the conversation, without hiding the messaging conversation. In some embodiments, when the messaging conversation is hidden based on the second event, the electronic device hides (e.g., ceases displaying, minimizes, and/or docks) the keyboard as well. In some embodiments, when the second event satisfies the one or more second criteria, the first electronic device displays a visual representation of a messaging conversation without textual content (e.g., generic messaging conversation, and/or visual representation of the messaging conversation without textual content) overlaid over the first visual representation of the background layer. In some embodiments, the one or more second criteria include criterion that is based on the time of day at the first electronic device such that the level of the visual characteristic (e.g., first level, second level, etc.) is based on the time of day and/or phase of the sun and/or moon at the location associated with the first electronic device. In some embodiments, the first level and the second level of the visual characteristic is based on the visual characteristic of the first visual representation of the background layer in the first location and the second location, wherein the visual representation of the first message is optionally determined to visually differentiate the visual representation of the first message from the first visual representation of the background layer based on the location of the visual representation of the first message relative to the first visual representation of the background layer.

It should be understood that the particular order in which the operations in Fig. 7 have been described is merely exemplary and is not intended to indicate that the described order is the only order in which the operations could be performed. One of ordinary skill in the art would recognize various ways to reorder the operations described herein. Additionally, it should be noted that details of other processes described herein with respect to other methods described herein (e.g., methods 900, and/or 1100) are also applicable in an analogous manner to method 700 described above with respect to Fig. 7. For example, displaying one or more visual representations of a background layer based on a detected event in view of one or more first criteria described above with reference to method 700 optionally has one or more of the characteristics of displaying one or more visual representations of a background layer, and/or generating a background based on the contents of the messaging conversation described herein with reference to other methods described herein (e.g., methods 900, and/or 1100). For brevity, these details are not repeated here.

The operations in the information processing methods described above are, optionally, implemented by running one or more functional modules in an information processing apparatus such as general purpose processors (e.g., a as described with respect to Figs. 1A-1B, 3, 5A-5H) or application specific chips. Further, the operations described above with reference to Fig. 7 are, optionally, implemented by components depicted in Figs. 1A-1B. For example, displaying operations 702, and 706, and detecting operation 704, are, optionally, implemented by event sorter 170, event recognizer 180, and event handler 190. When a respective predefined event or sub-event is detected, event recognizer 180 activates an event handler 190 associated with the detection of the event or sub-event. Event handler 190 optionally utilizes or calls data updater 176 or object updater 177 to update the application internal state 192. In some embodiments, event handler 190 accesses a respective GUI updater 178 to update what is displayed by the application. Similarly, it would be clear to a person having ordinary skill in the art how other processes can be implemented based on the components depicted in Figs. 1A-1B.

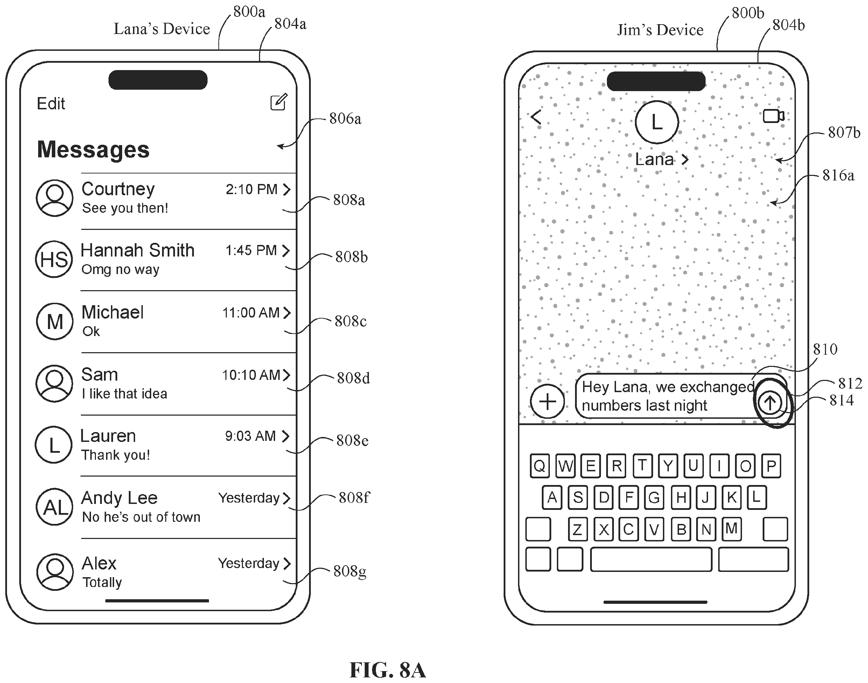

Fig. 8A-Fig. 8K illustrate exemplary behaviors, based on one or more criteria, of respective electronic devices participating in a messaging conversation in relation to the display, change, and/or transmittal of a background while participating in and/or displaying a messaging conversation via a messaging application.

The embodiments in these figures are used to illustrate the processes described below, including the processes described in Fig. 9 of how user interactions and/or events detected at respective electronic devices result in the display of one or more backgrounds associated with the messaging conversation. Although Figs. 8A-8K illustrate various examples of ways an electronic device is able to perform the processes described below with respect to Fig. 9, it should be understood that these examples are not meant to be limiting, and the electronic device is able to perform one or more processes described below with reference to Fig. 9 in ways not expressly described with reference to Figs. 8A-8K. In some embodiments, while the methods are described in a context for displaying one or more backgrounds associated with a messaging conversation and/or messaging application, the context should be seen as exemplary, and should not be viewed as limiting to the disclosure. In some embodiments, the methods and processes described herein can be applied in multiple contexts where the display of one or more backgrounds, one or more background layers, one or more messaging conversations, one or more visual effects based on user interaction which optionally differ and/or share one or more characteristics with various embodiments is desired.

As shown in Fig. 8A, a first electronic device 800a displays, via display generation component 804a, a first user interface 806a which includes a visual representation 808a-808g of one or more messaging conversations, which a first user ("Lana") of the first electronic device 800a is included in. The electronic devices (e.g., 800a, and/or 800b), optionally correspond to one or more electronic devices 500 as described herein. The display generation components (e.g., 804a, and/or 804b), optionally correspond to one or more display generation components 504 as described herein. Detecting user input directed to any one visual representation of a messaging conversation while displaying the first user interface 806a corresponds to a request to display the corresponding messaging conversation. For instance, a user input corresponding to selection to the visual representation of the messaging conversation 808c with Michael wherein the most recent message sent to the messaging conversation was "Ok," results in the first electronic device 800a displaying the messaging conversation via a messaging conversation user interface.

As shown in Fig. 8A, while the first electronic device 800a is displaying the first user interface 806a with the visual representation of multiple messaging conversations, the second electronic device 800b, displays a second user interface 807b including a previously composed message is displayed in a portion of the messaging user interface which corresponds to a field for sending messages to a message conversation. While displaying a second user interface 807b, the second electronic device 800b detects a user input 812 (e.g., from a second user ("Jim")) corresponding to a selection of a user interface element 814 which corresponds to a request to transmit a message to a messaging conversation. The messaging user interface shares one or more characteristics with the messaging user interface as described herein in relation to methods 700, 900, and/or 1100. In the present case, Jim is drafting a first message 810 to Lana. While Jim is drafting the message to send to Lana, Jim's messaging conversation includes a first background 816a associated with the drafted first message 810. The first background 816a as shown includes a representation simulating reflective, multichromatic, and/or refractory particles such as glitter interacting with one or more simulated light sources. When the first message 810 is transmitted to initiate the messaging conversation with Lana, the first background 816a is associated with the first message 810 and with the resulting messaging conversation.

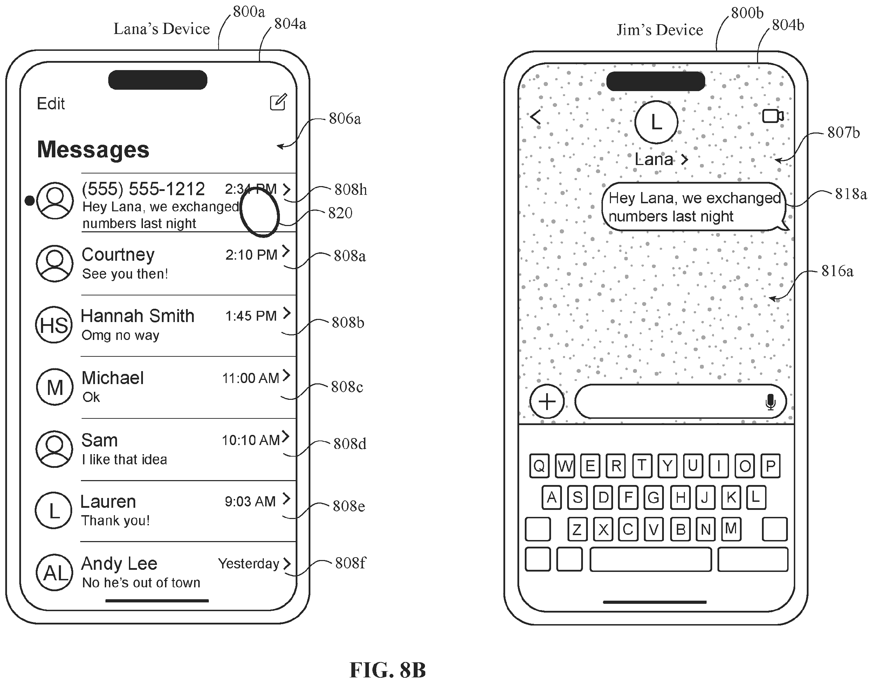

As shown in Fig. 8B, following the user input 812 directed to the user interface element 814 (at Fig. 8A), the second electronic device 800b displays the first message 818a in the second user interface 807b. Concurrently, the first electronic device 800a updates the first user interface 806a to include displaying a visual representation 808h of the messaging conversation created by the first message sent via the second electronic device 800b. While displaying the visual representation 808h of the messaging conversation, the first electronic device 800a detects a user input 820 selecting the visual representation 808h of the messaging conversation which corresponds to a request to display the messaging conversation a second user interface.

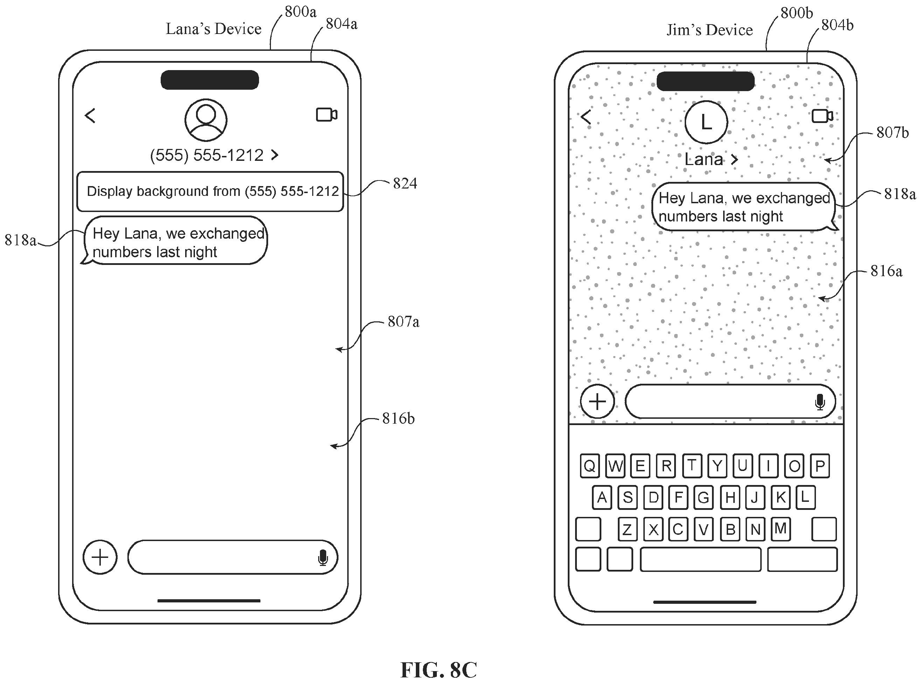

As shown in Fig. 8C, the first electronic device 800a displays the second user interface 807a, similar to the second user interface 807b displayed at the second electronic device 800b corresponding to the messaging conversation in response to detecting the input illustrated in Fig. 8B. When displaying the second user interface 807a at the first electronic device 800a, prior to satisfying one or more criteria (e.g., based on Jim's status as a contact in relation to the first electronic device 800a) messaging user interface does not display the first background 816a which is associated with the messaging conversation while the one or more criteria are satisfied. Scenarios which optionally result in the one or more criteria being satisfied include those such as Jim not being a saved contact in the first electronic device 800a, the background including sensitive content, the filename associated with the background including an indication that the background may include sensitive content, and/or local settings at the first electronic device 800a as described in more detail with reference to method 900. In the provided scenario, the first electronic device 800a does not have Jim as a saved contact (e.g., via a contacts application saved on the first electronic device 800a which is referenced by the messaging application).Accordingly, when displaying the messaging conversation via the second user interface 807a, the messaging conversation is displayed with a second background 816b (e.g., safe background, default background, locally selected background, and/or predetermined background) which includes a blank background in the exemplary illustration. The second background is optionally based on a default and/or developer determined background, which is displayed when the contact, messaging conversation, and/or background content is determined to be unsafe and/or untrusted. While displaying the second background 816b, the first electronic device 800a also displays a selectable user interface element 824 which, when selected, corresponds to a request to display the background which is currently associated with the messaging conversation.

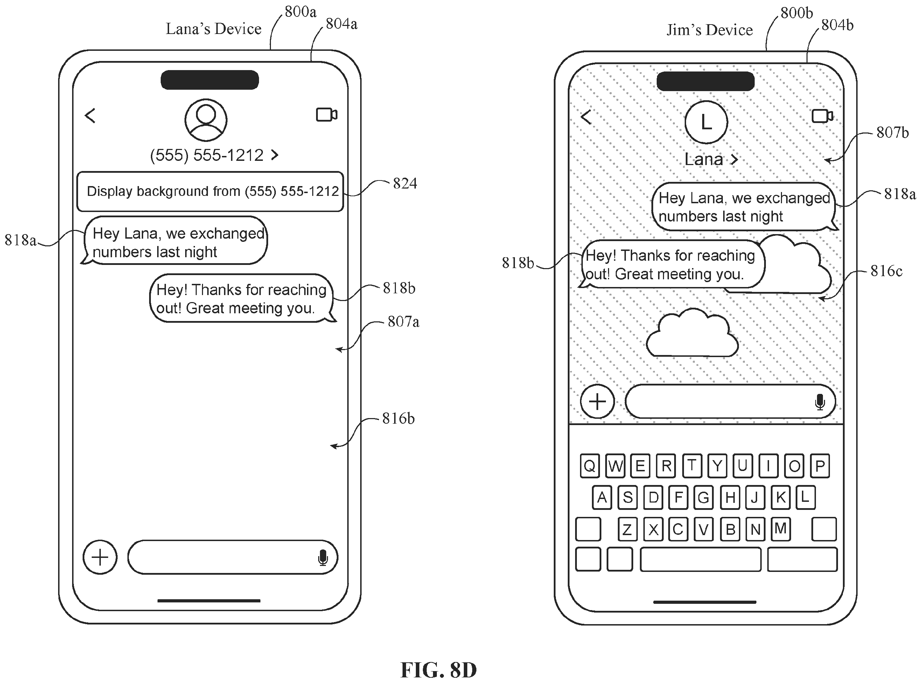

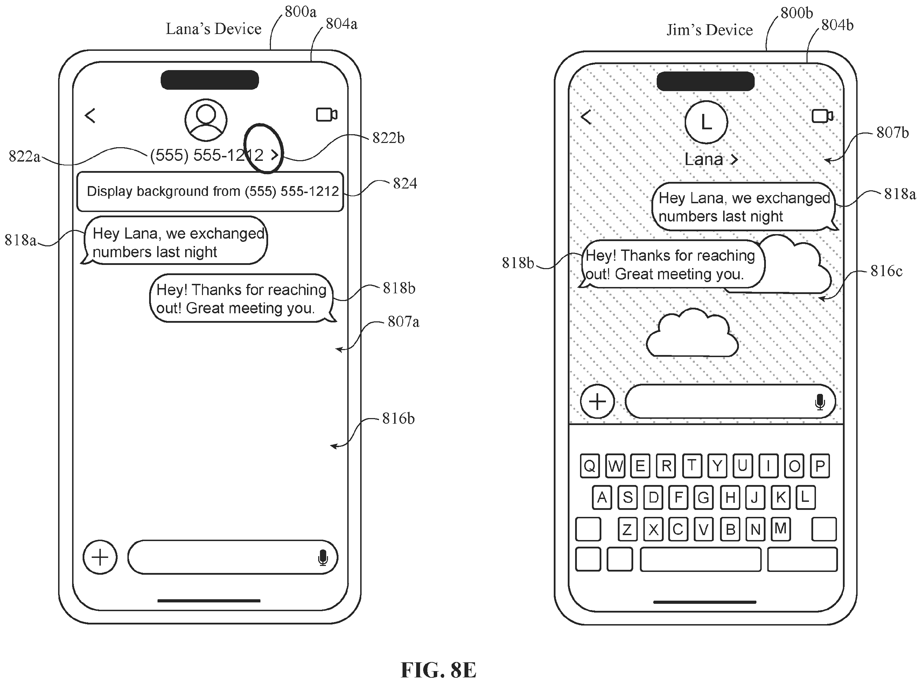

As shown in Fig. 8D, Lana has responded to the first message 818a with a second message 818b. According to the illustrated scenario, although a second message 818b is sent in response to the first message 818a via the first electronic device 800a, the first electronic device 800a continues displaying the second background 816b because the one or more criteria remain unsatisfied. However, in some embodiments, replying to first message with a second message (e.g., 818b) optionally satisfies the one or more criteria and results in the first electronic device 800a automatically displaying the background associated with the messaging conversation without further user input. While the first electronic device 800a displays the messaging conversation with the second background 816b, the second electronic device 800b has updated the background content to display a third background 816c associated with messaging conversation. Changing the background content optionally shares one or more characteristics with changing the background content as described herein with respect to method 1100. As shown in Fig. 8D and Fig. 8E, based on "Jim" being an unknown contact (e.g., not recorded in Lana's address book) at the first electronic device 800a, the change of the background associated with the messaging conversation does not result in the change of the background (e.g., second background 816b) displayed at the first electronic device 800a, such as described in relation to method 900 herein.

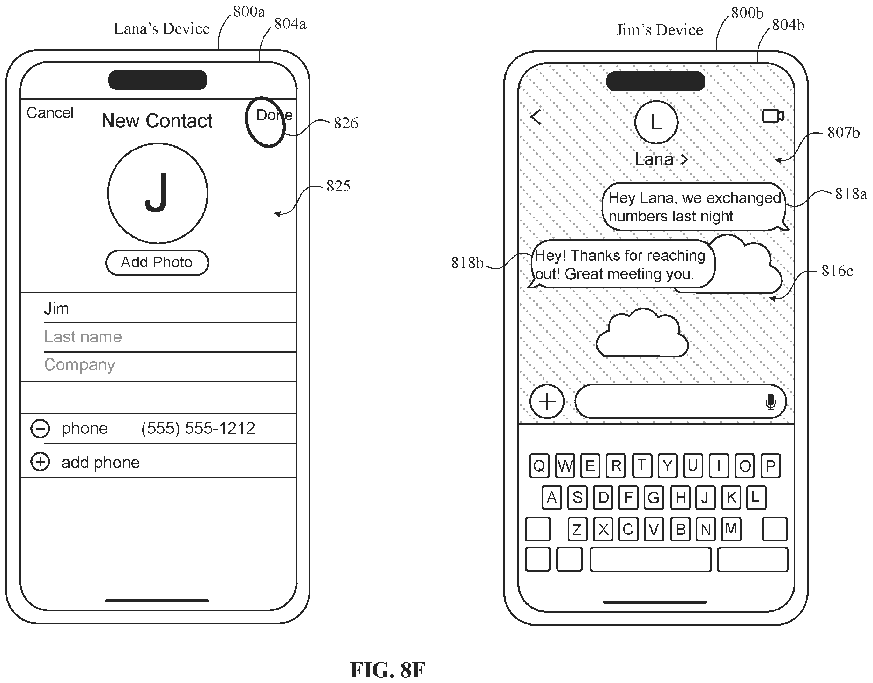

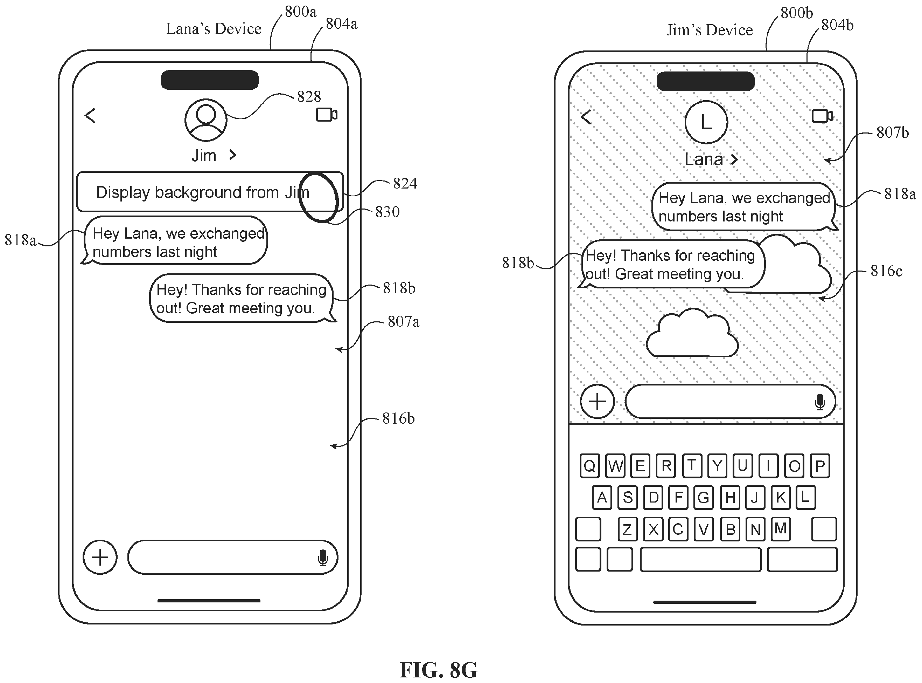

As further shown in Fig. 8E, the first electronic device 800a detects one or more inputs, including a user input 822b of identifying information 822a (e.g., phone number) corresponding to the second electronic device 800b. The one or more inputs correspond to a request to add Jim as a contact via a contacts application 825 installed on the first electronic device 800a, shown at Fig. 8F. For example, after detecting the user input 822b, the first electronic device 800a displays a user interface such as the background user interface 664 as shown in Fig. 6S. Further user input directed to user interface element 672a (again referencing Fig. 6S), results in displaying subsequent user interfaces including an option to record the identifying information 822 (e.g., phone number corresponding to the second electronic device 800b at Fig. 8E) corresponding to the second electronic device 800b at the first electronic device 800a. As shown in Fig. 8F, multiple fields are optionally displayed in the contacts application 825 which include contact fields such as corresponding to first name, last name, company, one or more phone numbers, and/or additional contact fields. As shown in Fig. 8F, the first electronic device 800a has detected user input (e.g., via a keyboard user interface) resulting in "Jim" to be added in a first name field. The first electronic device 800a subsequently detects a user input 826 which corresponds to a request to save Jim as a known contact via the contacts application. In response to saving Jim as a contact at the first electronic device 800a, the first electronic device 800a reverts to displaying the second user interface 807a as shown in Fig. 8G. As shown, Jim has been saved as a contact of the first electronic device 800a and is recognized in the messaging conversation as a contact as indicated by the user identity 828 associated with the messaging conversation. In some embodiments, the saving of a contact as a known contact at a respective electronic device results in the one or more criteria no longer being satisfied and accordingly (e.g., automatically) displaying the background currently associated with the messaging conversation. In the shown embodiment of Fig. 8G however, when the one or more criteria are previously satisfied, the saving of the contact does not result in the first electronic device 800a displaying the third background 816c as associated with messaging conversation, and the first electronic device 800a continues to display the second background 816b. While Jim is a saved contact at the first electronic device 800a, the first electronic device 800a continues to display the user interface element 824 that is selectable to display the background currently associated with the messaging conversation in the second user interface 807a. While displaying the user interface element 824, the first electronic device 800a detects an input 830 corresponding to a user input directed toward the user interface element 824.

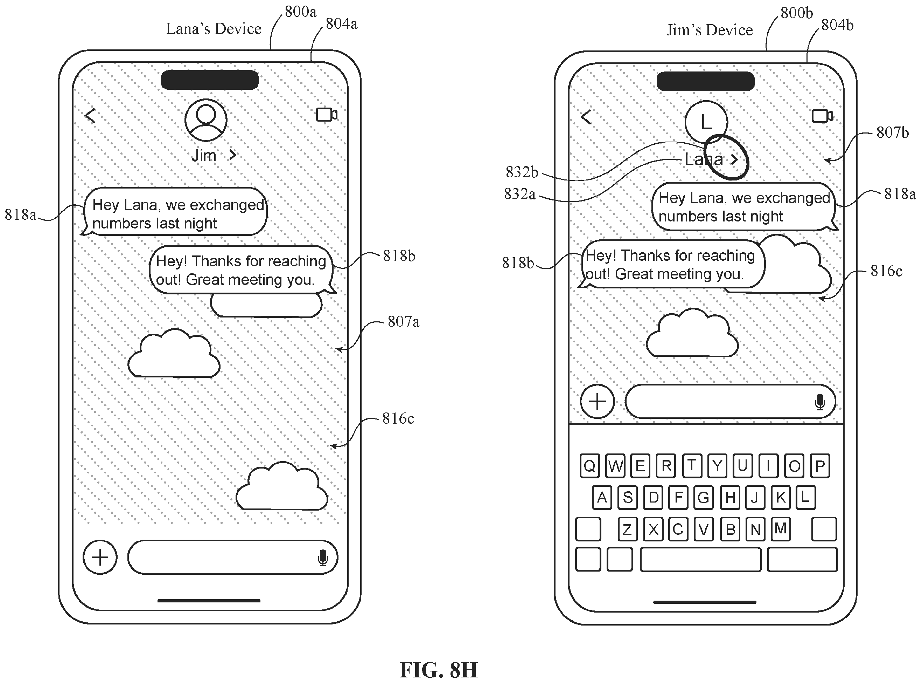

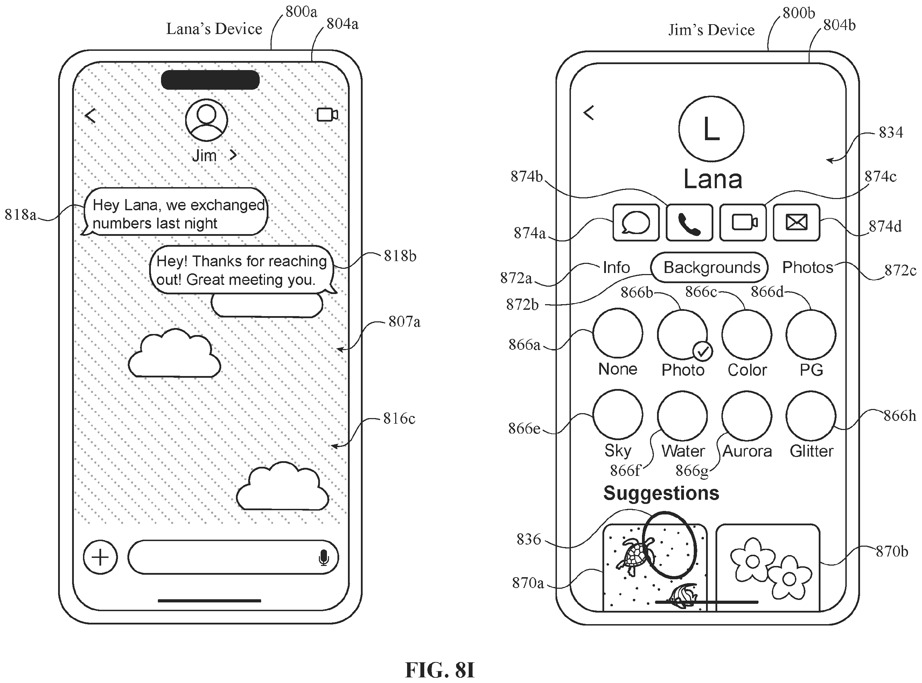

As shown in Fig. 8H, the first electronic device 800a now displays the messaging conversation with the third background 816c.The third background 816c is also displayed at the second electronic device 800b in the second user interface 807b while displaying the messaging conversation between Lana and Jim. While the respective electronic devices are displaying the third background 816c associated with the messaging conversation, the second electronic device 800b detects one or more user inputs, including an user input 832b to identifying information 832a corresponding to the one or more other users (e.g., Lana) participating in the messaging conversation, to initiate display of a third user interface 834, as shown in Fig. 8I, corresponding to one or more options to change the background associated with the messaging conversation. The background user interface 834 as shown in Fig. 8I, includes information corresponding to user (e.g., "Lana") toward which the user input 832b (at Fig. 8H) was directed toward. The background user interface 834 includes selectable user interface elements corresponding to a request to message (e.g., 874a), call (e.g., 874b), video call e.g., 874c) and/or send electronic mail (e.g., 874d) to the selected user. The background user interface further includes selectable user interface elements that corresponds to a request to display information about the user (e.g., 872a), change the background (e.g., 872b), and/or view photos (e.g., which have sent or received to the messaging conversation with the particular user. While displaying the background user interface, based on a user input directed to user interface element 872b, the second electronic device 800b displays multiple options (e.g., 866a-866h) which are selectable to update the messaging conversation to associate different background content. The updating the background associated with the messaging conversation optionally shares one or more characteristics with updating the background content as described herein in relation to methods 700, 900, and/or 1100. Additionally or alternatively, similar inputs received at the first electronic device 800a would optionally result in initiating display of the background user interface 834 at the first electronic device 800a with one or more options to change the background associated with the messaging conversation.

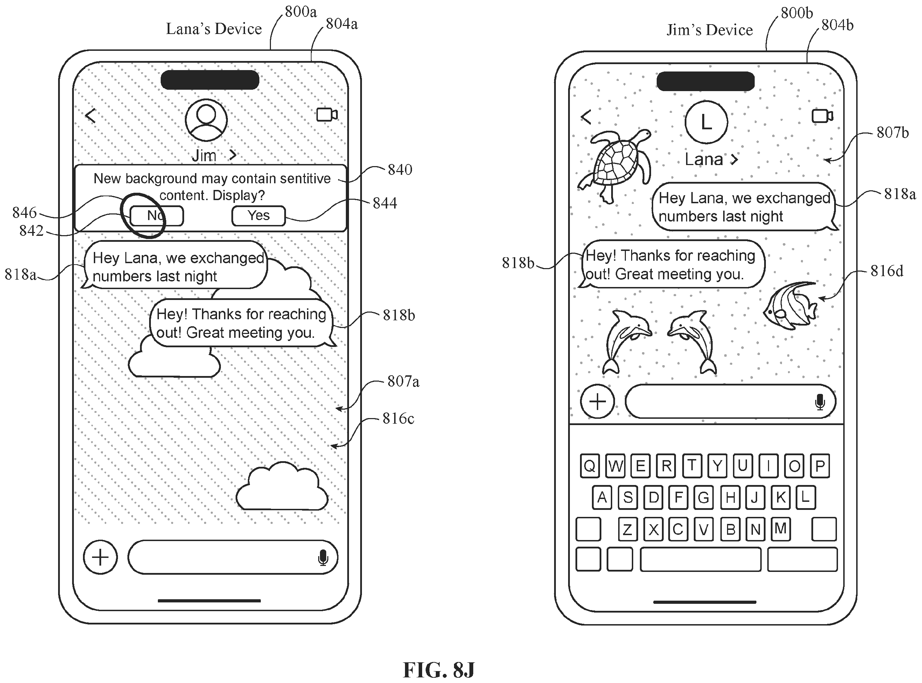

As further shown in Fig. 8I, a user input 836 is detected at the second electronic device 800b corresponding to a selection of background content including a representation 838 of an marine animals background for association with the messaging conversation. Upon applying the changes to the background content to display a fourth background 816d corresponding to the marine animals background, the second electronic device 800b reverts to displaying the second user interface 807b. As shown in Fig. 8J, the second electronic device 800b now displays a fourth background 816d, as associated with the messaging conversation, with the marine animals content in the second user interface 807b based on the user input 836 (at Fig. 8I). In some embodiments, as illustrated, when the first electronic device 800a detects the background change event (e.g., corresponding to user input 836 at the second electronic device 800b as shown in Fig. 8I) corresponding to the association of the fourth background 816d with the messaging conversation, the first electronic device 800a does not display the fourth background 816d without further input from the user. In some embodiments, the first electronic device 800a determines that the fourth background 816d includes sensitive content, or in the event that a determination could not be made that the fourth background does not include sensitive content, the first electronic device 800a displays a notification 840 which includes information corresponding to the content of the fourth background. The notification 840 includes a first selectable option 842 which, when selected, corresponds to a request to forgo displaying the fourth background 816d, and a second selectable option 844 which, when selected, corresponds to a request to display the fourth background. As shown, the first electronic device 800a detects a user input 846 directed to the first selectable option 842 corresponding to a request to forgo displaying the fourth background 816d.

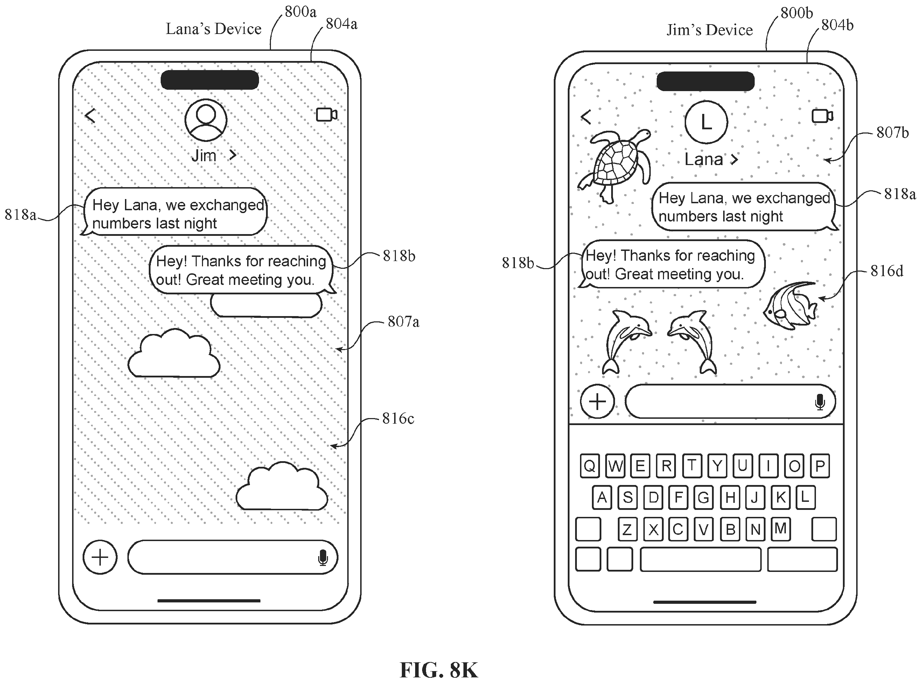

As shown in Fig. 8K, the first electronic device 800a continues to display the third background 816c in the second user interface 807a, while the second electronic device 800b displays the fourth background 816d in the second user interface 807b, when displaying the messaging conversation between Jim and Lana. Additionally or alternatively, when the first electronic device 800a detects the request to forgo displaying the fourth background 816d, the first electronic device 800a optionally reverts to displaying the second background 816b (see Fig. 8G). The second background 816b corresponds to a "safe" background which is displayed when the contact, messaging conversation, and/or background content is determined to be unsafe and/or untrusted.

Additionally or alternatively, when the first electronic device 800a detects the request to display the fourth background 816d, the first electronic device 800a displays the fourth background 816d while displaying the messaging conversation between Jim and Lana.

Fig. 9 illustrates a flow diagram illustrating a method in which an electronic device displays visual representations of the background layer associated with a messaging conversation based on the satisfaction of one or more first criteria according to some embodiments. The method 900 is optionally performed at first electronic device and/or electronic devices such as device 100, device 300, or device 500 as described above with reference to Figs. 1A-1B, 2-3, 4A-4B and 5A-5H. Some operations in method 900 are, optionally combined and/or order of some operations is, optionally, changed.

The devices, methods, and/or computer-readable storage mediums described below enhance the operability of the device and makes the user-device interface more efficient (e.g., by helping the user to provide proper inputs and reducing user mistakes when operating/interacting with the device) which, additionally, reduces power usage and/or improves battery life of the device by enabling the user to use the device more quickly and efficiently. By displaying a first visual representation of the background or a second visual representation of the background based on the one or more criteria being satisfied or not satisfied, the electronic device is able to predictively display the background, a safe background, and/or forgo displaying the background, and enhances the operability of the device by reducing unnecessary inputs and/or steps to navigate through different user interfaces or sets of controls, reducing energy usage by the device.

In some embodiments, method 900 is performed at a first electronic device, in communication with one or more display generation components and one or more input devices. The electronic device and the one or more display generation components optionally share one or more characteristics with the first electronic device and one or more display generation components respectively as described herein with respect to method 700.

In some embodiments, such as shown in Fig. 8B, after a messaging conversation between a first user of the first electronic device (e.g., 800a) and a second user (optionally corresponding to a second electronic device 800b) has received a first message (e.g., 818a) from the second user, wherein the first message is associated with a first background (e.g., 816), the first electronic device detects (e.g., at method step 902 at Fig. 9), via the one or more input devices, a first input (e.g., 820) (e.g., touch input, voice input, gaze input, hand gesture, and/or input from a device digitally interconnected to the first electronic device (e.g., mouse, keyboard, stylus, etc.)) corresponding to a request to display a messaging user interface (e.g., second user interface 807a at Fig. 8C) for the messaging conversation including the first message (e.g., visual representation of message 818a). The first message and the messaging application optionally share one or more characteristics with the one or more messages and the messaging application respectively as described herein with respect to method 700 and method 1100. In some embodiments the first electronic device detects that a messaging conversation, between a first user at the first electronic device and a second user, receives the first message. In some embodiments the message is sent a messaging conversation which includes the first user and one or more additional users within the same messaging conversation. In some embodiments, the first message is associated with a first background, wherein the background shares one or more characteristics with the background and/or background layer as described herein in relation to method 700 and 1100. In some embodiments, the background layer includes a background that is set by the second user, a second electronic device, and/or the messaging application prior to receipt by the first electronic device. Associating a background with message and/or setting a background for a conversation optionally shares one or more characteristics with associating a background with message and/or setting a background for a conversation as described herein with respect to methods 700 and/or 1100. In some embodiments, a message is associated with a background when the messaging conversation is associated with the background. In some embodiments the background includes an image such as a photo from a digital photo album, an image downloaded from the internet, such as an image of the second user and the first user, an image of a shared interest between the first user and second user, and/or other image selected by the second user and/or a second electronic device corresponding to the second user. When messaging conversation receives the first message, the first electronic device optionally presents a notification (e.g., visual notification, audible notification, and/or haptic notification) and/or a selectable user interface element, which when selected indicates a request to display a messaging user interface for the messaging conversation.

In some embodiments the first input is directed to a notification corresponding to the receipt of the first message, which is selectable to display the messaging user interface for the messaging conversation. In some embodiments, the messaging user interface optionally shares one or more characteristics with the messaging user interface as described herein with respect to method 900 and/or 1100. Additionally or alternatively, the first input optionally corresponds to a request to open the messaging application that does not request display of the messaging conversation in particular, such as detecting selection of an option to open the messaging application in a home screen, search, or other system user interface.

In some embodiments, in response to detecting the first input, (e.g., at method step 904 at Fig. 9) in accordance with a determination that one or more first criteria are satisfied (e.g., first message and/or the background associated with the first message includes unsafe or inappropriate content, first electronic device has no record of prior communications between first user and second user, second user is not saved as a contact in the first electronic device, contact is marked as corresponding to unwanted communications, and/or last communication sent to second user included a request to cease communications (e.g., "stop," "don't contact me," etc.)), the first electronic device displays (e.g., at method step 906 at Fig. 9), via the one or more display generation components and in the messaging user interface, a first visual representation of the messaging conversation with a first visual representation of the first background (e.g., second background 816b) (e.g., limiting visibility of the first background, blurring the first background, no background, and/or default background of first electronic device) such as the first electronic device 800a displaying the second background 816b, instead of the first background 816a, based on the second user (e.g., Jim) not being a saved contact on the first electronic device. In response to receiving the first input corresponding to the request to display the messaging conversation, the first electronic device displays the messaging conversation which includes the first message which was received from the second user. Based on a determination of whether communication with the second user is "safe" (e.g., the one or more first criteria are not satisfied) or "unsafe" (e.g., the one or more first criteria are satisfied), when displaying the messaging conversation, the first electronic device optionally doesn't display, or displays, the background which was associated with the first message. In some embodiments, displaying the first visual representation of the first background includes displaying the one or more messages overlaid over the first visual representation of the first background. It will be appreciated by a person having ordinary skill in the art (PHOSITA) that blocking of the phone number corresponding to the second user would result in forgoing display of any visual representation of the first message entirely in a manner which prevents the first user of the first electronic device from being notified of any message from the second user. When the one or more first criteria are satisfied, indicating that the messaging conversation with the second user and/or the first background are unsafe, the first electronic device optionally displays the first messaging conversation with the first message with a first visual representation of the background. The first visual representation of the background optionally includes displaying the first background with an obscuring layer (e.g., blurring), displaying a predetermined background (e.g., blank, preselected background), and/or presenting (e.g., via the one or more display generation components, via haptic notification, and/or via audio notification) a notification including information about the first background. In some embodiments the information about the first background includes a description of the background and/or the classification of the background (e.g., mature content, unsafe for work, graphic imagery, etc.). In some embodiments, displaying the first visual representation of messaging conversation includes displaying the entire content of the messaging conversation without the associated background. In some embodiments, displaying the first visual representation of the conversation includes displaying a portion of the messaging conversation without the associated background.

In some embodiments, in response to detecting the first input, in accordance with a determination that the one or more first criteria are not satisfied, the first electronic device displays (e.g., at method step 908 at Fig. 9), via the one or more display generation components (e.g., 804a) and in the messaging user interface, a second visual representation of the messaging conversation with a second visual representation of the first background (e.g., third background 816c) different from the first visual representation of the first background (e.g., second background 816b), such as when "Jim" is saved as a contact as shown in relation to Fig. 8H, and the first electronic device 800a detects a user input 830 (at Fig. 8G)) corresponding to a request to display the background 816c associated with the messaging conversation, which results in displaying the third background 816c which is associated with the messaging conversation. When the one or more first criteria are not satisfied, indicating that the messaging conversation, with the associated background, with the second user is safe, the first electronic device optionally displays the first messaging conversation with the first message with a second visual representation of the background, which is different than the first visual representation of the background. The second visual representation of the background optionally includes displaying the first background at the first electronic device in a manner similar to (or the same as) the display of the first background at a second electronic device corresponding to the second user, such as the first electronic device and second electronic device displaying the same background for the messaging conversation. In some embodiments, displaying the second visual representation of the first background includes displaying the first background without visual alteration. In some embodiments, displaying the second visual representation of the first background includes displaying the one or more messages overlaid over the second visual representation of the first background. In some embodiments, displaying the first background shares one or more characteristics with displaying the background and/or the background layer as described herein with respect to method 700 and/or method 900. When a first visual representation of the background is displayed at the first electronic device, the second visual representation of the background is optionally displayed at a second electronic device, corresponding to the second user. When the second visual representation of the background is displayed at the first electronic device, the second visual representation of the background is also displayed at the second electronic device.

In some embodiments, displaying the first visual representation of the first background includes displaying a second background without displaying the first background, such as displaying the second background 816b at the first electronic device 800a as shown in relation to Fig. 8C. In some embodiments, when the first electronic device displays the first visual representation of the first background, the first electronic device displays a background layer without displaying the first background. For instance, when the first background includes sensitive content, the first electronic device displays a background layer with a background, different than the first background, which is a solid color (e.g., black, white, blue, etc.), a predetermined background associated first electronic device, first user, and/or messaging application set locally at the first electronic device, a default background associated with the messaging application, and/or an obscured visual representation of the first background included with the first message which is different than the first background. For instance, when displaying the first visual representation of the background, the first electronic device optionally displays the background associated with the first message with an obscuring effect (e.g., blurring effect, pixelating effect, etc.).

In some embodiments, displaying the second visual representation of the first background includes displaying the first background (e.g., as it appears in the messaging user interface at the second electronic device), such as the first electronic device 800a displaying the third background 816c as shown in Fig. 8H. In some embodiments, when the first electronic device displays the second visual representation of the first background, the first background is displayed at the first electronic device as it is displayed in a manner which does not obscure the first background and/or as the first background is displayed at the second electronic device. In some embodiments, the second visual representation of the first background includes displaying the first background without visual modifications to the first background.

In some embodiments, the one or more first criteria include a criterion that is satisfied when the second user is not saved as a contact of the first user. In some embodiments, the one or more first criteria are based on the second user being recorded as a contact (e.g., personal contact, business contact, etc.) in a contacts application on the first electronic device and/or in a contacts server or service for the first user. Accordingly, when the first electronic device receives the first message from the second user, and determines that the second user is not a recorded contact, the first electronic device displays the first visual representation of the first background (e.g., forgoes displaying the first background associated with the messaging conversation) even if the other criteria of the one or more first criteria are not satisfied. Additionally or alternatively, when the first electronic device receives the first message from the second user, and determines that the second user is a recorded contact, the first electronic device displays the second visual representation of the first background (e.g., displays the first background associated with the messaging conversation) when the other criteria of the one or more first criteria are not satisfied.

In some embodiments, the one or more first criteria include a criterion that is satisfied when the messaging conversation does not include a second message, sent by the first user, in response to one or more messages received from the second user, such as shown with respect to the first electronic device 800a displaying the second background 816b based on "Jim" not being a saved contact in relation to Fig. 8C. In some embodiments, the one or more first criteria are based on determining when a response sent from the first electronic device to the second electronic device in response to a message (e.g., subsequent to first message, or a message previous to the first message). For instance, when the messaging conversation does not include a second message sent from the first user to the second user (e.g., prior to, or subsequent to receiving the first message) the first electronic device determines that the criterion is satisfied and displays the first visual representation of the first background if the other criteria of the one or more first criteria are not satisfied. In some embodiments, the determination based on a second message sent from the first user to the second user is based on whether the first user has sent a message to the second user within a predetermined time period (e.g., 1 week, 2 weeks, 1 month, 3 months, 6 months, or 1 year). Accordingly, when the first electronic device has determined that the first user has not sent a second message to the second user within the predetermined time period (e.g., within the last year), the first electronic device determines that the one or more first criteria are satisfied and displays the first visual representation of the first background.

In some embodiments, the one or more first criteria include a criterion that is satisfied when one or more messages sent to the messaging conversation by the first user include a phrase corresponding to a request to cease communications between the first user and the second user, such as if previous conversations between "Lana" and "Jim" included a message sent from the first electronic device 800a including "stop texting me," and as a result, the first electronic device 800a displays the second background 816b as shown in Fig, 8C. In some embodiments, the one or more first criteria include a criterion that is based on a second message, sent to the messaging conversation by the first user, that includes a phrase requesting that the second user cease communications with the first user. For instance, when the first electronic device detects that a second message sent to the messaging conversation by the first user (e.g., prior to the first message, or subsequent to the first message) includes a phrase such as "stop texting me," or "remove me from your list," the first electronic device optionally determines that the one or more first criteria are satisfied and displays the first visual representation of the first background even if the other criteria of the one or more first criteria are not satisfied. In some embodiments, determining that the second message includes a phrase corresponding to a request to cease In some embodiments, the one or more first criteria include a criterion that is satisfied when the first background includes sensitive content (e.g., not safe for work, pornographic, graphic content, triggering content, profane language, includes user of alcohol and/or drugs, etc.) based on one or more content recognition operations, such as if fourth background 816d associated with the messaging conversation via the second electronic device 800b included an image of a naked baby, and as a result the first electronic device forgoes automatically displaying the fourth background 816d as shown in Fig. 8J. In some embodiments, in order to determine if the one or more first criteria are satisfied, the first electronic device performs one or more content recognition operations (e.g., sematic search, Optical Character Recognition (OCR), and/or ML recognition) to determine the nature of the content of the first background (e.g., first background) associated with the messaging conversation. The one or more content recognition operations are optionally performed on the respective electronic device receiving the associate background (e.g., the first electronic device according to embodiments described herein) and/or on a remote server which the respective electronic device is in digital communication with. Accordingly, when the first electronic device determines that the first background includes sensitive content, the first electronic device determines that the one or more first criteria are satisfied and displays the first visual representation of the first background even if the other criteria of the one or more first criteria are not satisfied. Additionally or alternatively, when the first electronic device determines that the first background does not include sensitive content, the first electronic device determines that the one or more first criteria are not satisfied and displays the second visual representation of the first background when the other criteria of the one or more first criteria are not satisfied.

In some embodiments, the one or more content recognition operations are performed using one or more ML models, such as if one or more ML models are used in determining if the fourth background 861d includes sensitive content such as shown in Fig. 8J. In some embodiments, the first electronic device employs one or more ML models to determine when the first background includes content which corresponds to sensitive content. For instance, when the first electronic device detects that the background detects a baby in a bathtub, the first electronic device optionally determines that the background content may contain nudity. Identifying content that is sensitive is optionally based on designer established settings, user established settings, parent and/or guardian established settings, user demographic (e.g., age, gender, race, religion, etc.). Performing one or more content recognition operations using one or more ML models shares one or more characteristics with performing one or more ML operations as described herein in relation to methods 700, 900, and/or 1100.

In some embodiments, the one or more content recognition operations include performing one or more search operations (e.g., semantic search) on a first portion of a filename associated with the first background, such as if one or more ML models are used in determining if the fourth background 861d includes sensitive content detects a filename including "triggerfish" resulting in a determination that the fourth background 816d includes sensitive content. In some embodiments, determining when the first background contains sensitive content includes determining if the filename, in-part or as a whole, includes an indication that the first background is associated with sensitive content. For instance, when the first electronic device determines that the filename of the first background includes terminology such as "nsfw," "trigger," "warning," and/or terminology associated with sensitive content directly (e.g., as related to a standard dictionary) or colloquially (e.g., as related to a slang dictionary), the first electronic device determines that the one or more first criteria are satisfied and displays the first visual representation of the first background. In some embodiments, the electronic device analyzes a filename associated with the first background using ML and/or by comparing the filename with a predetermined list of terms which correspond to sensitive content.

In some embodiments, the one or more first criteria include a criterion that is satisfied when a setting, associated with the messaging application, corresponding to a request to display a third visual representation of the first background, including a second background, different than the first background, is activated, such as if the first electronic device 800a displays the second background 816b based on the activation of a setting which forgoes displaying any background content associated with a messaging conversation. In some embodiments, the first electronic device determines whether to display the first background without visual modification (e.g., the second visual representation of the first background, and/or as displayed at the second electronic device) based on a setting on the first electronic device which, when selected or activated, indicates a request to display a second background locally at the first electronic device, when displaying a messaging conversation. Accordingly, when the first electronic device includes a setting that indicates a request to display a second background, and the first electronic device determines that the one or more first criteria are satisfied, the first electronic device forgoes displaying the first visual representation of the first background, forgoes displaying the second visual representation of the first background, and/or displays a third visual representation of the first background including the second background even if the other criteria of the one or more first criteria are not satisfied. In some embodiments, when the setting is active, the electronic device displays a predefined background selected by the first user irrespective of whether the first background set by another user in the messaging conversation satisfies the one or more first criteria.

In some embodiments, while the one or more first criteria are satisfied, the electronic device detects a first event (e.g., while the first electronic device displays the first visual representation of the first background, and/or while the first electronic device is not displaying the first visual representation of the first background), corresponding to one or more inputs from the second user requesting to associate a second background with the messaging conversation, different than the first background, such as shown in Fig. 8D wherein the second user (e.g., Jim), via the second electronic device 800b, associates the third background 816c with the messaging conversation. In some embodiments, detecting a first event shares one or more characteristics with detecting a first event as described herein in relation to methods 700, 900, and/or 1100. In some embodiments, the first event is detected based on one or more inputs from the second user (e.g., via the first electronic device, and/or via a second electronic device) which correspond to a request to change the background associated with the messaging conversation. In some embodiments, the request to change the background associated with the messaging conversation is detected while the first electronic device displays the first visual representation of the first background or the second visual representation of the first background. In some embodiments, the first electronic device receives one or more indications from the second electronic device corresponding to the request to change the background associated with the messaging conversation.

In some embodiments, in response to detecting the event, the first electronic device displays a third background, different than the second background, wherein the third background is different from the second background, such as shown in Fig. 8D, wherein while "Jim" is an unknown contact, the first electronic device continues to display the second background 816b. In response to detecting the request to change the first event, the first electronic device optionally displays a third background, which is different than the first visual representation of the first background and different than the second visual representation of the first background. In some embodiments, the third background corresponds to the first visual representation of the first background. In some embodiments, the third background is different than the second background, and/or the third background is based on the second background with one or more visual differences. For instance, the third background is optionally based on an obfuscated version of the second background. In some embodiments, the electronic device displays a predefined background (e.g., selected by the first user, and/or selected by a designer) independent of the second background. In some embodiments, the third background layer includes the predefined background which is not based on the second background. In some embodiments, the third background is different than the first visual representation of the first background. For instance, when the first message is received from the second user including a second background associated with the messaging conversation, and the one or more first criteria are satisfied based on the second user being an unknown contact, the first electronic device optionally displays the first visual representation of the first background which is optionally based the first background (e.g., obfuscated visual representation of the first background). Additionally or alternatively, when the first message is received from the second user including a background associated with the messaging conversation, and the one or more first criteria are satisfied based on the background associated with the messaging conversation including sensitive content, the first electronic device optionally displays the third background layer (e.g., not based on the respective background associated with the messaging conversation).

In some embodiments, while the first electronic device displays the second visual representation of the first background, the first electronic device detects a first event corresponding to one or more inputs from the second user requesting to display the messaging conversation with a second background, such as shown in Fig. 8H-Fig. 8J with respect to detecting that the second user at the second electronic device 800b, has changed the background associated with the messaging conversation from the third background 816c (Fig. 8H), to the fourth background 816d (at Fig. 8J). In some embodiments, while the first electronic device displays the second visual representation of the first background (e.g., after the one or more first criteria have been satisfied) the first electronic device detects a first event corresponding to the second user requesting to display the messaging conversation with a second background, which is different than the first background.

In some embodiments, in response to detecting the first event, in accordance with a determination that the second background does not satisfy the one or more first criteria, the first electronic device displays, via the one or more display generation components, a third visual representation of the messaging conversation with the second background, different than the second visual representation of the first background, such as if the fourth background 816d were not flagged for potentially sensitive content at the first electronic device 800a in relation to Fig. 8J, the first electronic device would automatically update the background from the third background 816c to the fourth background 816d without requiring further user input. In response to detecting the first event, the first electronic device determines if the one or more first criteria are satisfied in relation to the second background without further input from the user. For instance, when second background does not satisfy the one or more first criteria, the first electronic device optionally updates the messaging conversation to display the second background, which is different than the second visual representation of the first background. In some embodiments, when the first electronic device detects the first event, including receiving an indication from the second electronic device of one or more inputs from the second user, which corresponds to a request to update the background associated with the messaging conversation from the first background to the second background, the first electronic device optionally requests input from the first user prior to displaying the second background. Additionally or alternatively, when second background satisfies the one or more first criteria, the first electronic device optionally maintains displaying the second visual representation of the first background and forgoes updating the messaging conversation to display a third background. The third background optionally shares one or more characteristics with the third background as described herein.

In some embodiments, while the one or more first criteria are satisfied, while the first electronic device is displaying the first visual representation the first background, the first electronic device detects a first event, including one or more inputs from the first user, corresponding to a request to display a second background, different from the first background, such as if the first electronic device 800a detected user input corresponding to a request to display a different background while displaying the third background 816c as shown in relation to Fig. 8K. In some embodiments, while displaying the first visual representation of the background layer, the first electronic device detects a first event corresponding to a request to display the background layer with a second background, which is different than the first background.

In some embodiments, while the one or more first criteria are satisfied, in response to detecting the first event, the first electronic device displays, via the one or more display generation components, a third visual representation of the messaging conversation with a third background, different than the second background, which includes a visual representation of the second background at the first electronic device, without initiating a process to display the third background at a second electronic device associated with the second user, such as if the first electronic device 800a detects one or more user inputs corresponding to a request to display a different background than the third background layer 816c as shown in Fig. 8K, and the different background is displayed at the first electronic device 800a, but the different background is not associated with the messaging conversation and, thus not displayed at the second electronic device 800b. In response to detecting the first event corresponding to a request to display the background layer with a second background, the first electronic device displays, via the one or more display generation components, a third visual representation of the messaging conversation with a third visual representation of the background layer which includes a visual representation of the second background. In some embodiments, the first electronic device displays the third visual representation of the background layer without initiating the process to display the third background at a second electronic device associated with the second user, such that the first electronic device and the second electronic device display different visual representations of the background layer. Additionally or alternatively, based on one or more inputs from the first user, the electronic device optionally transmits the second background to the messaging conversation. Thus, in some embodiments, while the one or more first criteria are not satisfied, when the first electronic device displays the third visual representation of the background layer, the second electronic device does not receive the second background and/or does not display the third visual representation of the background layer concurrently with the first electronic device.

In some embodiments, while the one or more first criteria are satisfied and while the first electronic device is displaying the first visual representation of the first background, the first electronic device detects a first event, which results in the one or more first criteria no longer being satisfied, such as if detecting the user input 826 recording "Jim" as a contact at the first electronic device 800a as shown in relation to Fig. 8F, resulted in the one or more first criteria no longer being satisfied. In some embodiments, while the one or more first criteria are satisfied and while the first electronic device displays the first visual representation of the first background, the first electronic device detects a first event (e.g., one or more inputs from the first user, and/or one or more inputs from the second user). The one or more inputs from the first user optionally result in satisfying the one or more first criteria while the first electronic device displays the first visual representation of the first background.

In some embodiments, in response to detecting the first event which results in the one or more first criteria no longer being satisfied, the first electronic device displays, via the one or more display generation components, a third visual representation of the messaging conversation with the second visual representation of the first background, such as if based on "Jim" being a recorded contact at the first electronic device 800a, the first electronic device displays the third background 816c as shown in Fig. 8H without requiring further inputs such as user input 830 shown in Fig. 8G. In response to detecting the first event, and in accordance with a determination that the first event causes the one or more first to be no longer satisfied while the first electronic device displays the first visual representation of the first background, the first electronic device optionally updates the messaging conversation to display, via the one or more display generation components, a third visual representation of the messaging conversation with the second visual representation of the first background. For instance, while the first visual representation is displayed due to the second user not being recorded as a contact in a contacts application installed on the first electronic device, and the first event corresponds to a request to add the second user as a contact in the contacts application, in accordance with the second user being added as a contact in the contacts application, the first electronic device updates the messaging conversation to display the first background with the second visual representation of the first background without further input from the first user. In some embodiments the first event corresponds to one or more inputs from the second user. For instance, while the while the first visual representation is displayed due to the first background including sensitive content, and the first event corresponds to a request from the second user to associate a second background without sensitive content with the messaging conversation, different than the first background, in accordance with second background not including sensitive content, the first electronic device updates the messaging conversation to display the second background without further input from the first user. In some embodiments, displaying the messaging conversation with the second background in response to detecting that the one or more first criteria are not satisfied while the first visual representation is displayed shares one or more characteristics with displaying the second visual representation and/or detecting that the one or more first criteria are not satisfied as described herein in relation to methods 700, 900, and/or 1100. In some embodiments, while the one or more first criteria are satisfied (e.g., prior to receiving the request to display the messaging conversation at the first electronic device), the first electronic device detects a second event that results in the one or more first criteria not being satisfied prior to receiving the request to display the messaging conversation at the first electronic device. When the second event results in the one or more first criteria not being satisfied, when the first electronic device detects the first event corresponding to a request to display the messaging conversation, the electronic device displays the second visual representation of the first background without displaying the first visual representation of the background layer. That is, in some embodiments, in accordance with the particular background currently associated with the messaging conversation not satisfying the one or more first criteria (e.g., containing sensitive content) when the request to display the messaging conversation is detected, the first electronic device displays the second visual representation of the background based on the second background being associated with the messaging conversation at the time when the first input is received.

It should be understood that the particular order in which the operations in Fig. 9 have been described is merely exemplary and is not intended to indicate that the described order is the only order in which the operations could be performed. One of ordinary skill in the art would recognize various ways to reorder the operations described herein. Additionally, it should be noted that details of other processes described herein with respect to other methods described herein (e.g., methods 700, and/or 1100) are also applicable in an analogous manner to method 900 described above with respect to Fig. 9. For example, the operation of displaying visual representations of the background layer associated with a messaging conversation based on the satisfaction of one or more first criteria with reference to method 900 optionally has one or more of the characteristics of displaying one or more visual representations of a background layer, and/or generating a background based on the contents of the messaging conversation described herein with reference to other methods described herein (e.g., methods 700, and/or 1100). For brevity, these details are not repeated here.

The operations in the information processing methods described above are, optionally, implemented by running one or more functional modules in an information processing apparatus such as general purpose processors (e.g., a as described with respect to Figs. 1A-1B, 3, 5A-5H) or application specific chips. Further, the operations described above with reference to Fig. 9 are, optionally, implemented by components depicted in Figs. 1A-1B. For example, detecting operation 902, responding to the detecting operation 904, displaying operation 906, and/or displaying operation 908 are, optionally, implemented by event sorter 170, event recognizer 180, and event handler 190. When a respective predefined event or sub-event is detected, event recognizer 180 activates an event handler 190 associated with the detection of the event or sub-event. Event handler 190 optionally utilizes or calls data updater 176 or object updater 177 to update the application internal state 192. In some embodiments, event handler 190 accesses a respective GUI updater 178 to update what is displayed by the application. Similarly, it would be clear to a person having ordinary skill in the art how other processes can be implemented based on the components depicted in Figs. 1A-1B.

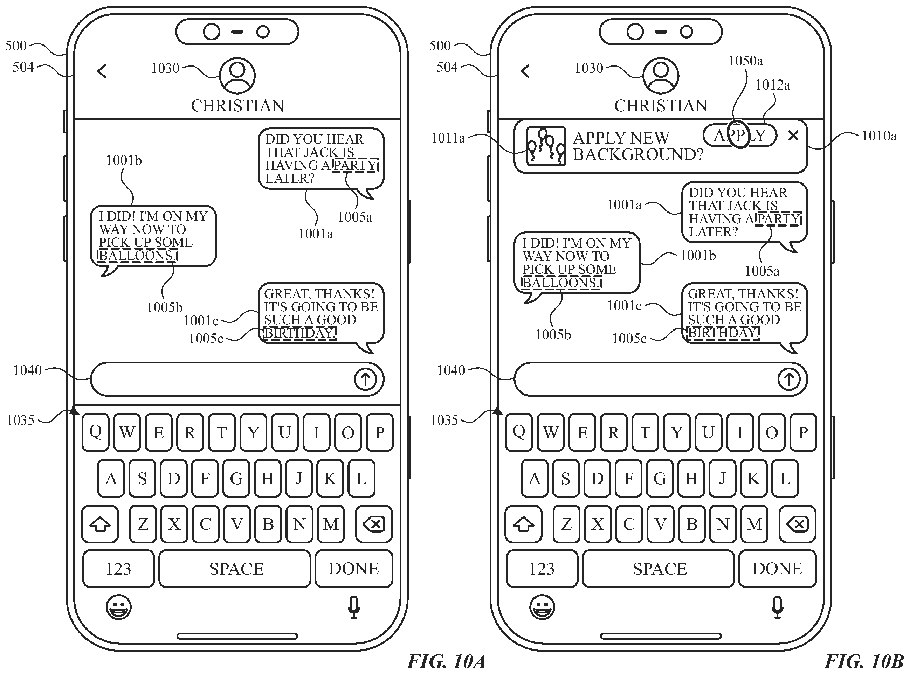

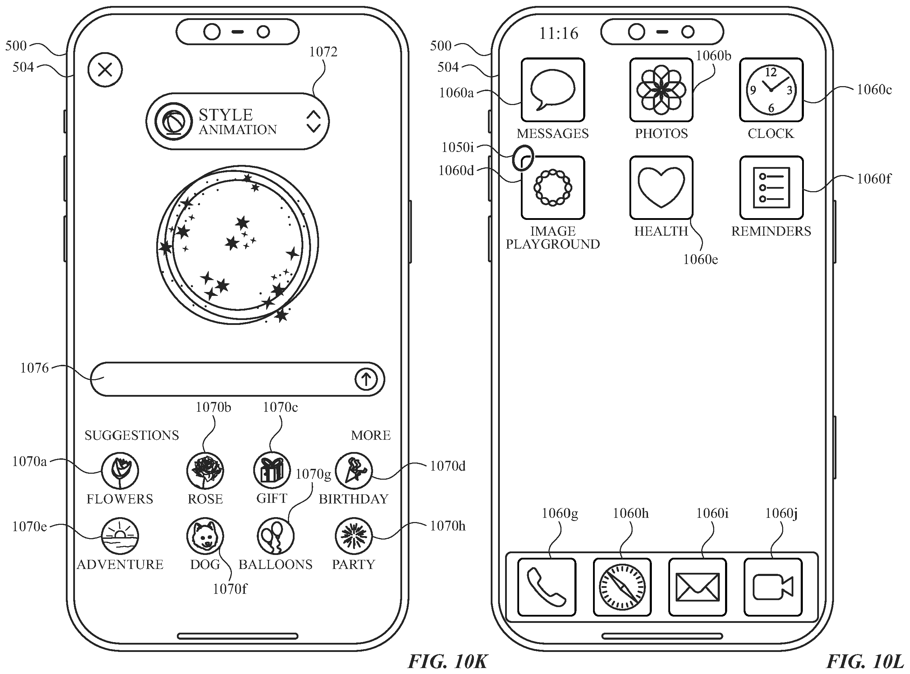

Figs. 10A to 10K illustrate exemplary ways for generating and applying backgrounds to a current messaging conversation based on the contents of the messaging conversation. Figs. 10L to Fig. 10N illustrate a method for generating an automatically-generated visual media item via an automatically-generated visual media application to illustrate a difference from the automatically-generated visual media items generated in Figs. 10A to 10K.

The embodiments in these figures are used to illustrate the processes described below, including the processes described in Fig. 11 of how user interactions and/or events detected at respective electronic devices result in interactive changes within the messaging conversation. Although Figs. 10A to 10N illustrate various examples of ways an electronic device is able to perform the processes described below with respect to Fig. 11, it should be understood that these examples are not meant to be limiting, and the electronic device is able to perform one or more processes described below with reference to Fig. 11 in ways not expressly described with reference to Figs. 10A to 10N. In some embodiments, the methods and processes described herein can be applied in multiple contexts where the display of one or more backgrounds, one or more background layers, one or more messaging conversations, one or more visual effects based on user interaction which optionally differ and/or share one or more characteristics with various embodiments is desired.

In some embodiments, the automatically generated background generation process ("generative background process") can be deployed as one or more generative models, where content is automatically generated by one or more computers in response to a request to generate the content. The automatically-generated content is optionally generated on-device (e.g., generated at least in part by a computer system at which a request to generate the content is received) and/or generated off-device (e.g., generated at least in part by one or more nearby computers that are available via a local network or one or more computers that are available via the internet). This automatically-generated content optionally includes visual content (e.g., images, graphics, and/or video), audio content, and/or text content. Automatically-generated content optionally includes deterministically generated content that is generated by one or more computer systems and/or non-deterministically generated content that is generated automatically by one or more computer systems.

In some embodiments, automatically-generated content that is generated using a non-deterministic process is referred to as generative content (e.g., generative images, generative graphics, generative video, generative audio, and/or generative text). Generative content is typically generated by an automated process based on a prompt that is provided to the automated process. In some embodiments, the automated process is a Machine Learning (ML) process. An ML process typically uses one or more ML models to generate an output based on an input. An ML process optionally includes one or more pre-processing steps to adjust the input before it is used by the ML model to generate an output (e.g., adjustment to a user-provided prompt, creation of a system-generated prompt, and/or ML model selection). Generative content can, in some embodiments, be generated using a non-deterministic process that generates content using one or more automatic steps that include specific rules and steps for processing a prompt including one or more non-deterministic steps that introduce novel generative elements into the content that is generated. An ML process optionally includes one or more post-processing steps to adjust the output by the ML model (e.g., passing ML model output to a different ML model, upscaling, downscaling, cropping, formatting, and/or adding or removing metadata) before the output of the ML model used for other purposes such as being provided to a different software process for further processing or being presented (e.g., visually or audibly) to a user. An ML process that generates generative content is sometimes referred to as a generative ML process. Generative content can, in some embodiments, be generated using a deterministic process that generates content using one or more automatic steps that include specific rules and steps for processing a prompt including one or more deterministic steps that introduce novel generative elements into the content that is generated (e.g., a non-ML process). A non-ML process optionally follows a rules-based approach for generating the generated content, such as by performing keyword matching on one or more prompt components of the prompt. A non-ML process that generates generative content is sometimes referred to as a generative non-ML process.

A prompt for generating generative content can include one or more of: one or more words (e.g., a natural language prompt that is written or spoken), one or more images, one or more drawings, and/or one or more videos. ML processes can include neural networks, linear regression, decision trees, support vector machines (SVMs), Naive Bayes, and k-nearest neighbors. Neural networks can include transformer-based deep neural networks such as large language models (LLMs) that are trained using supervised, unsupervised, reinforcement, and/or other learning techniques. Generative pre-trained transformer models are a type of LLM that can be effective at generating novel generative content based on a prompt. Some ML processes use a prompt that includes text to generate either different generative text, generative audio content, and/or generative visual content. Some ML processes use a prompt that includes visual content and/or an audio content to generate generative text (e.g., a transcription of audio and/or a description of the visual content). Some multi-modal ML processes use a prompt that includes multiple types of content (e.g., text, images, audio, video, and/or other sensor data) to generate generative content. A prompt sometimes also includes values for one or more parameters indicating an importance of various parts of the prompt. Some prompts include a structured set of instructions that can be understood by an ML process that include phrasing, a specified style, relevant context (e.g., starting point content and/or one or more examples), and/or a role for the ML process.

Generative content is generally based on the prompt but is not deterministically selected from pre-generated content and is, instead, generated using the prompt as a starting point. In some embodiments, pre-existing content (e.g., audio, text, and/or visual content) is used as part of the prompt for creating generative content (e.g., the pre-existing content is used as a starting point for creating the generative content). For example, a prompt could request that a block of text be summarized or rewritten in a different tone, and the output would be generative text that is summarized or written in the different tone. Similarly a prompt could request that visual content be modified to include or exclude content specified by a prompt (e.g., removing an identified feature in the visual content, adding a feature to the visual content that is described in a prompt, changing a visual style of the visual content, and/or creating additional visual elements outside of a spatial or temporal boundary of the visual content that are based on the visual content). In some embodiments, a random or pseudo-random seed is used as part of the prompt for creating generative content (e.g., the random or pseudo-random seed content is used as a starting point for creating the generative content). For example when generating an image from a diffusion model, a random noise pattern is iteratively denoised based on the prompt to generate an image that is based on the prompt. While specific types of ML processes have been described herein, it should be understood that a variety of different ML processes could be used to generate generative content based on a prompt.

Figs. 10A-10N illustrate an electronic device 500 with a display generation component 504 (e.g., a touchscreen). In some embodiments, the electronic device 500 is a mobile device, such as a smartphone, tablet, wearable device, or any of the devices described in method 1100. In some embodiments, the electronic device 500 displays, via the display generation component 504, a plurality of different user interfaces of applications associated with the electronic device 500.

Fig. 10A illustrates a messaging user interface associated with a messaging application, including a messaging conversation between the user account of electronic device 500 and a second user account (e.g., Christian). As depicted in Fig. 10A, the messaging user interface displayed has a default background layer (e.g., a solid white or black background layer, otherwise referred to herein as no background layer being applied). The messaging user interface displayed by the electronic device 500 displays the most recent messages in the messaging conversation, including first message 1001a, second message 1001b, and third message 1001c.

The messaging user interface depicted in Fig. 10A further includes a content entry field 1040 for preparing messages for sending (e.g., where the content within the content entry field 1040 is considered an unsent message). The messaging user interface in Fig. 10A further includes soft or virtual keyboard 1035 for providing one or more characters (e.g., letters, numbers, and/or symbols) to the content entry field 1040 for drafting a message to be sent. As illustrated, the messaging user interface further includes an affordance for displaying a control panel user interface for the current messaging conversation, e.g., user control panel affordance 1030.

Figs. 10A to 10C illustrate a method for displaying a recommended background that was automatically-generated based on content of the current messaging conversation and applying the recommended background as a background layer. As illustrated in Fig. 10A, electronic device 500 automatically identifies one or more prompt components from the contents of the current messaging conversation. In some embodiments, the one or more prompt components are for automatically-generated as image, as discussed further in relation to method 1100. In Fig. 10A, the electronic device identifies three prompt components: first prompt component 1005a ("party"), second prompt component 1005b ("balloons"), and third prompt component 1005c ("birthday"). While identified prompt components 1005a, 1005b, and 1005c are illustrated in Figs. 10A to 10C as being surrounded by a dashed line, in some embodiments this visual representation is not visible to the user (e.g., is only shown in the figures to provide a reference for the identified words but not displayed by the electronic device 500 in some embodiments). In some embodiments, the dashed lines surrounding the identified prompt components 1005a, 1005b, and 1005c are visible to the user and/or one or more additional visual effects are applied to the identified prompt components 1005a, 1005b, and 1005c. In response to identifying the one or more prompt components, the electronic device 500 transfers the identified prompt components 1005a, 1005b, and 1005c to an automatically-generated visual media application for generating a visual representation of a background layer for the messaging user interface in accordance with the identified prompt components 1005a, 1005b, and 1005c.

As illustrated in Fig. 10B, even though the messaging application remains the active application on the electronic device (e.g., the user did not navigate to the automatically-generated visual media application, nor did they provide any specific user input for generating a background layer), the messaging user interface displays a notification element 1010a associated with the background layer generated based on the identified prompt components 1005a, 1005b, and 1005c. As illustrated, notification element 1010a includes a preview image 1011a, displaying a preview of the automatically-generated visual media item that is suggested for applying as a background layer of the current messaging conversation (e.g., based on the "party", "balloons", and "birthday" prompt components 1005a, 1005b, and 1005c). The notification element 1010a further includes an affordance for displaying the messaging user interface with the generated visual representation of the background layer, such as "Apply" option 1012a.

In some embodiments, as illustrated in Fig. 10B, the electronic device 500 detects one or more user inputs directed towards an affordance for displaying the messaging user interface with the suggested background layer, such as "Apply" option 1012a. In some embodiments, the one or more user inputs includes contact 1050a. Although contact 1050a is illustrated as a touch input, it should be understood that contact 1050a is not limited to touch inputs. Other types of inputs, including air gestures, hardware input device inputs, voice inputs and/or one or more inputs based on the attention of the user (e.g., gaze or a gaze proxy, direct input location(s), input focus, and/or cursor location), described in more detail below at least with reference to method 1100, are possible.

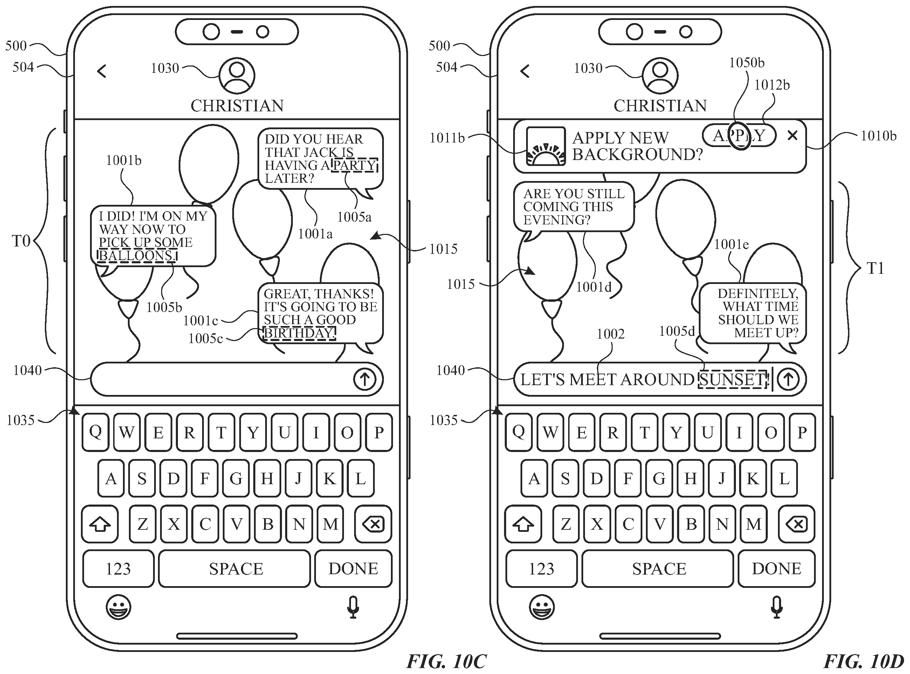

In response to detecting contact 1050a in Fig. 10B, the electronic device 500 displays the visual representation of the background layer associated with preview 1011a as the first background layer 1015 of the current messaging conversation, as illustrated in Fig. 10C. That is, since the messages 1001a through 1001c include contents referring to "party", "balloons", and "birthday", the electronic device suggested a background with birthday balloons which the electronic device then applied to the background of the messaging conversation upon receiving confirmation via the apply option 1012a.

Figs. 10C to 10E illustrate a method where, after a change in time and/or change in content in the recent messages, a new recommended background is automatically generated and is applied as a new background layer. As illustrated in Fig. 10C, first message 1001a, second message 1001b, and third message 1001c were all sent during time T0 (e.g., between 8pm and 9pm). As illustrated in Fig. 10D, the messaging conversation displayed by the messaging user interface now includes fourth message 1001d and 1001e, received during time T1 (e.g., between 10:30pm and 11:30pm). That is, first message 1001a, second message 1001b, and third message 1001c are no longer the most recent messages in the messaging conversation. Furthermore, Fig. 10D also illustrates that an unsent message 1002 is present within content entry field 1040. In Fig. 10D, the electronic device 500 identifies one prompt component: fourth prompt component 1005d ("sunset"). As illustrated in Fig. 10D, the electronic device 500 identifies the fourth prompt component 1005d from an unsent message 1002. Similar to the first through third prompt components 1005a through 1005d, while identified prompt component 1005d is illustrated in Figs. 10D as being surrounded by a dashed line, in some embodiments this visual representation is not visible to the user (e.g., is only shown in the figures to provide a reference for the identified words). In some embodiments, the dashed lines surrounding the identified prompt component 1005d are visible to the user and/or one or more additional visual effects are applied to the identified prompt component 1005d. In response to identifying the one or more prompt components, the electronic device 500 transfers the identified prompt component 1005d to an automatically-generated visual media application for generating a visual representation of a background layer for the messaging user interface in accordance with the identified prompt component 1005d.

In Fig. 10D, since time has passed (e.g., 1 hour) since the previous suggested background was displayed via notification element 1010a (e.g., an exemplary criterion of the electronic device for recommending a new background layer), the electronic device 500 displays a second notification element 1010b associated with a new suggested background layer (e.g., a background layer that is automatically-generated as discussed above and discussed further in relation to method 1100), with the new background layer generated based on the identified prompt component 1005d. In some embodiments, the second notification element 1010b shares one or more characteristics with notification element 1010a. As illustrated, second notification element 1010b includes a second preview image 1011b, displaying a preview of the automatically-generated visual media item that is suggested for applying as a background layer of the current messaging conversation (e.g., based on the "sunset" prompt component 1005d). The second notification element 1010b further includes an affordance for displaying the messaging user interface with the generated visual representation of the background layer, such as "Apply" option 1012b.

In some embodiments, as illustrated in Fig. 10D, the electronic device 500 detects one or more user inputs directed towards an affordance displaying the messaging user interface with the generated visual representation of the background layer, such as "Apply" option 1012b. In some embodiments, the one or more user inputs includes contact 1050b. Although contact 1050b is illustrated as a touch input, it should be understood that contact 1050b is not limited to touch inputs. Other types of inputs, including air gestures, hardware input device inputs, voice inputs and/or one or more inputs based on the attention of the user (e.g., gaze or a gaze proxy, direct input location(s), input focus, and/or cursor location), described in more detail below at least with reference to method 1100, are possible.

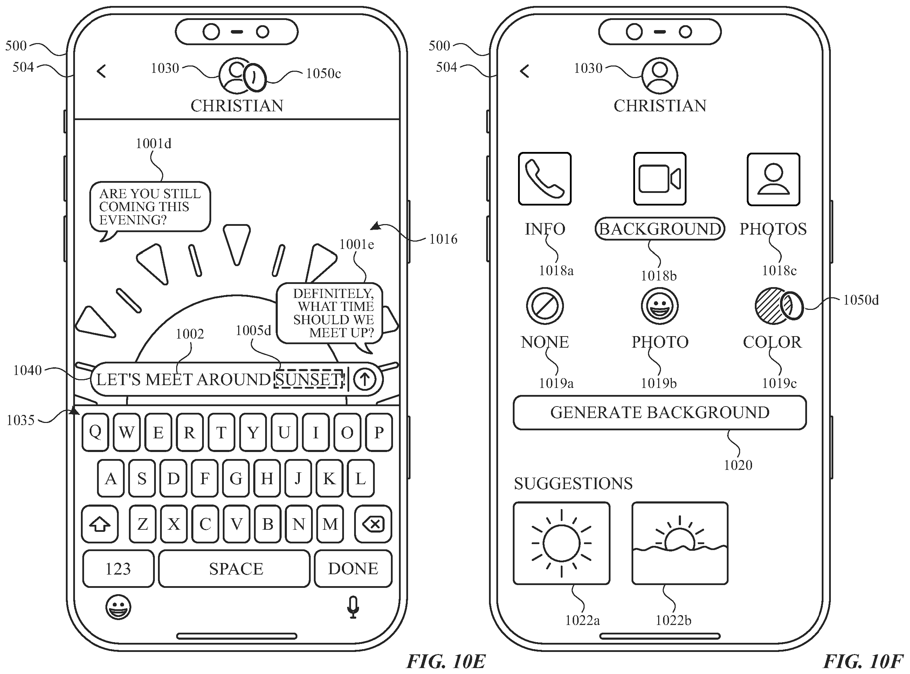

In response to detecting contact 1050b, the electronic device 500 displays the visual representation of the background layer associated with preview 1011b as the second background layer 1016 of the current messaging conversation, as illustrated in Fig. 10E. That is, since the unsent messages 1002 include contents referring to "sunset", the electronic device suggested a background with a sunset which the electronic device then applied to the background of the messaging conversation upon receiving confirmation via the apply option 1012b.

Figs. 10E to 10F illustrate a method for displaying a control panel associated with a current messaging conversation and viewing additional suggested background layers based on the contents of the messaging conversation. As illustrated in Fig. 10E, the electronic device 500 detects one or more user inputs directed towards an affordance for displaying a control panel user interface for the current messaging conversation, such as user control panel affordance 1030. In some embodiments, the one or more user inputs includes contact 1050c. Although contact 1050c is illustrated as a touch input, it should be understood that contact 1050c is not limited to touch inputs. Other types of inputs, including air gestures, hardware input device inputs, voice inputs and/or one or more inputs based on the attention of the user (e.g., gaze or a gaze proxy, direct input location(s), input focus, and/or cursor location), described in more detail below at least with reference to method 1100, are possible.

As illustrated in Fig 10F, in response to detecting contact 1050c, the electronic device 500 displays the control panel user interface associated with the current messaging conversation (e.g., a control panel for the messaging conversation with Christian). As illustrated in Fig. 10F, the control panel includes three control categories, first control category 1018a ("info": for viewing and/or adjusting one or more informational parameters surrounding Christian, or for performing one or more actions associated with Christian, such as initiating a phone call), second control category 1018b ("background": for viewing and/or selecting a new background for the current messaging conversation), and third control category 1018c ("photos": for viewing photos associated with the current messaging conversation and/or with photos associated with Christian).

In Fig. 10F, the second control category 1018b is selected and a number of selectable affordances are displayed by the control panel user interface. These selectable affordances include affordances for setting non-automatically-generated backgrounds (e.g., option 1019a for removing the current background layer and/or reverting the background to a default background layer, option 1019b for selecting a photo from an visual media content library to be used as a current background layer, and option 1019c for selecting one or more parameters of a color gradient to be used as a current background layer). The control panel user interface further includes an affordance for opening a visual media creation interface for generating a new automatically-generated visual media item for a background (e.g., "Generate background" option 1020). Fig. 10F also illustrates one or more previews of additional suggested background layers (e.g., based on the same prompt component that resulted in preview image 1011b) displayed within the control panel user interface. That is, first control panel preview 1022a and second control panel preview 1022b provide additional options for selecting a background layer based on the contents of the messaging conversation (e.g., generated via an automatically-generated visual media application similarly to the generation of previews 1011a and 1011b).

Figs. 10F to 10G illustrate a method for selecting a color gradient and applying the selected color gradient to the background of the current messaging conversation. As illustrated in Fig. 10F, the electronic device 500 detects one or more user inputs directed towards an affordance for selecting one or more parameters of a color gradient to be used as a background layer, such as option 1019c. In some embodiments, the one or more user inputs includes contact 1050d. Although contact 1050d is illustrated as a touch input, it should be understood that contact 1050d is not limited to touch inputs. Other types of inputs, including air gestures, hardware input device inputs, voice inputs and/or one or more inputs based on the attention of the user (e.g., gaze or a gaze proxy, direct input location(s), input focus, and/or cursor location), described in more detail below at least with reference to method 1100, are possible.

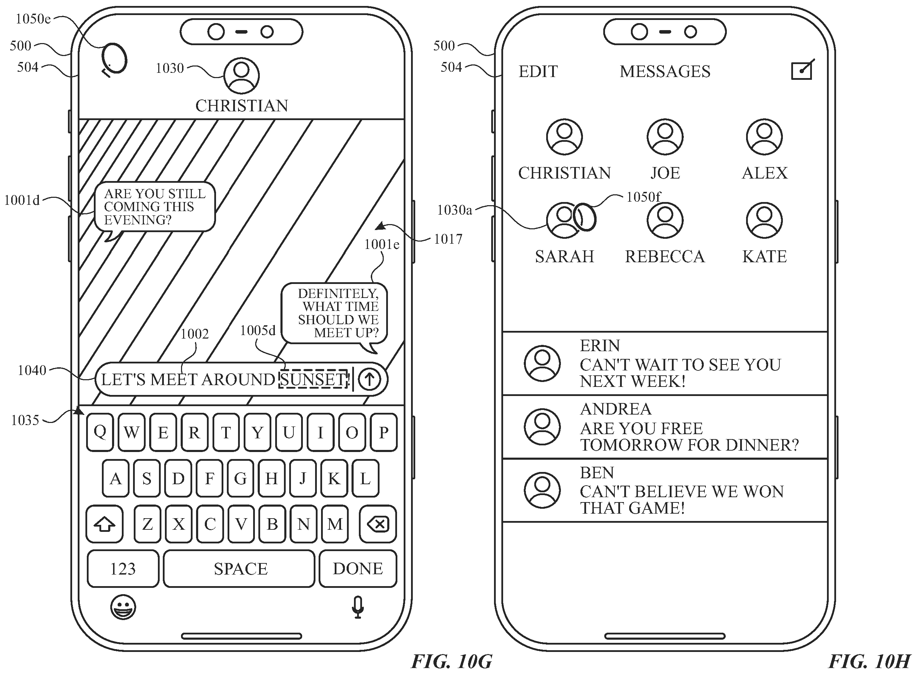

As illustrated in Fig 10G, in response to detecting contact 1050d, the electronic device 500 applies a color gradient background 1017 to the current messaging conversation (e.g., where the color gradient extends between a first color in the top left of the interface associated with the messaging conversation towards the bottom right of the interface). While not illustrated, in response to detecting contact 1050d, in some embodiments the electronic device displays a color gradient selection user interface providing one or more selectable affordances for setting the parameters of the color gradient (e.g., a selection of two or more colors and/or a direction of the color gradient), as discussed further in relation to method 1100, and an affordance for applying the selected color gradient as color gradient background 1017.

Figs. 10G to 10I, illustrate a method for changing the current messaging conversation to a messaging conversation associated with a different user account within the messaging application. As illustrated in Fig. 10G, the electronic device 500 detects one or more user inputs directed towards an affordance for displaying a home page of the messaging application. In some embodiments, the one or more user inputs includes contact 1050e. Although contact 1050e is illustrated as a touch input, it should be understood that contact 1050e is not limited to touch inputs. Other types of inputs, including air gestures, hardware input device inputs, voice inputs and/or one or more inputs based on the attention of the user (e.g., gaze or a gaze proxy, direct input location(s), input focus, and/or cursor location), described in more detail below at least with reference to method 1100, are possible.

Fig. 10H illustrates a home page of the messaging application, including one or more icons associated with messaging conversations with one or more user accounts (e.g., "Christian", "Joe", "Alex", "Sarah", "Rebecca", Kate", "Erin", "Andrea", and "Ben"). As illustrated, one or more of the user accounts displayed on the home page further includes a preview of the last text message in the messaging conversation (such as the messages displayed with regard to "Erin", "Andrea", and "Ben"). As illustrated in Fig. 10H, the electronic device 500 detects one or more user inputs directed towards an affordance for opening a messaging conversation with a respective user account, such as the icon 1030a associated with "Sarah". In some embodiments, the one or more user inputs includes contact 1050f. Although contact 1050f is illustrated as a touch input, it should be understood that contact 1050f is not limited to touch inputs. Other types of inputs, including air gestures, hardware input device inputs, voice inputs and/or one or more inputs based on the attention of the user (e.g., gaze or a gaze proxy, direct input location(s), input focus, and/or cursor location), described in more detail below at least with reference to method 1100, are possible.

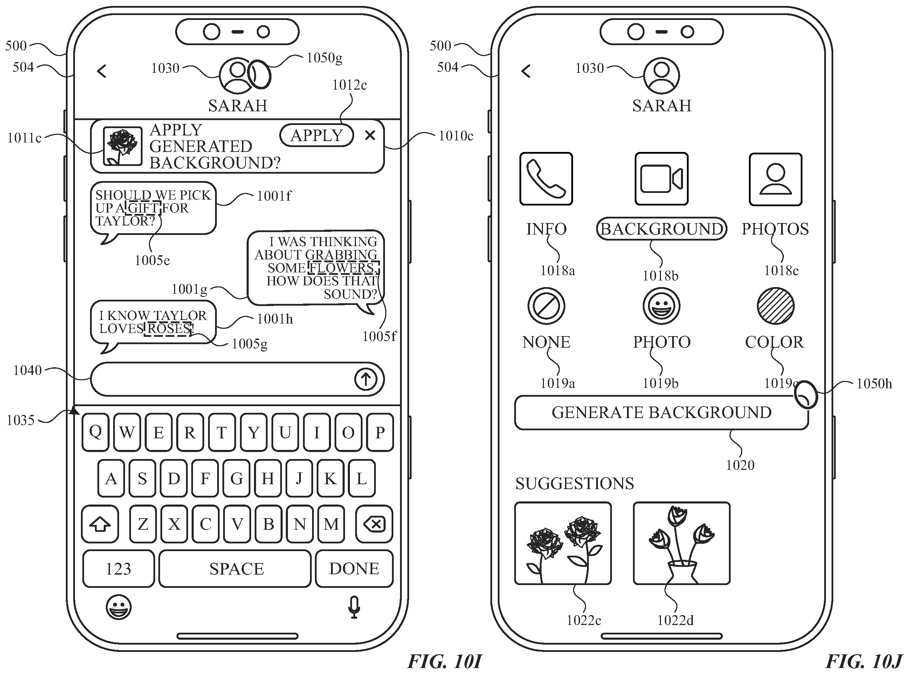

As illustrated in Fig 10I, in response to detecting contact 1050f, electronic device 500 displays a second messaging user interface associated with the messaging application, including a messaging conversation between the user account of electronic device 500 and a third user account (e.g., Sarah). In some embodiments, the second messaging user interface shares one or more characteristics with the messaging user interface depicted in Fig. 10A to 10E and 10F. As depicted in Fig. 10I, the second messaging user interface displayed has a default background layer (e.g., a solid white or black background layer, otherwise referred to herein as no background layer being applied). The second messaging user interface displayed by the electronic device 500 displays the most recent messages in the messaging conversation, including sixth message 1001f, seventh message 1001g, and eighth message 1001h.

As illustrated in Fig. 10I, similarly to the method depicted in Fig. 10E, electronic device 500 automatically identifies one or more prompt components from the contents of the current messaging conversation. In Fig. 10I, the electronic device identifies three prompt components: fifth prompt component 1005e ("gift"), sixth prompt component 1005f ("flowers"), and seventh prompt component 1005g ("roses"). While these prompt components are referred to as fifth through seventh prompt components 1005e to 1005g so as to avoid confusion with the first through fourth prompt components 1005a to 1005d referred to above, it is to be understood that the fifth through seventh prompt components 1005e to 1005g are identified from the messaging conversation with Sarah (and not from the messaging conversation with Christian) and are therefore independent from the first through fourth prompt components 1005a to 1005d. The same is also true with regard to the numbering of the sixth through eight messages 1001f to 1001h. While identified prompt components 1005e, 1005f, and 1005g are illustrated in Fig. 10I as being surrounded by a dashed line, in some embodiments this visual representation is not visible to the user (e.g., is only shown in the figures to provide a reference for the identified words). In some embodiments, the dashed lines surrounding the identified prompt components 1005e, 1005f, and 1005g are visible to the user and/or one or more additional visual effects are applied to the identified prompt components 1005e, 1005f, and 1005g. In response to identifying the one or more prompt components, the electronic device 500 transfers the identified prompt components 1005e, 1005f, and 1005g to an automatically-generated visual media application for generating a visual representation of a background layer for the messaging user interface in accordance with the identified prompt components 1005e, 1005f, and 1005g.

As illustrated in Fig. 10I, in view of the new messaging conversation, a recommended background is presented based on the contents of the current messaging conversation. As discussed above, even though the messaging application remains the active application on the electronic device (e.g., the user did not navigate to the automatically-generated visual media application, nor did they provide any specific user input for generating a background layer), the messaging user interface displays a third notification element 1010c associated with the background layer generated based on the identified prompt components 1005e, 1005f, and 1005g. As illustrated, third notification element 1010c shares one or more characteristics with notification element 1010a and/or notification element 1010b discussed above. Third notification element 1010c includes a preview image 1011 c, displaying a preview of the automatically-generated visual media item that is suggested for applying as a background layer of the current messaging conversation (e.g., based on the "gift", "flowers", and "roses" prompt components 1005e, 1005f, and 1005g). The third notification element 1010c further includes an affordance for displaying the messaging user interface with the generated visual representation of the background layer, such as "Apply" option 1012c.

Figs. 10I to 10J illustrate a method for generating a background via the control panel interface of the messaging application. As illustrated in Fig. 10I, the electronic device 500 detects one or more user inputs directed towards an affordance for displaying a control panel user interface for the current messaging conversation, such as user control panel affordance 1030. In some embodiments, the one or more user inputs includes contact 1050g. Although contact 1050g is illustrated as a touch input, it should be understood that contact 1050g is not limited to touch inputs. Other types of inputs, including air gestures, hardware input device inputs, voice inputs and/or one or more inputs based on the attention of the user (e.g., gaze or a gaze proxy, direct input location(s), input focus, and/or cursor location), described in more detail below at least with reference to method 1100, are possible.

As illustrated in Fig 10J, in response to detecting contact 1050g, the electronic device 500 displays the control panel user interface associated with the current messaging conversation (e.g., a control panel for the messaging conversation with Sarah). This control panel user interface associated with the messaging conversation with Sarah shares one or more characteristics with the control panel user interface associated with the messaging conversation with Christian, as illustrated and described in relation to Fig. 10F. As seen in Fig. 10J, two alternative previews of suggested backgrounds 1022c and 1022d are displayed, in accordance with the backgrounds that were generated based on the fifth through seventh prompt components 1005e through 1005g shown in Fig. 10I.

As illustrated in Fig. 10J, the electronic device 500 detects one or more user inputs directed towards an affordance for opening a visual media creation interface for generating a new automatically-generated visual media item for a background such as user "Generate Background" option 1020. In some embodiments, the one or more user inputs includes contact 1050h. Although contact 1050h is illustrated as a touch input, it should be understood that contact 1050h is not limited to touch inputs. Other types of inputs, including air gestures, hardware input device inputs, voice inputs and/or one or more inputs based on the attention of the user (e.g., gaze or a gaze proxy, direct input location(s), input focus, and/or cursor location), described in more detail below at least with reference to method 1100, are possible.

In Fig. 10K, in response to detecting selection of the "Generate Background" option 1020 in Fig. 10J, the electronic device 500 displays, via display generation component 504, a visual media creation user interface of an automatically-generated visual media application. In some embodiments, the visual media creation user interface of an automatically-generated visual media application includes a plurality of user interface components or user interface elements (e.g., menus, fields, icons, buttons, options, or other element) that are selectable to initiate a process for generating automatically-generated visual media based on a prompt using a ML model. In some embodiments, the electronic device 500 initiates the process for generating an automatically-generated visual media in response to detecting (or, optionally, receiving) a prompt for use in generating automatically-generated visual media. In some embodiments, the prompt includes one or more prompt components and these prompt components include text, keywords, images, video, special characters, visual media, and/or other inputs describing a concept (e.g., style, theme, mood, activity, costume, accessory, places, graphics, or visual characteristic that will influence the generation of the automatically-generated visual media, such as is described further in relation to method 1100).

In some embodiments, the one or more prompt components include concepts retrieved from the messaging application, computer-generated suggested concepts (or, optionally referred to as predefined concepts) or recognized concepts. For example, in FIG. 10K, the visual media creation user interface includes a set of suggested prompt components 1070a through 1070h corresponding to computer-generated suggested concepts. For example, a respective prompt component (e.g., prompt component 1070a, prompt component 1070b, prompt component 1070c, prompt component 1070d, prompt component 1070e, prompt component 1070f, prompt component 1070g, or prompt component 1070h) is selectable (e.g., via various input methods described below, and in more detail, in method 700) to cause the electronic device 500 to use a corresponding computer-generated suggested concept as basis or influence for generating an automatically-generated visual media.

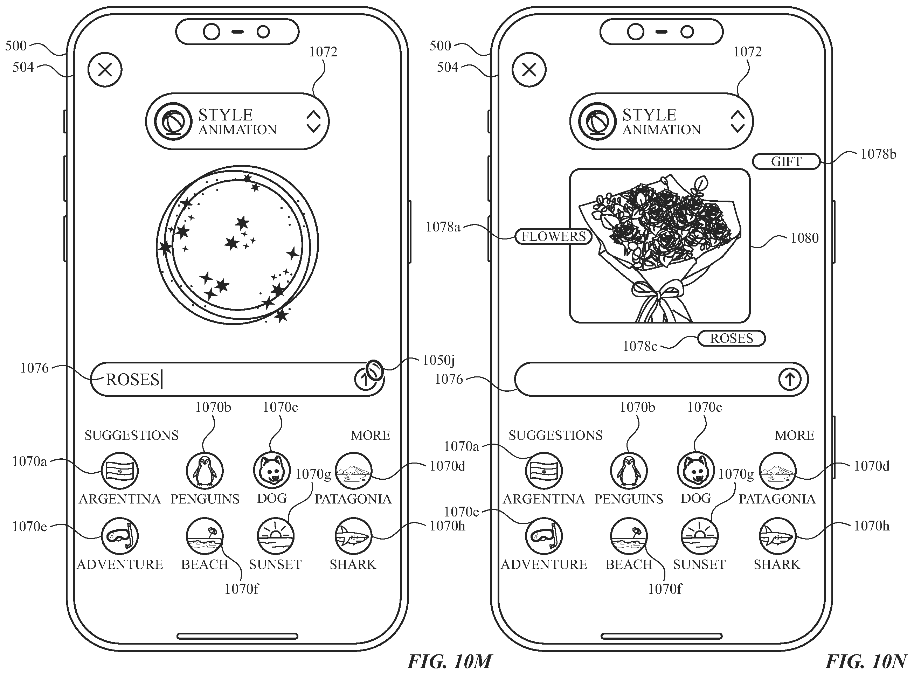

As illustrated in Fig. 10K, in response to detecting selection of the "Generate Background" option 1020 in Fig. 10J, the electronic device 500 transfers the suggested prompt components 1005e through 1005g to the automatically-generated visual media application, and the automatically-generated visual media application displays the prompts as suggested prompt components 1070a through 1070c in the visual media creation user interface (prompt components presented to the user as suggestions, and which can be selected as part of a prompt for generating an automatically-generated visual media item). Thus, the automatically-generated visual media application can receive suggested prompt components from the messaging application based on the contents of the current messaging conversation. In an alternative embodiment, the suggested prompt components 1005 through 1005e transferred from the messaging application may automatically be selected when the electronic device 500 displays the user interface of the automatically-generated visual media application (see, e.g., selected prompt components 1078a, 1078b, and 1078c in Fig. 10N). While not illustrated in detail, one or more of the suggested prompt components can be selected by providing a selection input directed towards one of the suggested prompt components and/or a dragging input including a selection of a prompt component (e.g., prompt component 1070b associated with "ROSE") and a movement input directed towards the center of the visual media creation interface. Any number of prompt components can be added to the prompt for generating the automatically-generated visual media item, including prompt components added via content entry field 1076 as discussed below.

The visual media creation user interface also includes content entry field 1076 that, when selected, causes the electronic device 500 to display, via display generation component 504, a soft keyboard for inputting a textual description and/or one or more emojis that is used as a prompt component for use in generating an automatically-generated visual media. The visual media creation user interface also includes a style prompt component option 1072 that, when selected, causes the electronic device 500 to display a user interface component for selecting a style in which the automatically-generated visual media item should be generated (e.g., in an animation style).

Figs. 10L to 10N depict methods for generating an automatically-generated visual media item directly via an automatically-generated visual media application to illustrate differences between automatically-generated visual media items generated directly via the automatically-generated visual media application versus automatically-generated visual media items generated via a messaging application.

Fig. 10L depicts a home page interface of electronic device 500. As illustrated the home page interface includes a plurality of icons associated with different applications running on the electronic device 500. As shown in Fig. 10L, there is a first icon 1060a (associated with a messages application), a second icon 1060b (associated with a photos application), a third icon 1060c (associated with a clock application), a fourth icon 1060d (associated with an image playground, or other automatically-generated visual media, application), a fifth icon 1060e (associated with a health application), and a sixth icon 1060f (associated with a reminders application). Home page interface further includes seventh icon 1060g (associated with a phone application), eighth icon 1060h (associated with an internet browser application), ninth icon 1060i (associated with an email application) and tenth icon 1060j (associated with a video chat application).

In Fig. 10L, the electronic device 500 detects one or more user inputs directed towards an affordance for opening an automatically-generated visual media application, such as icon 1060d. In some embodiments, the one or more user inputs includes contact 1050i. Although contact 1050i is illustrated as a touch input, it should be understood that contact 1050i is not limited to touch inputs. Other types of inputs, including air gestures, hardware input device inputs, voice inputs and/or one or more inputs based on the attention of the user (e.g., gaze or a gaze proxy, direct input location(s), input focus, and/or cursor location), described in more detail below at least with reference to method 1100, are possible. In this case, the result of contact 1050i is that the electronic device 500 directly accesses the automatically-generated visual media application, as opposed to accessing the automatically-generated visual media application (or one or more features of the automatically-generated visual media application) via another entry point (e.g., from the messaging application, as discussed above and described further in relation to method 1100).

In Fig. 10M, in response to detecting contact 1050i, the electronic device 500 displays, via display generation component 504, a visual media creation user interface of an automatically-generated visual media application, which optionally shares one or more characteristics with the visual media creation user interface discussed above in relation to Fig. 10K. As illustrated in FIG. 10M, the visual media creation user interface includes a set of suggested prompt components 1070a through 1070h corresponding to computer-generated suggested concepts. For example, a respective prompt component (e.g., prompt component 1070a, prompt component 1070b, prompt component 1070c, prompt component 1070d, prompt component 1070e, prompt component 1070f, prompt component 1070g, or prompt component 1070h) is selectable (e.g., via various input methods described below, and in more detail, in method 700) to cause the electronic device 500 to use a corresponding computer-generated suggested concept (e.g., Argentina, penguins, dog, Patagonia, adventure, beach, sunset, or shark) as basis or influence for generating an automatically-generated visual media. As illustrated by Fig. 10M, as the automatically-generated visual media application was entered directly through a home page of the electronic device (and not via the messaging application as shown in Fig. 10K), none of the computer-generated suggested concepts are based on the content of a messaging conversation.

As illustrated in Fig. 10M, "ROSES" has been input as a textual description to the content entry field 1076. The content entry field 1076 further includes an affordance for adding the text in the content entry field as a prompt component for the automatically-generated visual media application.

Fig. 10N illustrates that when prompt components have been added via the content entry field 1076 (e.g., first prompt component 1078a, second prompt component 1078b, and third prompt component 1078c), the automatically-generated visual media application generates a preview 1080 of an automatically-generated visual media item. As illustrated in Fig. 10N was generated based on the same prompt components ("Gift", "Flowers", "Roses"), the generated image has a different appearance to the appearances of the suggested generated backgrounds shown in Fig. 10I and 10J. As shown in Fig. 10N, when directly accessing the automatically-generated visual media application, the default automatically-generated visual media item has a higher level of detail as compared to a level of detail which is appropriate for an image suitable for being applied as a background (e.g., a background of a messaging conversation).

Fig. 11 illustrates a flow diagram illustrating a method in which an electronic device displays generates, via an automatically generated visual media application, a visual representation of a respective background layer for the messaging user interface based on the contents of the messaging conversation and displays the visual representation to the user in accordance with some embodiments of the disclosure. The method 1100 is optionally performed at first electronic device and/or electronic devices such as device 100, device 300, or device 500 as described above with reference to Figs. 1A-1B, 2-3, 4A-4B and 5A-5H. Some operations in method 1100 are, optionally combined and/or order of some operations is, optionally, changed.

The devices, methods, and/or computer-readable storage mediums described below enhance the operability of the device and makes the user-device interface more efficient (e.g., by helping the user to provide proper inputs and reducing user mistakes when operating/interacting with the device) which, additionally, reduces power usage and/or improves battery life of the device by enabling the user to use the device more quickly and efficiently. Performing an operation when a set of conditions has been met without requiring further user input (such as generating a visual representation of a background layer in response to content within a messaging account) enhances the operability of the device by reducing unnecessary inputs and/or steps to navigate through different user interfaces or sets of controls, reducing energy usage by the device.

In some embodiments, a method 1100 is performed at an electronic device, such as electronic device 500 in communication with one or more display generation components, such as display generation component 504, and one or more input devices. In some embodiments, the electronic device shares one or more characteristics with the first electronic devices described herein with respect to method 700 and method 900. In some embodiments, the one or more display generation components and the one or more input devices share one or more characteristics with the one or more display generation components and the one or more input devices described with respect to method 700 and method 900.

In some embodiments, the electronic device 500 displays (1102), via the one or more display generation components, a messaging user interface associated with a messaging application, such as the user interface associated with Christian displayed in Fig. 10A. In some embodiments, the messaging user interface, including a messaging conversation between a user account of the electronic device and a second user account, such as a conversation including messages 1001a through 1001c in Fig. 10C, and a background layer, such as first background layer 1015 as in Fig. 10C. In some embodiments, the messaging application, messaging conversation, and messaging user interface share one or more characteristics with the messaging application, messaging conversation, and messaging user interface described with respect to method 700 and method 900. In some embodiments, the user account is associated with a first user of the electronic device and the second user account is associated with a user of a second, different, electronic device. In some embodiments, the first user and second user and/or first user account and second user account share one or more characteristics with the first user and second user described in relation to method 700 and method 900. In some embodiments, the user account includes a user identification (e.g., a phone number, an e-mail, and/or a username). In some embodiments, the background layer shares one or more characteristics with the background layer described with respect to method 700. In some embodiments, the background layer shares one or more characteristics with the first background described with respect to method 900. In some embodiments, the electronic device displays representations of messages between the first user account and the second user account overlaid on the background layer.

In some embodiments, while displaying the messaging user interface with the background layer, electronic device 500 detects (1104) that one or more criteria are satisfied including a criterion that is satisfied based on contents of the messaging conversation, such as an elapsed time since the current background layer was displayed as illustrated by time T0 and time T1 in Figs. 10C and 10D. In some embodiments, the criterion is satisfied in response to one or more of the following: a change in topic of the messaging conversation, a length of the messaging conversation, and/or an elapsed time since the current background layer was displayed.

In some embodiments, in response to detecting that the one or more criteria are satisfied (1106), electronic device 500generates (1108), via an automatically generated visual media application, a visual representation of a respective background layer for the messaging user interface based on the contents of the messaging conversation, such as the visual representation displayed by preview 1011b in Fig. 10D. In some embodiments, the electronic device generates the visual representation of the background layer when the one or more criteria are satisfied (e.g., when the electronic device detects a change in topic based on messages sent in the messaging conversation). In some embodiments, generating the visual representation of the background layer includes determining a prompt for use in generating automatically-generated visual media (e.g., images, videos, animations, and/or other visual media described in more detail below) and transferring the prompt to an automatically generated visual media application. In some embodiments, the automatically generated visual media application is an application running on the electronic device. In some embodiments, the automatically generated visual media application is a different application than the messaging application. In some embodiments, the electronic device does not display a user interface of the automatically generated visual media application while generating the visual representation (e.g., the electronic device continues to display the messaging user interface associated with the messaging application). In some embodiments, the prompt is based on the contents of the messaging conversation, as is discussed in further detail below. In some embodiments, the first content and/or second content includes text within the messaging conversation. In some embodiments, the first content and/or second content includes text within a certain number of recent messages from the messaging conversation (e.g., within the last one, five, or ten messages). In some embodiments, the first content and/or second content includes text received within a certain time threshold of the current time of the electronic device (e.g., text received within the last one second, five seconds, ten seconds, thirty seconds, 1 minute, 5 minutes, 10 minutes, 30 minutes, or 1 hour). In some embodiments, the first content and/or second content includes text from within a currently unsent message. In some embodiments, the first content and/or second content includes one or more images, voice memos, videos, and/or emojis (or metadata associated with the images, videos, or emojis) from the messaging conversation. In some embodiments, the electronic device is configured to apply one or more machine learning models to the contents of the messaging conversation to derive a semantic understanding of the conversation, and uses the semantic understating as a prompt component of the prompt. In some embodiments, generating the visual representation of the background layer includes receiving, at the messaging application, the visual representation from the automatically generated visual media application.

In some embodiments, the automatically-generated visual media is generated at least partially using a respective artificial intelligence or machine-learning (ML) model (e.g., the first ML model, a second ML model described herein, or other ML model). In some embodiments, the respective ML model is a model of the electronic device (e.g., built-in the electronic device or part of the operating system of the electronic device). In some embodiments, the respective ML model is associated with a system distinct from the electronic device. For example, the electronic device optionally enables access to the respective ML model for generating visual media. Thus, in some embodiments, the respective ML model is integrated into the electronic device for extending visual media generation services or capabilities from the respective ML model to the electronic device. In some embodiments, while the electronic device displays the messaging user interface, the electronic device receives (or, optionally, detects), via the one or more input devices, a prompt including one or more prompt components associated with the messaging conversation. In some embodiments, a prompt component includes text, keywords, images, video, special characters, visual media, and/or other inputs describing a concept (e.g., style, theme, mood, activity, costume, accessory, places, graphics, or visual characteristic that will influence the generation of the visual media). In some embodiments, the prompt component includes a computer-generated suggested concept (or, optionally referred to as a predefined concept) or a recognized concept. For example, the electronic device optionally uses the respective ML model and/or language/image understanding capabilities (e.g., built-in the electronic device or part of the operating system of the electronic device) to recognize the prompt component as a particular concept. In some embodiments, and as described in more detail below, in response to receiving (or, optionally, detecting) the prompt including one or more prompt components, the electronic device presents one or more respective ML models capable of generating visual media based on the prompt. In some embodiments, generation of visual media using the respective ML model optionally includes the use of one or more program(s) and/or algorithm(s) applied to one or more datasets to recognize patterns, and/or make predictions based on the prompt received to result in generated visual media, and optionally includes the use of machine learning algorithms.

In some embodiments, the prompt determined by the electronic device includes one or more prompt components. In some embodiments, the electronic device determines one or more prompt components without any user input to specify the one or more prompt components. In some embodiments, a first prompt component of the one or more prompt components corresponds to a first predefined concept (e.g., described herein) that will influence the generation of the visual media. In some embodiments, the prompt further includes a prompt component associated with a desired style (e.g., a background image) and/or source (e.g., a messaging application source). For example, the electronic device determines automatically two prompt components, one indicating a background image, and another indicating the messaging application, without any user interaction. In some embodiments, the first prompt component includes an indication of a respective ML model (e.g., first ML model) capable of generating visual media based on the first predefined concept. In some embodiments, the electronic device automatically generates the visual media based on the first prompt component (e.g., without receiving or detecting user input corresponding to a request to generate the visual media based on the first prompt component). In some embodiments, the electronic device receives (or, optionally, detects) a user input corresponding to a request to change the first prompt component to a second prompt component, different from the first prompt component. For example, the second prompt component optionally corresponds to a second predefined concept, different from the first predefined concept associated with the first prompt component.

In some embodiments, in response to detecting that the one or more criteria are satisfied (1106), electronic device displays (1114), via the one or more display generation components, a user interface element, such as second notification element 1010b in Fig. 10D, associated with the generated visual representation of the respective background layer within the messaging user interface. In some embodiments, the user interface element comprises a preview image of the generated visual representation, along with one or more affordances (e.g., a button to apply the generated background and/or a button to dismiss the user interface element and forgo applying the generated background). In some embodiments, the user interface element includes one or more text objects (e.g., to indicate to a user that a background has been automatically generated and to provide instructions for interaction with the user interface element). In some embodiments, the user interface element is displayed in a peripheral region of the messaging user interface and/or in a peripheral region of the messaging conversation displayed in the messaging user interface.

In some embodiments, generating (1108) the visual representation of the respective background layer includes: in accordance with a determination that the messaging conversation includes first content, generating (1110) a first generated visual representation associated with the first content, such as is depicted in Fig. 10D where a visual representation of a background layer including a sunset is generated based on the current messages in Fig. 10D.

In some embodiments, generating (1108) the visual representation of the respective background layer includes: in accordance with a determination that the messaging conversation includes second content different from the first content, generating (1112) a second generated visual representation associated with the second content, such as if messages 1001d and 1001e depicted in Fig. 10D included different prompt components that would result in a different visual representation of a background layer being generated. In some embodiments, the generated visual representation of the background varies based on the content present in the messaging conversation (e.g., first content and/or second content). In some embodiments, the electronic device generates a prompt having a number of prompt components based on the content of the messaging conversation for use with the automatically generated visual media application. For example, when the electronic device detects that the first user and the second user have started talking about golfing in the recent text messages, the electronic device detects this new topic, and presents an automatically generated background associated with golf to the first user. In this example, the first user chooses to accept the new background, which is then applied to the background layer of the messaging conversation. In some embodiments, the generated visual representation associated with the first and/or second content includes an image, a video, and/or an image having one or more dynamic characteristics (e.g., a static image with one or more properties that can be adjusted by the electronic device). In some embodiments, the generated visual representation is applied to the background layer of the messaging conversation. In some embodiments, applying the generated visual representation to the background layer includes displaying the generated visual representation as a background of the messaging conversation with representations of messages in the messaging conversation overlaid on the background layer, as described further in relation to methods 700 and 900.

In some embodiments, the user interface element within the messaging user interface is a notification element, such as first notification element 1010a depicted in Fig. 10B.

In some embodiments, the messaging user interface includes a messages portion, a text entry portion (e.g., a keyboard), and/or a user information portion. In some embodiments, the notification element is displayed within the messages portion of the messaging user interface, optionally in a peripheral region of the messaging portion (e.g., at the top of the messages portion of the messaging user interface). In some embodiments, the notification element is displayed within the messaging user interface, optionally in a peripheral region of the messaging user interface (e.g., at the top of the messaging user interface). In some embodiments, the notification element is displayed within a notifications bar of a user interface of the electronic device or within a notifications bar of the messaging user interface. In some embodiments, the notification element is overlaid on the messaging conversation of the messaging user interface. In some embodiments, the notification element is displayed at a predetermined location within the messaging user interface and/or at a predetermined location on the display of the electronic device. In some embodiments, the predetermined location is a location at which other types of notifications (e.g., device-level notifications) are displayed. In some embodiments, the predetermined location is a location different from a location where other types of notifications (e.g., device-level notifications) are displayed.

In some embodiments, the notification element is displayed temporarily, via the one or more display generation components, for only a certain amount of time (e.g., 1, 5, 10, 30, or 60 seconds). In some embodiments, the notification element is displayed temporarily, via the one or more display generation components, until a certain amount of messages in the messaging conversation are received/sent (e.g., 1, 3, 5, 10, or 15 messages sent after the notification element was initially displayed). In some embodiments, the notification element is not displayed after the certain amount of time or certain amount of messages has been exceeded. In some embodiments, the notification element is displayed, via the one or more display generation components, until the electronic device receives an input to dismiss the notification element (e.g., via an input directed towards an affordance of the notification element). In some embodiments, the notification element includes one or more affordances, optionally an affordance for applying the respective generated visual representation as a background layer and/or an affordance for dismissing the notification element. In some embodiments, the notification element includes a preview image of the respective generated visual representation. In some embodiments, upon receiving an input directed towards the preview image, the electronic device displays the preview image at a larger size (e.g., displays at full screen to allow a user to review the image).

In some embodiments, electronic device 500 detects, via the one or more input devices, an input directed towards an affordance in the user interface element, such as is illustrated by contact 1050a directed towards "Apply" option 1012a in Fig. 10B or by contact 1050b directed towards "Apply" option 1012b in Fig. 10D. In some embodiments, electronic device 500, in response to detecting the input, displays, via the one or more display generation components, the messaging user interface with the respective background layer, such as is illustrated by the application of the respective background layer in Fig. 10C or 10E. In some embodiments, the affordance includes an apply button for applying the generated respective background layer to the current messaging user interface. In some embodiments, in response to detecting the input directed towards the apply button, the electronic device ceases displaying the user interface element. In some embodiments, displaying the messaging user interface with the respective background layer includes removing the displayed background layer from the messaging user interface and adding the respective background layer to the messaging user interface, such as is illustrated by changing the background layer between Figs. 10D and 10E. In some embodiments, displaying the messaging user interface with the respective background layer includes displaying the content of the messaging conversation (e.g., individual text messages) overlaid onto the respective background layer (e.g., rather than being displayed overlaid onto the prior background layer). In some embodiments, displaying the message user interface with the respective background layer includes applying the respective background layer to the messaging user interface associated with the electronic device. In some embodiments, displaying the message user interface with the respective background layer includes applying the respective background layer to a messaging user interface associated with an electronic device of the second user. In some embodiments, applying the respective background layer to a messaging user interface associated with an electronic device of the second user includes sharing a background layer between the two electronic devices, which may share one or more characteristics with the background sharing methods described in methods 700 and 900 (e.g., while the first electronic device displays a second visual representation of a first background, detecting a first event, corresponding to one or more inputs from a second user, requesting to display the messaging conversation with a second background). In some embodiments, the electronic device shares one or more data with the electronic device of the second user in response to detecting the input, so that the electronic device of the second user updates the background layer of the messaging conversation on the electronic device of the second user.

In some embodiments, generating, via the automatically generated visual media application, the visual representation of the respective background layer for the messaging user interface based on the contents of the messaging conversation includes: generating the visual representation of the respective background layer for the messaging user interface based on a respective prompt based on respective content of the messaging conversation, such as a prompt based on a first prompt component 1005a, a second prompt component 1005b, and a third prompt component 1005c as illustrated in Fig. 10B. In some embodiments, the visual representation of the respective background layer is based on a prompt. In some embodiments, the messaging application generates a prompt based on the current messaging conversation and transfers the prompt to the automatically-generated visual media application. In some embodiments, the automatically-generated visual media application receives the prompt and generates a visual representation of a background layer based on the prompt. In some embodiments, the prompt includes or more prompt components. In some embodiments, at least one prompt component of the prompt includes an element (e.g., a text element) derived from the contents of the messaging conversation. In some embodiments, the element includes text taken directly from the messaging conversation and/or an indicator of a topic derived by processing content (e.g., text) within the messaging conversation.

In some embodiments, in accordance with the determination that the messaging conversation includes the first content, such as messages 1001a through 1001c shown in Fig. 10C, the respective content is the first content, and

In some embodiments, in accordance with the determination that the messaging conversation includes the second content, such as messages 1001d and 1001e shown in Fig. 10D, the respective content is the second content.

In some embodiments, when the respective content is the first content, the prompt includes a first prompt component corresponding to the first content. In some embodiments, when the respective content is the second content, the prompt includes a second prompt component corresponding to the second content. In some embodiments, the first prompt component and second prompt component correspond to semantic content of the generated visual representation of the respective background layer.

In some embodiments, the electronic device 500 displays, via the one or more display generation components, a respective user interface associated with the automatically generated visual media application, the respective user interface different from the messaging user interface, such as is illustrated by the user interface of the automatically-generated visual media application shown in Fig. 10M. (e.g., the respective user interface is not a user interface of the messaging application); In some embodiments, the respective user interface associated with the automatically generated visual media application includes a user interface displayed in one or more applications. In some embodiments, the one or more application includes the automatically-generated visual media application (e.g., the respective user interface is a user interface of the automatically-generated visual media application). In some embodiments, the one or more applications includes an application that is not the automatically-generated visual media application (e.g., the respective user interface is a user interface displayed within a notes application including one or more elements from the automatically-generated visual media application).

In some embodiments, while displaying the respective user interface, electronic device 500 detects that one or more second criteria are satisfied, such as is illustrated by change of the current messaging conversation to reflect a conversation with "Sarah" and the presence of messages 1001f through 1005g in the messaging conversation, as illustrated in Fig. 10I. In some embodiments, the one or more second criteria are satisfied in response to one or more of the following: detecting a sequence of inputs from a user, receiving a prompt from one or more user inputs, and/or receiving a request to generate an automatically-generated visual media item.

In some embodiments, in response to detecting that the one or more second criteria are satisfied, the electronic device 500 generates, via the automatically-generated visual media application, an automatically-generated visual media item based on a prompt corresponding to the respective prompt based on the contents of the messaging conversation, such as is illustrated in Fig. 10N where a prompt includes prompt components 1078a through 1078c, which correspond to prompt components 1005e through 1005g shown in Fig. 10I.

In some embodiments, the prompt corresponding to the respective prompt used to generate the automatically-generated visual media item is the same as the respective prompt that is based on respective content of the messaging application (e.g., a same prompt that is not based on the contents on the messaging conversation). In some embodiments, the prompt corresponding to the respective prompt and the respective prompt each include one or more same prompt components (e.g., identical prompt components). For example, the electronic device generates a respective prompt by processing the text in the messaging conversation (e.g., without further user input) and extracting key words as prompt components (e.g., "sun", "beach", "friends", and "volleyball"). This prompt is then sent from the messaging application to the automatically-generated visual media application. As another example, the user directly accesses the automatically-generated visual media application and creates a prompt based on the same prompt components (e.g., by typing "sun", "beach", "friends", and "volleyball" into a text entry field or selecting one or more affordances associated with these prompt components). As a result, the prompts provided to the automatically-generated visual media application in this example are the same regardless of the source of the prompt.

In some embodiments, the automatically-generated visual media item generated based on the respective prompt in response to detecting that the one or more first criteria are satisfied has a first appearance, such as is illustrated by preview 1011c shown in Fig. 10I.

In some embodiments, the automatically-generated visual media item generated based on the prompt corresponding to the respective prompt in response to detecting that the one or more second criteria are satisfied has a second appearance, different from the first appearance, such as is illustrated by preview 1080 shown in Fig. 10N having a different appearance than preview 1011c.

In some embodiments, even though the respective prompt and the prompt corresponding to the respective prompt each include one or more of the same prompt components (e.g., "sun", "beach", "friends", and "volleyball"), the appearance of each automatically-generated visual media item differs as a result of the origin of the prompt. For example, the automatically-generated visual media item having the first appearance includes a background image (e.g., having a 9:16 aspect ratio and/or a high-degree of blur), while the automatically-generated visual media item having the second appearance includes a default image (e.g., a square aspect ratio and/or high levels of detail).

In some embodiments, the automatically-generated visual media application utilizes a same machine-learning (ML) model to generate both the automatically-generated visual media item with the first appearance and the automatically-generated visual media item with the second appearance. In some embodiments, the automatically-generated visual media application utilizes different ML models to generate the automatically-generated visual media item with the first appearance and the automatically-generated visual media item with the second appearance.

In some embodiments, the automatically-generated visual media application receives an indication of a source of the prompt. For example, the automatically-generated visual media application generates an automatically-generated visual media item in accordance with an input prompt (e.g., the respective prompt and user-provided prompt) and an indication of the source of the input prompt. Accordingly, the output of the automatically-generated visual media application varies for same input prompts based on the indication of the source of the input prompt.

In some embodiments, the respective prompt includes a prompt component derived from one or more previously-sent messages in the messaging conversation, such as is shown by prompt components 1005e through 1005g being derived from messages 1001f through 1001h in Fig. 10I.

As discussed above, in some embodiments, a respective prompt includes or more prompt components. In some embodiments, at least one prompt component of the prompt includes an element (e.g., a text element) based on the contents of the messaging conversation (e.g., derived from the one or more previously-sent messages of the messaging conversation). In some embodiments, the contents of the messaging conversation includes text taken directly from one or more previously-sent messages in the messaging conversation and/or an indicator of a topic derived by processing one or more previously-sent messages within the messaging conversation. In some embodiments, the contents of the messaging conversation includes an image, a voice memo, and/or a location sent in one or more previously-sent messages in the messaging conversation. In some embodiments, the previously-sent messages include messages within the messaging conversation that were sent from the first user and/or messages within the messaging conversation that were sent from the second user (e.g., received by the first user). In some embodiments, the previously-sent messages include a certain number of the most recently sent messages in the messaging conversation (e.g., the most recent 1, 2, 3, 5, or 10 messages in the messaging conversation).

In some embodiments, the respective prompt includes a prompt component derived from one or more unsent messages in the messaging conversation, such as is illustrated by prompt component 1005d in unsent message 1002 in Fig. 10G. Optionally, the prompt component is derived before the unsent messages is sent to the messaging conversation and/or without the unsent messages having to be sent to the messaging conversation. As discussed above, in some embodiments, a respective prompt includes or more prompt components. In some embodiments, at least one prompt component of the prompt includes an element (e.g., a text element) derived from the one or more unsent messages of the messaging conversation. In some embodiments, the element includes content, including one or more of the types of content described above, included in one or more unsent messages in the messaging conversation and/or an indicator of a topic derived by processing one or more unsent messages within the messaging conversation. In some embodiments, the one or more unsent messages includes text currently present within a text entry user interface element. In some embodiments, upon detecting a user input directed towards an affordance in the text entry user interface element (e.g., a "send" button), the electronic device sends the one or more unsent messages (e.g., the one or more unsent messages become part of the messaging conversation and are visible by both the first user account and the second user account). In some embodiments, the one or more unsent messages includes a draft message saved by the electronic device. In some embodiments, the unsent message includes a message that was previously sent but was not delivered to the second electronic device. In some embodiments, the unsent message includes a message that was previously sent but was later deleted from the messaging conversation. In some embodiments, upon deleting the draft message, the unsent message is no longer part of the contents of the messaging conversation. In some embodiments, after the unsent message is sent, the unsent message continues to be part of the contents of the messaging conversation (e.g., as a previously sent message). In some embodiments, generating the visual representation of the respective background layer based on the contents of the messaging conversation includes generating the respective background layer based (e.g., at least in part) on the contents of one or more unsent messages in the messaging conversation.

In some embodiments, after generating the visual representation of the respective background layer and in response to detecting that one or more second criteria are satisfied including a criterion that is satisfied when the contents of the conversation change to include third content, the electronic device 500 generates, via the automatically generated visual media application, a visual representation of a second background layer for the messaging user interface based on the third content, such as is illustrated by the change in topic shown between Figs. 10C and 10D. In some embodiments, the criterion of the one or more second criteria includes a certain amount of elapsed time since previously displaying the user interface element associated with the generated visual representation of the respective background layer and/or since previously generating the visual representation of the respective background layer. In some embodiments, the criterion of the one or more second criteria includes a certain number of sent messages in the messaging conversation (e.g., sent by the first user and/or by the second user) since previously displaying the user interface element associated with the generated visual representation of the respective background layer and/or since previously generating the visual representation of the respective background layer. In some embodiments, the third content shares one or more characteristics with the first content and/or second content described above. In some embodiments, the third content is not included in the messaging conversation before the criterion is satisfied. For example, after generating a first recommended background layer in response to first content in the messaging conversation and displaying the recommendation to the first user, the electronic device generates a new recommended background layer after the conversation has continued (e.g., 5 new messages have been sent) and new content is present in the new messages of the messaging conversation.

In some embodiments, the one or more first and/or second criteria include a respective criterion when the contents of the conversation include respective (e.g., first, second, and/or third) content received within a certain number of the most recently sent messages in the messaging conversation or within a certain time-frame, as discussed above. For example, the respective criterion is met when the third content is present in the previous 20 messages and/or present within messages received within the last hour. In some embodiments, generating the visual representation of the second background layer shares one or more characteristics with generating the visual representation of the respective background layer discussed above. In some embodiments, the second background layer being based on the third content is optionally similar to the way that the background layer is based on the first and/or second content, as described above. In some embodiments, the visual representation of the second background layer is based on the third content and not based on the first and/or second content. In some embodiments, the visual representation of the second background layer is based on the third content in combination with the first content and/or the second content (e.g., the presence of the third content adds an additional prompt component to the existing prompt used by the automatically-generated visual media application to refine the generation of the background layer).

In some embodiments, after generating the visual representation of the respective background layer and in response to detecting that one or more second criteria are satisfied including a criterion that is satisfied when the contents of the conversation change to include third content, the electronic device 500 displays, via the one or more display generation components, a second user interface element associated with the generated visual representation of the second background layer within the messaging user interface, such as notification element 1010b having preview 1011b as illustrated in Fig. 10D. In some embodiments, the second user interface element is a same user interface element as the user interface element discussed above in relation to the respective background layer (e.g., a notification element in the messaging user interface). In some embodiments, displaying a second user interface element includes ceasing to display the first user interface element, and optionally displaying the second user interface element at the location at which the first user interface element was displayed. In some embodiments, displaying a second user interface element includes concurrently displaying the first user interface element and the second user interface element. In some embodiments, the first and/or second user interface element includes one or more affordances, optionally an affordance for applying the respective generated visual representation as a background layer and/or an affordance for dismissing the respective user interface element. In some embodiments, the first and/or second user interface element includes a preview image of the respective generated visual representation. In some embodiments, upon receiving an input directed towards the preview image, the electronic device displays the preview image at a larger size (e.g., displays at full screen to allow a user to review the image). For example, when the first user interface element is an element in a notification bar of the messaging user interface and is being displayed at the time that the second background layer is generated, the electronic device displays the notification bar of the messaging user interface with both the first user interface element and the second user interface element (e.g., two distinct recommended background layers are being displayed to the user).

In some embodiments, electronic device 500 displays the user interface element associated with the generated visual representation of the respective background layer within the messaging user interface includes displaying the representation of the respective background layer in a notification element, such as notification element 1010b shown in Fig. 10D. Optionally, the notification element is as described above with reference to a notification element. In some embodiments, the notification element is displayed at a predetermined location within the messaging user interface and/or at a predetermined location on the display of the electronic device. In some embodiments, the predetermined location is a location at which other types of notifications (e.g., device-level notifications) are displayed. In some embodiments, the predetermined location is a location different from a location where other types of notifications (e.g., device-level notifications) are displayed. In some embodiments, the notification element includes one or more affordances, optionally an affordance for applying the respective generated visual representation as a background layer and/or an affordance for dismissing the notification element. In some embodiments, the notification element includes a preview image of the respective generated visual representation. In some embodiments, upon receiving an input directed towards the preview image, the electronic device displays the preview image at a larger size (e.g., displays at full screen to allow a user to review the image).

In some embodiments, displaying the second user interface element includes displaying the representation of the generated visual representation of the second background layer within the messaging user interface in the notification element, such as is shown by second notification element 1010b being displayed at the top of the messaging conversation in Fig. 10D.

In some embodiments, the notification element includes a notification bar or notification window within the messaging user interface or a user interface of the electronic device. In some embodiments, the representation of the generated visual representation comprises a preview image of the generated visual representation. In some embodiments, displaying the second user interface element includes displaying the user interface element with one or more affordances (e.g., a button to apply the generated background and/or a button to dismiss the user interface element and forgo applying the generated background). In some embodiments, as discussed above, displaying the second user interface element, includes ceasing to display the first user interface element, and optionally displaying the second user interface element at the location at which the first user interface element was displayed.

In some embodiments, while displaying the messaging user interface, electronic device 500 detects, via the one or more input devices, a sequence of inputs directed towards one or more affordances in the messaging user interface, such as contact 1050c as shown in Fig. 10E. In some embodiments, in response to detecting the sequence of inputs, electronic device 500 displays, via the one or more display generation components, a control panel user interface for the messaging conversation, including one or more options for changing the background layer, such as is shown by the display on the control panel user interface in Fig. 10F. In some embodiments, the control panel user interface includes one or more affordances for selecting the one or more options for changing the background layer. In some embodiments, the one or more affordances includes a preview of the visual representation of the second background layer. For example, when the electronic device detects that a topic change has occurred in the messaging conversation, the electronic device generates the visual representation of the second background layer and displays a preview of the visual representation in the control panel user interface. In some embodiments, the control panel interface displays a plurality of options for setting a background layer, as will be discussed in further detail below (e.g., a suggested automatically-generated background, one or more suggested prompts for generating an automatically-generated background, an affordance for generating an automatically-generated background, an affordance for removing the current background, a preview of a photo for use as a background, and/or a preview of a color gradient for use as a background).

In some embodiments, the sequence of inputs directed towards one or more affordances includes a selection of one or more selectable options to view a control panel user interface of the messaging conversation. In some embodiments, the control panel user interface includes one or more options for adjusting parameters associated with the messaging conversation of the messaging user interface. In some embodiments, the one or more options are controlled via one or more user inputs directed towards the one or more options. For example, the one or more options include: one or more options for updated information associated with the second user account, display parameters for the messaging conversation, an option for toggling on read-receipts for messages, and/or one or more notification parameters for the messaging conversation. For example, the messaging user interface displays a banner above the messaging conversation including a name of the second user account and optionally a photo of the second user account. For example, upon directed a user input (e.g., a press on a touch screen) directed towards the name or the photo of the second user account, the electronic device hides the messaging user interface and displays the control panel user interface. In some embodiments, a first option of the one or more options includes a visual representation of the second background layer, such as a control panel preview 1022a to provide an additional suggested background layer as shown in Fig. 10F.

In some embodiments, when the contents of the messaging conversation changes, the visual representation of the second background layer changes correspondingly to include automatically-generated visual media corresponding to the changed contents of the messaging conversation. In some embodiments, a second option of the one or more options is displayed concurrently with the first option. In some embodiments, the second option includes a visual representation of a background layer that is not generated via an automatically-generated visual media application (e.g., one or more predefined background layers). In some embodiments, the visual representation of the background layer associated with the first option changes in response to changes in the contents of the messaging conversation (e.g., first, second, and/or third background layers, as discussed above).

In some embodiments, in response to detecting a user input directed towards an affordance associated with the first option (e.g., the option including the visual representation of the second background layer), the electronic device applies the visual representation of the second background layer to the background of the messaging conversation.

In some embodiments, electronic device 500 displays, via the one or more display generation components, a second messaging user interface associated with the messaging application, such as the user interface associated with Sarah displayed in Fig. 10I. In some embodiments, the second messaging user interface includes a second messaging conversation between a user account of the electronic device and a third user account different from the second user account, such as a conversation including messages 1001f through 1001g as in Fig. 10I, and a second background layer different from the background layer, such as the default background layer shown in Fig. 10I. In some embodiments, different background layers are applied to different messaging user interfaces associated with different messaging conversations. For example, the messaging application of the electronic device displays the first messaging user interface having the first messaging conversation associated with the second user account and displays the second messaging user interface having the second messaging conversation associated with the third user account. In some embodiments, the messaging application switches between the first messaging user interface and the second messaging user interface in response to detecting a sequence of user inputs directed towards one or more affordances in the messaging application.

In some embodiments, while displaying the second messaging user interface with the second background layer, electronic device 500 detects that one or more second criteria are satisfied including a criterion that is satisfied based on contents of the second messaging conversation, such as if a certain time has elapsed before showing the suggested automatically-generated background in Fig. 10I. In some embodiments, the one or more second criteria, second background layer, second messaging user interface, second messaging conversation, and second user interface element share one or more characteristics with the one or more criteria, background layer, messaging user interface, messaging conversation, and user interface element described above. For example, the generation and displaying of the visual representation of the second background layer is performed in the same or analogous way for the second messaging conversation as it is in the first messaging conversation.

In some embodiments, in response to detecting that the one or more second criteria are satisfied, the electronic device generates, via the automatically generated visual media application, a visual representation of a second background layer for the second messaging user interface based on the contents of the second messaging conversation, such as is illustrated by preview 1011c in Fig. 10I. Optionally, generating a visual representation of a second background layer is similar to the manner of generating, via the automatically-generated visual media application, the visual representation of the respective background layer for the messaging user interface, as described above.

In some embodiments, in response to detecting that the one or more second criteria are satisfied, electronic device 500 displays, via the one or more display generation components, a second user interface element, such as notification element 1010c, associated with the generated visual representation of the second background layer second within the messaging user interface, optionally similar to the manner of displaying, via the one or more display generation components, the user interface element associated with the generated visual representation of the respective background layer, as described above.

In some embodiments, generating the visual representation of the second background layer is independent of generating the visual representation of the background layer, such as is shown by the different backgrounds suggested to the user in Fig. 10I versus Fig. 10E.

In some embodiments, the generation of the visual representation of the second background layer is independent of the generation of the visual representation of the background (e.g., the generation of the visual representation of the second background layer is not affected by, nor does it affect, the generation of the visual representation of the background layer). In some embodiments, the contents of the second messaging conversation are different from the contents of the messaging conversation and the visual representation of the second background layer is different from the visual representation of the background layer. In some embodiments, the contents of the second messaging conversation are the same as the contents of the messaging conversation and the visual representation of the second background layer is the same as the visual representation of the background layer. In some embodiments, the electronic device detects an input directed towards an affordance in the second user interface element, and in response to detecting the input, displays the second messaging user interface with the second background layer (e.g., without being affected by, or affecting, the background layer of the messaging user interface described above).

In some embodiments, electronic device 500 detects, via the one or more input devices, one or more inputs corresponding to a request to generate a third visual representation of the respective background layer, such as is illustrated by contact 1050h directed towards the "Generate Background" option 1020 in Fig. 10J, including receiving one or more user-provided prompt components, such as if a prompt component were selected via content entry field 1076 in Fig. 10K.

In some embodiments, in response to detecting the one or more inputs, electronic device 500 generates the third visual representation of the respective background layer based on the one or more received user-provided prompt components, such as if the user-provided prompt components were selected in Fig. 10K to generate an automatically-generated visual media item.

In some embodiments, receiving one or more user-provided prompt components includes receiving the one or more user-provided prompt components from the messaging application (e.g., from a text entry field displayed within the messaging application). In some embodiments, receiving one or more user-provided prompt components includes receiving the one or more user-provided prompt components from the messaging user interface and/or from a control panel user interface (as discussed above) of the automatically generated visual media application.

In some embodiments, the one or more user-provided prompt components are different from prompt components associated with the first and/or second content, and the third visual representation of the respective background layer is different from the first and/or second visual representation of the respective background layer. In some embodiments, the one or more user-provided prompt components are the same as prompt components associated with the first and/or second content, and the third visual representation of the respective background layer is the same as the first and/or second visual representation of the respective background layer.

In some embodiments, the third visual representation of the respective background layer is independent of any contents of the messaging conversation (e.g., it is solely generated based on the user-provided prompt components), such as if all prompt components were entered by the user via content entry field 1076 in Fig. 10K.

In some embodiments, receiving one or more user-provided prompt components includes receiving the prompt components from an application that is not the messaging application. In some embodiments, receiving one or more user-provided prompt components includes receiving the prompt components from an automatically-generated visual media application. In some embodiments, receiving one or more user-provided prompt components includes displaying a text entry field to the user and receiving inputs from the text entry field. In some embodiments, receiving one or more user-provided prompt components includes displaying a user interface of an automatically-generated visual media application with a text entry field and receiving inputs from the text entry field of the automatically-generated visual media application. In some embodiments, displaying the user interface of an automatically-generated visual media application is performed in response to detecting one or more inputs directed towards one or more affordances in the messaging application.

In some embodiments, after the third visual representation of the respective background layer is generated, and in response to receiving one or more user inputs (e.g., user inputs directed towards an affordance in the automatically-generated visual media application or the messaging application), the electronic device applies the third visual representation of the respective background layer as the background of the messaging conversation (e.g., in a way similar to applying the first or second visual representation, as discussed above), such as if the user selects an "Apply" option within the automatically-generated visual media application after the automatically-generated visual media item is generated.

For example, a user navigates to a control panel user interface of the messaging application, and provides a user input directed towards an affordance (e.g., a button labelled "generate a background"). In response to detecting the user input, the electronic device launches the automatically-generated visual media application and allows the user to provide one or more user-provided prompt components. In some embodiments, user-provided components are provided by detecting inputs on a user interface (e.g., a text entry field). Optionally, as discussed further below, one or more prompt components are received from contents of the messaging application (e.g., to autofill the prompt based on the contents of the messaging conversation). For example, upon clicking a "generate a background" button and opening the automatically-generated visual media application, a number of prompt components are passed to the automatically-generated visual media application based on the messaging conversation (e.g., "sun", "beach"). The user then provides one or more additional prompt components to refine the generation (e.g., "surfing") and clicks one or more affordances for generating the automatically-generated visual media item.

In some embodiments, generating the third visual representation of the respective background layer includes displaying, via the one or more display generation components, one or more suggested prompt components (e.g., within the interface of the automatically generated visual media application), where the one or more suggested prompt components are based on the contents of the messaging conversation, such as is displayed by Fig. 10K where prompt components 1070a through 1070c are derived from the messaging conversation as illustrated in Fig. 10I.

In some embodiments, the electronic device displays the one or more suggested prompt components within the interface of the automatically-generated visual media application. In some embodiments, the one or more suggested prompt components include topics derived from the contents of the messaging conversation. In some embodiments, the electronic device transfers one or more of the suggested prompt components from the messaging application (e.g., based on the contents of the messaging conversation) to the automatically-generated visual media application to generate the one or more suggested prompt components. In some embodiments, in response to detecting first content, the electronic device suggests a first suggested prompt component based on the first content. In some embodiments, in response to detecting second content, the electronic device suggests a second suggested prompt component based on the second content. In some embodiments, in response to detecting a user input directed towards one of the one or more suggested prompt components in the user interface of the automatically-generated visual media application, the automatically-generated visual media application adds the selected suggested prompt component as a new prompt component for generating the respective visual representation of the respective background layer. In some embodiments, the one or more suggested prompt components are displayed within the user interface of the messaging conversation and/or a control panel user interface. For example, there is a portion of the messaging user interface or a control panel user interface having a list of suggestions based on the text of the messaging conversation (e.g., "a day at the beach with friends"). In this example, the user can select the suggested prompt components and initiate a generation of the third visual representation. As discussed above, the one or more suggested prompt components are passed to the automatically-generated visual media application, and the user can then provide one or more additional user-provided prompt components before providing a user input to generate the third representation.

In some embodiments, electronic device 500 displays, via the one or more display generation components, a control panel user interface, including one or more control elements associated with the messaging conversation including a first control element that includes the generated visual representation of the respective background layer, such as control panel previews 1022a through 1022d as shown within control panel user interfaces shown in Fig. 10F or 10J.

In some embodiments, the control panel user interface shares one or more characteristics with the control panel user interface discussed above. In some embodiments, the one or more control elements include one or more visual representations of the background layers generated by an automatically-generated visual media application. In some embodiments, the one or more control elements share one or more characteristics with the one or more options discussed above. In some embodiments, selection of the first control element causes the electronic device to apply the generated visual representation of the respective background layer to the messaging user interface.

In some embodiments, while displaying the control panel user interface including the first control element, electronic device displays, via the one or more display generation components, a second control element in the control panel user interface, such as "Photo" option 1019b as shown in Fig. 10F, that, when selected, causes the electronic device to apply a third visual representation of the background layer to the messaging user interface, wherein the third visual representation is based on a photograph accessible on the electronic device.

In some embodiments, the second control element includes a preview of a photograph. In some embodiments, the photograph is not an automatically-generated visual media item (e.g., not generated from a ML model). In some embodiments, the photograph is an image previously acquired by one or more image sensors. In some embodiments, the second control element is displayed concurrently with the first control element. In some embodiments, the photograph is an image from a visual media library on the electronic device (e.g., a visual media library associated with the user account of the electronic device). In some embodiments, the second control element includes previews of a plurality of photographs (optionally from the visual media library). In some embodiments, the photograph previewed by the second control element is a recent photograph from the visual media library. In some embodiments, in accordance with selecting a preview of a photograph of the one or more photographs, the electronic device applies the photograph associated with the selected preview as the background layer. Additionally or alternatively, in some embodiments, the second control element includes an option to select a photograph from a visual media library (e.g., a user interface associated with the visual media library is displayed in response to selecting the second control element for selecting a respective photograph). In some embodiments, the electronic device applies one or more modifications and/or visual effects to the photograph when applying the photograph as the background layer (e.g., trimming the photograph to match an aspect ratio of the background and/or reducing a brightness of the photograph).

In some embodiments, while displaying the control panel portion including the first control element, electronic device 500 displays, via the one or more display generation components, a second control element in the control panel portion, such as "Color" option 1019c, that, when selected, causes the electronic device to apply a third visual representation of the background layer to the messaging user interface, wherein the third visual representation includes a color gradient, such as is illustrated by the color gradient background being applied to the messaging conversation in Fig. 10G.

In some embodiments, the second control element includes a preview of a color gradient (e.g., an image having at least two colors and a smooth transition between the at least two colors in the image). In some embodiments, the electronic device receives one or more user inputs to define a first color of the color gradient, a second color of the color gradient, and optionally one or more parameters of the color gradient (e.g., a gradient curve and/or an orientation of the color gradient). for example, the user specifies two colors (light blue, and dark blue) and specifies that the light blue is at the top of the gradient and that the dark blue is at the bottom of the gradient. in response, the electronic device generates a color gradient between the light blue and dark blue in the specified orientation. In some embodiments, the second control element includes previews of a plurality of color gradients. In some embodiments, in accordance with selecting a preview of a color gradient, the electronic device applies the color gradient associated with the selected preview as the background layer. In some embodiments, the color gradient includes a pre-defined color gradient. In some embodiments, the color gradient includes a user-defined color gradient (e.g., a gradient defined between two or more colors selected by one or more user inputs).

In some embodiments, while displaying the control panel portion including the first control element, electronic device 500 displays, via the one or more display generation components, a second control element in the control panel portion, such as "None" option 1019a, that, when selected, causes the electronic device to apply a third visual representation of the background layer to the messaging user interface. In some embodiments, the third visual representation includes a default background irrespective of a respective background of the messaging conversation set by the second user account, such as is illustrated by the default backgrounds displayed in Fig. 10A and Fig. 10I.

In some embodiments, the second control element includes an affordance (e.g., a button) for turning off backgrounds and/or removing a current background layer applied to the messaging conversation. In some embodiments, the electronic device detects a selection of the affordance (e.g., a button press, a touch input, an air pinch gesture, attention of the user (e.g., a gaze input), a keyboard entry, and/or a mouse or trackpad click) and then applies a third visual representation of the background layer, wherein the third visual representation includes a default background. In some embodiments, the default background is a single color (e.g., a white background or black background) applied to the messaging conversation. In some embodiments, applying the default background to the messaging conversation of the electronic device is irrespective of any background applied to a messaging conversation of a second electronic device associated with the second user account. In some embodiments, for a conversation between two user accounts (e.g., a first messaging conversation on the electronic device and a second messaging conversation on a second electronic device), different backgrounds are applied to the first messaging conversation and to the second messaging conversation (e.g., the electronic device applies a background to the first messaging conversation and the second electronic device applies a different background the second messaging conversation). In other embodiments, in response to receiving a selection of the second control element, the electronic device causes the second electronic device associated with the second user account to turn off a background and/or remove a current background layer applied to the messaging conversation of the second electronic device. In some embodiments, applying the respective background layer to a messaging user interface associated with an electronic device of the second user includes sharing a background layer between the two electronic devices, which may share one or more characteristics with the background sharing methods described in methods 700 and 900 (e.g., while the first electronic device displays a second visual representation of a first background, detecting a first event, corresponding to one or more inputs from a second user, requesting to display the messaging conversation with a second background).

In some embodiments, electronic device 500 detects, via the one or more input devices, an input selecting the first control element, and in response to detecting the input selecting the first control element, applies the generated visual representation of the respective background layer to the messaging user interface, such as if first control panel preview 1022a were selected in Fig. 10F and the electronic device 500 applied the automatically-generated visual media background associated with the preview 1022a as a background layer of the current conversation.

As discussed above, in some embodiments, the first control element includes the generated visual representation of the respective background layer. In response to detecting an input selecting the first control element (e.g., a button press directed towards a preview of the generated visual representation followed by a button press on an "apply background" button), the electronic device applies the generated visual representation of the respective background layer to the messaging user interface, as discussed above. In some embodiments, applying the generated visual representation of the respective background layer shares one or more characteristic with displaying the messaging user interface with the respective background layer. In some embodiments, applying the generated visual representation of the respective background layer includes displaying the content of the messaging conversation (e.g., individual text messages) overlaid onto the respective background layer (e.g., rather than being displayed overlaid onto the prior background layer). In some embodiments, in response to detecting an input directed towards a second control element, different from the first control element, the electronic device applies a different generated visual representation of the background layer to the messaging user interface.

It should be understood that the particular order in which the operations in Fig. 11 have been described is merely exemplary and is not intended to indicate that the described order is the only order in which the operations could be performed. One of ordinary skill in the art would recognize various ways to reorder the operations described herein. Additionally, it should be noted that details of other processes described herein with respect to other methods described herein (e.g., methods 700 and/or 900) are also applicable in an analogous manner to method 1100 described above with respect to Fig. 11. For example, the operation of displaying, via one or more display generation components, a messaging user interface associated with a messaging application, including a messaging conversation between a user account of the electronic device and a second user account, and a background layer described above with reference to method 1100 optionally has one or more of the characteristics of displaying, via one or more display generation components, a messaging user interface associated with a messaging application described herein with reference to other methods described herein (e.g., methods 700 and/or 900). For brevity, these details are not repeated here.

The operations in the information processing methods described above are, optionally, implemented by running one or more functional modules in an information processing apparatus such as general purpose processors (e.g., a as described with respect to Figs. 1A-1B, 3, 5A-5H) or application specific chips. Further, the operations described above with reference to Fig. 11 are, optionally, implemented by components depicted in Figs. 1A-1B. For example, displaying operation 1102 and detecting operation 1104 are, optionally, implemented by event sorter 170, event recognizer 180, and event handler 190. When a respective predefined event or sub-event is detected, event recognizer 180 activates an event handler 190 associated with the detection of the event or sub-event. Event handler 190 optionally utilizes or calls data updater 176 or object updater 177 to update the application internal state 192. In some embodiments, event handler 190 accesses a respective GUI updater 178 to update what is displayed by the application. Similarly, it would be clear to a person having ordinary skill in the art how other processes can be implemented based on the components depicted in Figs. 1A-1B.

As described above, one aspect of the present technology is tracking and displaying content. The present disclosure contemplates that in some instances, the data utilized may include personal information data that uniquely identifies or can be used to contact or locate a specific person. Such personal information data can include demographic data, content consumption activity, location-based data, telephone numbers, email addresses, twitter ID's, home addresses, data relating to a person's likeness, name, date of birth, or any other identifying or personal information.

The present disclosure recognizes that the use of such personal information data, in the present technology, can be used to the benefit of users. For example, analyzing entered text to detect when a messaging conversation or background content is unsafe, and a background associated with the messaging conversation should not be displayed. Accordingly, use of such personal information data enables users to use electronic devices to perform enhanced operations with mathematical functions and expressions. Further, other uses for personal information data that benefit the user are also contemplated by the present disclosure. For instance, analyzing a user's handwriting may enhance detection of content which includes sensitive content.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of location services, the present technology can be configured to allow users to select to "opt in" or "opt out" of participation in the collection of personal information data during registration for services or anytime thereafter. In another example, users can select not to enable recording of personal information data in a specific application (e.g., first application and/or second application). In addition to providing "opt in" and "opt out" options, the present disclosure contemplates providing notifications relating to the access or use of personal information. For instance, a user may be notified upon initiating content collection that their personal information data will be accessed and then reminded again just before personal information data is accessed by the device(s).

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, an electronic device generates generative visual media with respect to background content and/or a background layer without associating the content with personal user data.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Some embodiments described herein can include use of learning and/or non-learning-based process(es). The use can include collecting, pre-processing, encoding, labeling, organizing, analyzing, recommending and/or generating data. Entities that collect, share, and/or otherwise utilize user data should provide transparency and/or obtain user consent when collecting such data. The present disclosure recognizes that the use of the data in the process for generating, via an automatically-generated visual media application, a visual representation of a respective background layer for the messaging user interface based on the contents of the messaging conversation can be used to benefit users. For example, the data can be used to train models that can be deployed to improve performance, accuracy, and/or functionality of applications and/or services. Accordingly, the use of the data enables the visual media generation using a process for generating, via an automatically-generated visual media application, a visual representation of a respective background layer for the messaging user interface based on the contents of the messaging conversation can be used to benefit users to adapt and/or optimize operations to provide more personalized, efficient, and/or enhanced user experiences. Such adaptation and/or optimization can include tailoring content, recommendations, and/or interactions to individual users, as well as streamlining processes, and/or enabling more intuitive interfaces. Further beneficial uses of the data in the visual media generation using a process for generating, via an automatically-generated visual media application, a visual representation of a respective background layer for the messaging user interface based on the contents of the messaging conversation are also contemplated by the present disclosure.

The present disclosure contemplates that, in some embodiments, data used by the visual media generation using a process for generating, via an automatically-generated visual media application, a visual representation of a respective background layer for the messaging user interface based on the contents of the messaging conversation includes publicly available data. To protect user privacy, data may be anonymized, aggregated, and/or otherwise processed to remove or to the degree possible limit any individual identification. As discussed herein, entities that collect, share, and/or otherwise utilize such data should obtain user consent prior to and/or provide transparency when collecting such data. Furthermore, the present disclosure contemplates that the entities responsible for the use of data, including, but not limited to data used in association with the visual media generation using a process for generating, via an automatically-generated visual media application, a visual representation of a respective background layer for the messaging user interface based on the contents of the messaging conversation, should attempt to comply with well-established privacy policies and/or privacy practices.

For example, such entities may implement and consistently follow policies and practices recognized as meeting or exceeding industry standards and regulatory requirements for developing and/or training the visual media generation using a process for generating, via an automatically-generated visual media application, a visual representation of a respective background layer for the messaging user interface based on the contents of the messaging conversation. In doing so, attempts should be made to ensure all intellectual property rights and privacy considerations are maintained. Training should include practices safeguarding training data, such as personal information, through sufficient protections against misuse or exploitation. Such policies and practices should cover all stages of the visual media generation using a process for generating, via an automatically-generated visual media application, a visual representation of a respective background layer for the messaging user interface based on the contents of the messaging conversation development, training, and use, including data collection, data preparation, model training, model evaluation, model deployment, and ongoing monitoring and maintenance. Transparency and accountability should be maintained throughout. Such policies should be easily accessible by users and should be updated as the collection and/or use of data changes. User data should be collected for legitimate and reasonable uses of the entity and not shared or sold outside of those legitimate uses. Further, such collection and sharing should occur through transparency with users and/or after receiving the informed consent of the users. Additionally, such entities should consider taking any needed steps for safeguarding and securing access to such data and ensuring that others with access to the data adhere to their privacy policies and procedures. Further, such entities should subject themselves to evaluation by third parties to certify, as appropriate for transparency purposes, their adherence to widely accepted privacy policies and practices. In addition, policies and/or practices should be adapted to the particular type of data being collected and/or accessed and tailored to a specific use case and applicable laws and standards, including jurisdiction-specific considerations.

In some embodiments, the visual media generation using a process for generating, via an automatically-generated visual media application, a visual representation of a respective background layer for the messaging user interface based on the contents of the messaging conversation may utilize models that may be trained (e.g., supervised learning or unsupervised learning) using various training data, including data collected using a user device. Such use of user-collected data may be limited to operations on the user device. For example, the training of the model can be done locally on the user device so no part of the data is sent to another device. In other implementations, the training of the model can be performed using one or more other devices (e.g., server(s)) in addition to the user device but done in a privacy preserving manner, e.g., via multi-party computation as may be done cryptographically by secret sharing data or other means so that the user data is not leaked to the other devices.

In some embodiments, the trained model can be centrally stored on the user device or stored on multiple devices, e.g., as in federated learning. Such decentralized storage can similarly be done in a privacy preserving manner, e.g., via cryptographic operations where each piece of data is broken into shards such that no device alone (i.e., only collectively with another device(s)) or only the user device can reassemble or use the data. In this manner, a pattern of behavior of the user or the device may not be leaked, while taking advantage of increased computational resources of the other devices to train and execute the ML model. Accordingly, user-collected data can be protected. In some implementations, data from multiple devices can be combined in a privacy-preserving manner to train an ML model.

In some embodiments, the present disclosure contemplates that data used for the visual media generation using a process for generating, via an automatically-generated visual media application, a visual representation of a respective background layer for the messaging user interface based on the contents of the messaging conversation may be kept strictly separated from platforms where the visual media generation using a process for generating, via an automatically-generated visual media application, a visual representation of a respective background layer for the messaging user interface based on the contents of the messaging conversation are deployed and/or used to interact with users and/or process data. In such embodiments, data used for offline training of the visual media generation using a process for generating, via an automatically-generated visual media application, a visual representation of a respective background layer for the messaging user interface based on the contents of the messaging conversation may be maintained in secured datastores with restricted access and/or not be retained beyond the duration necessary for training purposes. In some embodiments, the visual media generation using a process for generating, via an automatically-generated visual media application, a visual representation of a respective background layer for the messaging user interface based on the contents of the messaging conversation may utilize a local memory cache to store data temporarily during a user session. The local memory cache may be used to improve performance of the visual media generation using a process for generating, via an automatically-generated visual media application, a visual representation of a respective background layer for the messaging user interface based on the contents of the messaging conversation. However, to protect user privacy, data stored in the local memory cache may be erased after the user session is completed. Any temporary caches of data used for online learning or inference may be promptly erased after processing. All data collection, transfer, and/or storage should use industry-standard encryption and/or secure communication.

In some embodiments, as noted above, techniques such as federated learning, differential privacy, secure hardware components, homomorphic encryption, and/or multi-party computation among other techniques may be utilized to further protect personal information data during training and/or use of the visual media generation using a process for generating, via an automatically-generated visual media application, a visual representation of a respective background layer for the messaging user interface based on the contents of the messaging conversation. The visual media generation using a process for generating, via an automatically-generated visual media application, a visual representation of a respective background layer for the messaging user interface based on the contents of the messaging conversation should be monitored for changes in underlying data distribution such as concept drift or data skew that can degrade performance of the visual media generation using a process for generating, via an automatically-generated visual media application, a visual representation of a respective background layer for the messaging user interface based on the contents of the messaging conversation over time.

In some embodiments, the visual media generation using a process for generating, via an automatically-generated visual media application, a visual representation of a respective background layer for the messaging user interface based on the contents of the messaging conversation are trained using a combination of offline and online training. Offline training can use curated datasets to establish baseline model performance, while online training can allow the visual media generation using a process for generating, via an automatically-generated visual media application, a visual representation of a respective background layer for the messaging user interface based on the contents of the messaging conversation to continually adapt and/or improve. The present disclosure recognizes the importance of maintaining strict data governance practices throughout this process to ensure user privacy is protected.

In some embodiments, the visual media generation using a process for generating, via an automatically-generated visual media application, a visual representation of a respective background layer for the messaging user interface based on the contents of the messaging conversation may be designed with safeguards to maintain adherence to originally intended purposes, even as the visual media generation using a process for generating, via an automatically-generated visual media application, a visual representation of a respective background layer for the messaging user interface based on the contents of the messaging conversation adapt based on new data. Any significant changes in data collection and/or applications of the visual media generation using a process for generating, via an automatically-generated visual media application, a visual representation of a respective background layer for the messaging user interface based on the contents of the messaging conversation use may (and in some cases should) be transparently communicated to affected stakeholders and/or include obtaining user consent with respect to changes in how user data is collected and/or utilized.

Despite the foregoing, the present disclosure also contemplates embodiments in which users selectively restrict and/or block the use of and/or access to data. That is, the present disclosure contemplates that hardware and/or software elements can be provided to prevent or block access to data. For example, in the case of some services, the present technology should be configured to allow users to select to "opt in" or "opt out" of participation in the collection of data during registration for services or anytime thereafter. In another example, the present technology should be configured to allow users to select not to provide certain data for training the visual media generation using a process for generating, via an automatically-generated visual media application, a visual representation of a respective background layer for the messaging user interface based on the contents of the messaging conversation and/or for use as input during the inference stage of such systems. In yet another example, the present technology should be configured to allow users to be able to select to limit the length of time data is maintained or entirely prohibit the use of their data for use by the visual media generation using a process for generating, via an automatically-generated visual media application, a visual representation of a respective background layer for the messaging user interface based on the contents of the messaging conversation. In addition to providing "opt in" and "opt out" options, the present disclosure contemplates providing notifications relating to the access or use of personal information. For instance, a user can be notified when their data is being input into the visual media generation using a process for generating, via an automatically-generated visual media application, a visual representation of a respective background layer for the messaging user interface based on the contents of the messaging conversation for training or inference purposes, and/or reminded when the visual media generation using a process for generating, via an automatically-generated visual media application, a visual representation of a respective background layer for the messaging user interface based on the contents of the messaging conversation generate outputs or make decisions based on their data.

The present disclosure recognizes the visual media generation using a process for generating, via an automatically-generated visual media application, a visual representation of a respective background layer for the messaging user interface based on the contents of the messaging conversation should incorporate explicit restrictions and/or oversight to mitigate against risks that may be present even when such systems having been designed, developed, and/or operated according to industry best practices and standards. For example, outputs may be produced that could be considered erroneous, harmful, offensive, and/or biased; such outputs may not necessarily reflect the opinions or positions of the entities developing or deploying these systems. Furthermore, in some cases, references to or failures to cite third-party products and/or services in the outputs should not be construed as endorsements or affiliations by the entities providing the visual media generation using a process for generating, via an automatically-generated visual media application, a visual representation of a respective background layer for the messaging user interface based on the contents of the messaging conversation. Generated content can be filtered for potentially inappropriate or dangerous material prior to being presented to users, while human oversight and/or ability to override or correct erroneous or undesirable outputs can be maintained as a failsafe.

The present disclosure further contemplates that users of the visual media generation using a process for generating, via an automatically-generated visual media application, a visual representation of a respective background layer for the messaging user interface based on the contents of the messaging conversation should refrain from using the services in any manner that infringes upon, misappropriates, or violates the rights of any party. Furthermore, the visual media generation using a process for generating, via an automatically-generated visual media application, a visual representation of a respective background layer for the messaging user interface based on the contents of the messaging conversation should not be used for any unlawful or illegal activity, nor to develop any application or use case that would commit or facilitate the commission of a crime, or other tortious, unlawful, or illegal act including misinformation, disinformation, misrepresentations (e.g., deepfakes), deception, impersonation, and propaganda. The visual media generation using a process for generating, via an automatically-generated visual media application, a visual representation of a respective background layer for the messaging user interface based on the contents of the messaging conversation should not violate, misappropriate, or infringe any copyrights, trademarks, rights of privacy and publicity, trade secrets, patents, or other proprietary or legal rights of any party, and appropriately attribute content as required. Further, the visual media generation using a process for generating, via an automatically-generated visual media application, a visual representation of a respective background layer for the messaging user interface based on the contents of the messaging conversation should not interfere with any security, digital signing, digital rights management, content protection, verification, or authentication mechanisms. The visual media generation using a process for generating, via an automatically-generated visual media application, a visual representation of a respective background layer for the messaging user interface based on the contents of the messaging conversation should not misrepresent machine-generated outputs as being human-generated.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best use the invention and various described embodiments with various modifications as are suited to the particular use contemplated.

Exemplary embodiments of the present disclosure are set out in the following items:
1. A method comprising:
   at a first electronic device in communication with one or more display generation components and one or more input devices:
   displaying, via the one or more display generation components, a messaging user interface associated with a messaging application, including:
      a visual representation of a messaging conversation that includes a first user of the first electronic device and a second user; and
      a first visual representation of a background layer;
   while displaying the messaging user interface with the first visual representation of the background layer, detecting a first event; and
   in response to detecting the first event, in accordance with a determination that the first event satisfies one or more criteria, displaying, via the one or more display generation components, a second visual representation of the background layer corresponding to the first event.
2. The method of item 1, further comprising:
   in response to detecting the first event, in accordance with a determination that the first event does not satisfy the one or more criteria, maintaining displaying the first visual representation of the background layer.
3. The method of any one of items 1-2, wherein detecting the first event includes receiving an indication of an input detected at a second electronic device.
4. The method of any one of items 1-3, wherein the one or more criteria include a criterion that is satisfied when the first event includes an input directed to the background layer.
5. The method of any one of items 1-4, further comprising:
   following displaying the second visual representation of the background layer, determining that one or more second criteria are satisfied
      in response to determining that the one or more second criteria are satisfied, displaying the first visual representation of the background layer
   while displaying the first visual representation of the background layer following displaying the second visual representation of the background layer, detecting a second event;
   in response to detecting the second event, in accordance with a determination that the second event satisfies the one or more criteria, displaying a third visual representation of the background layer.
6. The method of item 5, further comprising:
   in response to detecting the second event, in accordance with a determination that the second event does not satisfy the one or more criteria, forgoing displaying the third visual representation of the background layer.
7. The method of any one of items 1-6, wherein the one or more criteria include a criterion that is satisfied when the background layer includes content that is configured to change from the first visual representation to the second visual representation in response to the first electronic device detecting one or more events.
8. The method of any one of items 1-7, wherein:
   the background layer includes content associated with an animation, and
   displaying the background layer with the second visual representation includes initiating playback of the animation.
9. The method of any one of items 1-8, wherein the one or more criteria includes a criterion that is satisfied when the first event includes a movement exceeding a threshold of the first electronic device.
10. The method of any one of items 1-9, wherein the one or more criteria includes a criterion that is satisfied when the first event includes one or more dynamic inputs.
11. The method of any one of items 1-10, wherein the one or more criteria includes a criterion that is satisfied when the first event includes adding a reaction to a first message in the messaging conversation.
12. The method of any one of items 1-11, further comprising:
   following displaying the second visual representation of the background layer:
   detecting that a first amount of time has lapsed
   in accordance with a determination that the first amount of time is greater than a first time threshold, displaying, via the one or more display generation components, a third visual representation of the background layer, different than the second visual representation of the background layer.
13. The method of any one of items 1-12, further comprising:
   while displaying the background layer with first content, detecting, via the one or more input devices, a second event;
   in response to detecting the second event:
      in accordance with a determination that the second event satisfies one or more second criteria, displaying, via the one or more display generation components, a first visual representation of the background layer including second content, different from the first content.
14. The method of item 13, wherein the one or more second criteria includes a criterion that is satisfied when the second event includes one or more inputs corresponding to a selection of one or more colors, and wherein the second content includes the one or more colors.
15. The method of any one of items 1-14, the method further comprising:
   while not displaying the messaging user interface with the visual representation of the messaging conversation, detecting, via the one or more input devices, one or more user inputs corresponding to a request to display the messaging user interface;
   in response to detecting the one or more user inputs corresponding to the request to display the messaging user interface:
   displaying, via the display generation component, the messaging user interface with the visual representation of the messaging conversation and a third visual representation of the background layer, including automatically initiating playback of an animation associated with the background layer.
16. The method of any one of items 1-15, further comprising:
   while displaying the messaging user interface including the visual representation of the messaging conversation with the third visual representation of the background layer, and during the playback of the animation, detecting that the animation associated with the background layer has terminated; and
   in response to detecting that the animation has terminated, ceasing displaying the third visual representation of the background layer with playback of the animation, and displaying the first visual representation of the background layer.
17. The method of any one of items 1-16, wherein displaying the second visual representation of the background layer corresponding to the first event includes:
   in accordance with a determination that displaying the background layer includes displaying, via the one or more display generation components, first background layer content, displaying the first background layer including content with a first visual effect; and
   in accordance with a determination that displaying the background layer includes displaying, via the one or more display generation components, second background layer content, displaying the second background layer content with a second visual effect, different than the first visual effect.
18. The method of any one of items 1-17 , wherein displaying the messaging user interface with the first visual representation of the background layer includes displaying a representation of a first message in a first location relative to the first visual representation of the background layer that obscures at least a portion of the first visual representation of the background layer, the method further comprising:
   while displaying the first message in the first location, displaying the representation of the first message with a first visual characteristic at a first level corresponding to the first location in relation to the first visual representation of the background layer; and
   in accordance with a determination that the first event satisfies one or more second criteria, including a criterion that is satisfied when the first event includes one or more inputs corresponding to a request to move the visual representation of first message from the first location to a second location, relative to the first visual representation of the background layer, different than the first location:
   displaying the first message in the second location relative to the first visual representation of the background layer with the visual characteristic having a second level, different from the first level.
19. A first electronic device that is in communication with one or more display generation components and one or more input devices, the electronic device comprising:
   one or more processors;
   memory; and
   one or more programs, wherein the one or more programs are stored in the memory and configured to be executed by the one or more processors, the one or more programs including instructions for:
      displaying, via the one or more display generation components, a messaging user interface associated with a messaging application, including:
         a visual representation of a messaging conversation that includes a first user of the first electronic device and a second user; and
         a first visual representation of a background layer;
      while displaying the messaging user interface with the first visual representation of the background layer, detecting a first event; and
      in response to detecting the first event, in accordance with a determination that the first event satisfies one or more criteria, displaying, via the one or more display generation components, a second visual representation of the background layer corresponding to the first event.
20. A non-transitory computer readable storage medium storing one or more programs, the one or more programs comprising instructions, which when executed by one or more processors of a first electronic device, cause the electronic device to perform a method comprising:
   displaying, via one or more display generation components, a messaging user interface associated with a messaging application, including:
      a visual representation of a messaging conversation that includes a first user of the first electronic device and a second user; and
      a first visual representation of a background layer;
   while displaying the messaging user interface with the first visual representation of the background layer, detecting a first event; and
   in response to detecting the first event, in accordance with a determination that the first event satisfies one or more criteria, displaying, via the one or more display generation components, a second visual representation of the background layer corresponding to the first event.
21. A first electronic device, comprising:
   one or more processors;
   memory;
   means for, displaying, via one or more display generation components, a messaging user interface associated with a messaging application, including:
      a visual representation of a messaging conversation that includes a first user of the first electronic device and a second user; and
      a first visual representation of a background layer;
   means for, while displaying the messaging user interface with the first visual representation of the background layer, detecting a first event; and
   means for, in response to detecting the first event, in accordance with a determination that the first event satisfies one or more criteria, displaying, via the one or more display generation components, a second visual representation of the background layer corresponding to the first event.
22. An information processing apparatus for use in a first electronic device, the information processing apparatus comprising:
   means for, displaying, via one or more display generation components, a messaging user interface associated with a messaging application, including:
      a visual representation of a messaging conversation that includes a first user of the first electronic device and a second user; and
      a first visual representation of a background layer;
   means for, while displaying the messaging user interface with the first visual representation of the background layer, detecting a first event; and
   means for, in response to detecting the first event, in accordance with a determination that the first event satisfies one or more criteria, displaying, via the one or more display generation components, a second visual representation of the background layer corresponding to the first event.
23. An electronic device, comprising:
   one or more processors;
   memory; and
   one or more programs, wherein the one or more programs are stored in the memory and configured to be executed by the one or more processors, the one or more programs including instructions for performing any of the methods of items 1-18.
24. A non-transitory computer readable storage medium storing one or more programs, the one or more programs comprising instructions, which when executed by one or more processors of an electronic device, cause the electronic device to perform any of the methods of items 1-18.
25. An electronic device, comprising:
   one or more processors;
   memory; and
   means for performing any of the methods of items 1-18.
26. An information processing apparatus for use in an electronic device, the information processing apparatus comprising:
   means for performing any of the methods of items 1-18.
27. A method comprising:
   at a first electronic device, in communication with one or more display generation components and one or more input devices:
   after a messaging conversation between a first user of the first electronic device and a second user has received a first message from the second user, wherein the first message is associated with a first background, detecting, via the one or more input devices, a first input corresponding to a request to display a messaging user interface for the messaging conversation including the first message; and
   in response to detecting the first input:
      in accordance with a determination that one or more first criteria are satisfied, displaying, via the one or more display generation components and in the messaging user interface, a first visual representation of the messaging conversation with a first visual representation of the first background; and
      in accordance with a determination that the one or more first criteria are not satisfied, displaying, via the one or more display generation components and in the messaging user interface, a second visual representation of the messaging conversation with a second visual representation of the first background different from the first visual representation of the first background.
28. The method of item 27, wherein:
   displaying the first visual representation of the first background includes displaying a second background without displaying the first background, and
   displaying the second visual representation of the first background includes displaying the first background.
29. The method of any one of items 27-28, wherein the one or more first criteria include a criterion that is satisfied when the second user is not saved as a contact of the first user.
30. The method of any one of items 27-29, wherein the one or more first criteria include a criterion that is satisfied when the messaging conversation does not include a second message, sent by the first user, in response to one or more messages received from the second user.
31. The method of any one of items 27-30, wherein the one or more first criteria include a criterion that is satisfied when one or more messages sent to the messaging conversation by the first user include a phrase corresponding to a request to cease communications between the first user and the second user.
32. The method of any one of items 27-31, wherein the one or more first criteria include a criterion that is satisfied when the first background includes sensitive content based on one or more content recognition operations.
33. The method of item 32, wherein the one or more content recognition operations are performed using one or more ML models.
34. The method of any one of items 32-33, wherein the one or more content recognition operations include performing one or more search operations on a first portion of a filename associated with the first background.
35. The method of any one of items 27-34, wherein the messaging conversation is associated with a messaging application, and
   wherein the one or more first criteria include a criterion that is satisfied when a setting, associated with the messaging application, corresponding to a request to display a third visual representation of the first background, including a second background, different than the first background, is activated.
36. The method of any one of items 27-35, further comprising:
   while the one or more first criteria are satisfied:
   detecting a first event, corresponding to one or more inputs from the second user requesting to associate a second background with the messaging conversation, different than the first background; and
   in response to detecting the event, displaying a third background, different than the second background, wherein the third background is different from the second background.
37. The method of any one of items 27-36, further comprising:
   while the first electronic device displays the second visual representation of the first background, detecting a first event corresponding to one or more inputs from the second user requesting to display the messaging conversation with a second background; and
   in response to detecting the first event, in accordance with a determination that the second background does not satisfy the one or more first criteria, displaying, via the one or more display generation components, a third visual representation of the messaging conversation with the second background, different than the second visual representation of the first background.
38. The method of any one of items 27-37, further comprising:
   while the one or more first criteria are satisfied:
   while the first electronic device is displaying the first visual representation the first background, detecting a first event, including one or more inputs from the first user, corresponding to a request to display a second background, different from the first background;
   in response to detecting the first event, displaying, via the one or more display generation components, a third visual representation of the messaging conversation with a third background, different than the second background, which includes a visual representation of the second background at the first electronic device,
   without initiating a process to display the third background at a second electronic device associated with the second user.
39. The method of any one of items 27-38, further comprising:
   while the one or more first criteria are satisfied and while the first electronic device is displaying the first visual representation of the first background, detecting a first event, which results in the one or more first criteria no longer being satisfied; and
   in response to detecting the first event which results in the one or more first criteria no longer being satisfied, displaying, via the one or more display generation components, a third visual representation of the messaging conversation with the second visual representation of the first background.
40. A first electronic device that is in communication with one or more display generation components and one or more input devices, the electronic device comprising:
   one or more processors;
   memory; and
   one or more programs, wherein the one or more programs are stored in the memory and configured to be executed by the one or more processors, the one or more programs including instructions for:
      after a messaging conversation between a first user of the first electronic device and a second user has received a first message from the second user, wherein the first message is associated with a first background, detecting, via the one or more input devices, a first input corresponding to a request to display a messaging user interface for the messaging conversation including the first message; and
      in response to detecting the first input:
         in accordance with a determination that one or more first criteria are satisfied, displaying, via the one or more display generation components and in the messaging user interface, a first visual representation of the messaging conversation with a first visual representation of the first background; and
         in accordance with a determination that the one or more first criteria are not satisfied, displaying, via the one or more display generation components and in the messaging user interface, a second visual representation of the messaging conversation with a second visual representation of the first background different from the first visual representation of the first background.
41. A non-transitory computer readable storage medium storing one or more programs, the one or more programs comprising instructions, which when executed by one or more processors of a first electronic device, cause the electronic device to perform a method comprising:
   after a messaging conversation between a first user of the first electronic device and a second user has received a first message from the second user, wherein the first message is associated with a first background, detecting, via one or more input devices, a first input corresponding to a request to display a messaging user interface for the messaging conversation including the first message; and
   in response to detecting the first input:
      in accordance with a determination that one or more first criteria are satisfied, displaying, via one or more display generation components and in the messaging user interface, a first visual representation of the messaging conversation with a first visual representation of the first background; and
      in accordance with a determination that the one or more first criteria are not satisfied, displaying, via the one or more display generation components and in the messaging user interface, a second visual representation of the messaging conversation with a second visual representation of the first background different from the first visual representation of the first background.
42. A first electronic device, comprising:
   one or more processors;
   memory;
   means for, after a messaging conversation between a first user of the first electronic device and a second user has received a first message from the second user, wherein the first message is associated with a first background, detecting, via one or more input devices, a first input corresponding to a request to display a messaging user interface for the messaging conversation including the first message; and
   means for, in response to detecting the first input:
      in accordance with a determination that one or more first criteria are satisfied, displaying, via one or more display generation components and in the messaging user interface, a first visual representation of the messaging conversation with a first visual representation of the first background; and
      in accordance with a determination that the one or more first criteria are not satisfied, displaying, via the one or more display generation components and in the messaging user interface, a second visual representation of the messaging conversation with a second visual representation of the first background different from the first visual representation of the first background.
43. An information processing apparatus for use in a first electronic device, the information processing apparatus comprising:
   means for, after a messaging conversation between a first user of the first electronic device and a second user has received a first message from the second user, wherein the first message is associated with a first background, detecting, via one or more input devices, a first input corresponding to a request to display a messaging user interface for the messaging conversation including the first message; and
   means for, in response to detecting the first input:
      in accordance with a determination that one or more first criteria are satisfied, displaying, via one or more display generation components and in the messaging user interface, a first visual representation of the messaging conversation with a first visual representation of the first background; and
      in accordance with a determination that the one or more first criteria are not satisfied, displaying, via the one or more display generation components and in the messaging user interface, a second visual representation of the messaging conversation with a second visual representation of the first background different from the first visual representation of the first background.
44. An electronic device, comprising:
   one or more processors;
   memory; and
   one or more programs, wherein the one or more programs are stored in the memory and configured to be executed by the one or more processors, the one or more programs including instructions for performing any of the methods of items 27-39.
45. A non-transitory computer readable storage medium storing one or more programs, the one or more programs comprising instructions, which when executed by one or more processors of an electronic device, cause the electronic device to perform any of the methods of items 27-39.
46. An electronic device, comprising:
   one or more processors;
   memory; and
   means for performing any of the methods of items 27-39.
47. An information processing apparatus for use in an electronic device, the information processing apparatus comprising:
   means for performing any of the methods of items 27-39.
48. A method comprising:
   at an electronic device in communication with one or more display generation components and one or more input devices:
   displaying, via the one or more display generation components, a messaging user interface associated with a messaging application, including a messaging conversation between a user account of the electronic device and a second user account, and a background layer;
   while displaying the messaging user interface with the background layer, detecting that one or more criteria are satisfied including a criterion that is satisfied based on contents of the messaging conversation; and in response to detecting that the one or more criteria are satisfied:
      generating, via an automatically generated visual media application, a visual representation of a respective background layer for the messaging user interface based on the contents of the messaging conversation; and
      displaying, via the one or more display generation components, a user interface element associated with the generated visual representation of the respective background layer within the messaging user interface, wherein generating the visual representation of the respective background layer includes:
         in accordance with a determination that the messaging conversation includes first content, generating a first generated visual representation associated with the first content, and
         in accordance with a determination that the messaging conversation includes second content different from the first content, generating a second generated visual representation associated with the second content.
49. The method of item 48, wherein the user interface element within the messaging user interface is a notification element.
50. The method of any of items 48-49, further comprising:
   detecting, via the one or more input devices, an input directed towards an affordance in the user interface element; and
   in response to detecting the input, displaying, via the one or more display generation components, the messaging user interface with the respective background layer.
51. The method of any of items 48-50, wherein:
   generating, via the automatically generated visual media application, the visual representation of the respective background layer for the messaging user interface based on the contents of the messaging conversation includes:
   generating the visual representation of the respective background layer for the messaging user interface based on a respective prompt based on respective content of the messaging conversation, wherein:
   in accordance with the determination that the messaging conversation includes the first content, the respective content is the first content, and
   in accordance with the determination that the messaging conversation includes the second content, the respective content is the second content.
52. The method of item 51, further comprising:
   displaying, via the one or more display generation components, a respective user interface associated with the automatically generated visual media application, the respective user interface different from the messaging user interface;
   while displaying the respective user interface, detecting that one or more second criteria are satisfied; and
   in response to detecting that the one or more second criteria are satisfied:
      generating, via the automatically-generated visual media application, an automatically-generated visual media item based on a prompt corresponding to the respective prompt based on the contents of the messaging conversation, wherein:
      the automatically-generated visual media item generated based on the respective prompt in response to detecting that the one or more first criteria are satisfied has a first appearance, and
      the automatically-generated visual media item generated based on the prompt corresponding to the respective prompt in response to detecting that the one or more second criteria are satisfied has a second appearance, different from the first appearance.
53. The method of item 51, wherein the respective prompt includes a prompt component derived from one or more previously-sent messages in the messaging conversation.
54. The method of item 51, wherein the respective prompt includes a prompt component derived from one or more unsent messages in the messaging conversation.
55. The method of any of items 48-54, further comprising:
   after generating the visual representation of the respective background layer and in response to detecting that one or more second criteria are satisfied including a criterion that is satisfied when the contents of the conversation change to include third content:
   generating, via the automatically generated visual media application, a visual representation of a second background layer for the messaging user interface based on the third content; and
   displaying, via the one or more display generation components, a second user interface element associated with the generated visual representation of the second background layer within the messaging user interface.
56. The method of item 55, wherein:
   displaying the user interface element associated with the generated visual representation of the respective background layer within the messaging user interface includes displaying the representation of the respective background layer in a notification element, and displaying the second user interface element includes displaying the representation of the generated visual representation of the second background layer within the messaging user interface in the notification element.
57. The method of any of items 55-56, further comprising:
   while displaying the messaging user interface, detecting, via the one or more input devices, a sequence of inputs directed towards one or more affordances in the messaging user interface; and
   in response to detecting the sequence of inputs, displaying, via the one or more display generation components, a control panel user interface for the messaging conversation, including one or more options for changing the background layer,
   wherein a first option of the one or more options includes a visual representation of the second background layer.
58. The method of any of items 48-57, further comprising:
   displaying, via the one or more display generation components, a second messaging user interface associated with the messaging application, including a second messaging conversation between a user account of the electronic device and a third user account different from the second user account, and a second background layer different from the background layer;
   while displaying the second messaging user interface with the second background layer, detecting that one or more second criteria are satisfied including a criterion that is satisfied based on contents of the second messaging conversation; and
   in response to detecting that the one or more second criteria are satisfied:
      generating, via the automatically generated visual media application, a visual representation of a second background layer for the second messaging user interface based on the contents of the second messaging conversation; and
      displaying, via the one or more display generation components, a second user interface element associated with the generated visual representation of the second background layer second within the messaging user interface,
      wherein generating the visual representation of the second background layer is independent of generating the visual representation of the background layer.
59. The method of any of items 48-57, further comprising:
   detecting, via the one or more input devices, one or more inputs corresponding to a request to generate a third visual representation of the respective background layer, including receiving one or more user-provided prompt components; and
   in response to detecting the one or more inputs, generating the third visual representation of the respective background layer based on the one or more received user-provided prompt components.
60. The method of item 59, wherein generating the third visual representation of the respective background layer includes:
   displaying, via the one or more display generation components, one or more suggested prompt components , the one or more suggested prompt components based on the contents of the messaging conversation.
61. The method of any of items 48-60, further comprising:
   displaying, via the one or more display generation components, a control panel user interface, including one or more control elements associated with the messaging conversation including a first control element that includes the generated visual representation of the respective background layer.
62. The method of item 60, further comprising:
   while displaying the control panel user interface including the first control element, displaying, via the one or more display generation components, a second control element in the control panel user interface, that, when selected, causes the electronic device to apply a third visual representation of the background layer to the messaging user interface, wherein the third visual representation is based on a photograph accessible on the electronic device.
63. The method of any of items 61-62, further comprising:
   while displaying the control panel portion including the first control element, displaying, via the one or more display generation components, a second control element in the control panel portion, that, when selected, causes the electronic device to apply a third visual representation of the background layer to the messaging user interface, wherein the third visual representation includes a color gradient.
64. The method of any of item 61-63, further comprising:
   while displaying the control panel portion including the first control element, displaying, via the one or more display generation components, a second control element in the control panel portion, that, when selected, causes the electronic device to apply a third visual representation of the background layer to the messaging user interface, wherein the third visual representation includes a default background irrespective of a respective background of the messaging conversation set by the second user account.
65. The method of any of items 61-64, further comprising:
   detecting, via the one or more input devices, an input selecting the first control element; and
   in response to detecting the input selecting the first control element, applying the generated visual representation of the respective background layer to the messaging user interface.
66. An electronic device that is in communication with one or more display generation components and one or more input devices, the electronic device comprising:
   one or more processors;
   memory; and
   one or more programs, wherein the one or more programs are stored in the memory and configured to be executed by the one or more processors, the one or more programs including instructions for:
      displaying, via the one or more display generation components, a messaging user interface associated with a messaging application, including a messaging conversation between a user account of the electronic device and a second user account, and a background layer;
      while displaying the messaging user interface with the background layer, detecting that one or more criteria are satisfied including a criterion that is satisfied based on contents of the messaging conversation; and in response to detecting that the one or more criteria are satisfied:
         generating, via an automatically generated visual media application, a visual representation of a respective background layer for the messaging user interface based on the contents of the messaging conversation; and
         displaying, via the one or more display generation components, a user interface element associated with the generated visual representation of the respective background layer within the messaging user interface, wherein generating the visual representation of the respective background layer includes:
            in accordance with a determination that the messaging conversation includes first content, generating a first generated visual representation associated with the first content, and
            in accordance with a determination that the messaging conversation includes second content different from the first content, generating a second generated visual representation associated with the second content.
67. A non-transitory computer readable storage medium storing one or more programs, the one or more programs comprising instructions, which when executed by one or more processors of an electronic device, cause the electronic device to perform a method comprising:
   displaying, via one or more display generation components, a messaging user interface associated with a messaging application, including a messaging conversation between a user account of the electronic device and a second user account, and a background layer;
   while displaying the messaging user interface with the background layer, detecting that one or more criteria are satisfied including a criterion that is satisfied based on contents of the messaging conversation; and in response to detecting that the one or more criteria are satisfied:
      generating, via an automatically generated visual media application, a visual representation of a respective background layer for the messaging user interface based on the contents of the messaging conversation; and
      displaying, via the one or more display generation components, a user interface element associated with the generated visual representation of the respective background layer within the messaging user interface, wherein generating the visual representation of the respective background layer includes:
         in accordance with a determination that the messaging conversation includes first content, generating a first generated visual representation associated with the first content, and
         in accordance with a determination that the messaging conversation includes second content different from the first content, generating a second generated visual representation associated with the second content.
68. An electronic device, comprising:
   one or more processors;
   memory;
   means for:
      displaying, via one or more display generation components, a messaging user interface associated with a messaging application, including a messaging conversation between a user account of the electronic device and a second user account, and a background layer;
      while displaying the messaging user interface with the background layer, detecting that one or more criteria are satisfied including a criterion that is satisfied based on contents of the messaging conversation; and in response to detecting that the one or more criteria are satisfied:
         generating, via an automatically generated visual media application, a visual representation of a respective background layer for the messaging user interface based on the contents of the messaging conversation; and
         displaying, via the one or more display generation components, a user interface element associated with the generated visual representation of the respective background layer within the messaging user interface, wherein generating the visual representation of the respective background layer includes:
            in accordance with a determination that the messaging conversation includes first content, generating a first generated visual representation associated with the first content, and
            in accordance with a determination that the messaging conversation includes second content different from the first content, generating a second generated visual representation associated with the second content.
69. An information processing apparatus for use in an electronic device, the information processing apparatus comprising:
   means for:
   displaying, via the one or more display generation components, a messaging user interface associated with a messaging application, including a messaging conversation between a user account of the electronic device and a second user account, and a background layer;
   while displaying the messaging user interface with the background layer, detecting that one or more criteria are satisfied including a criterion that is satisfied based on contents of the messaging conversation; and in response to detecting that the one or more criteria are satisfied:
      generating, via an automatically generated visual media application, a visual representation of a respective background layer for the messaging user interface based on the contents of the messaging conversation; and
      displaying, via the one or more display generation components, a user interface element associated with the generated visual representation of the respective background layer within the messaging user interface, wherein generating the visual representation of the respective background layer includes:
         in accordance with a determination that the messaging conversation includes first content, generating a first generated visual representation associated with the first content, and
         in accordance with a determination that the messaging conversation includes second content different from the first content, generating a second generated visual representation associated with the second content.
70. An electronic device, comprising:
   one or more processors;
   memory; and
   one or more programs, wherein the one or more programs are stored in the memory and configured to be executed by the one or more processors, the one or more programs including instructions for performing any of the methods of items 48-65.
71. A non-transitory computer readable storage medium storing one or more programs, the one or more programs comprising instructions, which when executed by one or more processors of an electronic device, cause the electronic device to perform any of the methods of items 48-65.
72. An electronic device, comprising:
   one or more processors;
   memory; and
   means for performing any of the methods of items 48-65.
73. An information processing apparatus for use in an electronic device, the information processing apparatus comprising:
   means for performing any of the methods of items 48-65.

## Claims

1. A method comprising:
at a first electronic device in communication with one or more display generation components and one or more input devices:
displaying, via the one or more display generation components, a messaging user interface associated with a messaging application, including:
a visual representation of a messaging conversation that includes a first user of the first electronic device and a second user; and
a first visual representation of a background layer;
while displaying the messaging user interface with the first visual representation of the background layer, detecting a first event; and
in response to detecting the first event, in accordance with a determination that the first event satisfies one or more criteria, displaying, via the one or more display generation components, a second visual representation of the background layer corresponding to the first event.

2. The method of claim 1, further comprising:
in response to detecting the first event, in accordance with a determination that the first event does not satisfy the one or more criteria, maintaining displaying the first visual representation of the background layer.

3. The method of any one of claims 1-2, wherein detecting the first event includes receiving an indication of an input detected at a second electronic device.

4. The method of any one of claims 1-3, wherein the one or more criteria include a criterion that is satisfied when the first event includes an input directed to the background layer.

5. The method of any one of claims 1-4, further comprising:
following displaying the second visual representation of the background layer, determining that one or more second criteria are satisfied
in response to determining that the one or more second criteria are satisfied, displaying the first visual representation of the background layer
while displaying the first visual representation of the background layer following displaying the second visual representation of the background layer, detecting a second event;
in response to detecting the second event, in accordance with a determination that the second event satisfies the one or more criteria, displaying a third visual representation of the background layer.

6. The method of any one of claims 1-5, wherein:
the background layer includes content associated with an animation, and
displaying the background layer with the second visual representation includes initiating playback of the animation.

7. The method of any one of claims 1-6, wherein the one or more criteria includes a criterion that is satisfied when the first event includes a movement exceeding a threshold of the first electronic device, a criterion that is satisfied when the first event includes one or more dynamic inputs, and/or a criterion that is satisfied when the first event includes adding a reaction to a firs message in the messaging conversation.

8. The method of any one of claims 1-7, further comprising:
following displaying the second visual representation of the background layer:
detecting that a first amount of time has lapsed
in accordance with a determination that the first amount of time is greater than a first time threshold, displaying, via the one or more display generation components, a third visual representation of the background layer, different than the second visual representation of the background layer.

9. The method of any one of claims 1-8, further comprising:
while displaying the background layer with first content, detecting, via the one or more input devices, a second event;
in response to detecting the second event:
in accordance with a determination that the second event satisfies one or more second criteria, displaying, via the one or more display generation components, a first visual representation of the background layer including second content, different from the first content,
wherein the one or more second criteria includes a criterion that is satisfied when the second event includes one or more inputs corresponding to a selection of one or more colors, and wherein the second content includes the one or more colors.

10. The method of any one of claims 1-9, the method further comprising:
while not displaying the messaging user interface with the visual representation of the messaging conversation, detecting, via the one or more input devices, one or more user inputs corresponding to a request to display the messaging user interface;
in response to detecting the one or more user inputs corresponding to the request to display the messaging user interface:
displaying, via the display generation component, the messaging user interface with the visual representation of the messaging conversation and a third visual representation of the background layer, including automatically initiating playback of an animation associated with the background layer.

11. The method of any one of claims 1-10, further comprising:
while displaying the messaging user interface including the visual representation of the messaging conversation with the third visual representation of the background layer, and during the playback of the animation, detecting that the animation associated with the background layer has terminated; and
in response to detecting that the animation has terminated, ceasing displaying the third visual representation of the background layer with playback of the animation, and displaying the first visual representation of the background layer.

12. The method of any one of claims 1-11, wherein displaying the second visual representation of the background layer corresponding to the first event includes:
in accordance with a determination that displaying the background layer includes displaying, via the one or more display generation components, first background layer content, displaying the first background layer including content with a first visual effect; and
in accordance with a determination that displaying the background layer includes displaying, via the one or more display generation components, second background layer content, displaying the second background layer content with a second visual effect, different than the first visual effect.

13. The method of any one of claims 1-12 , wherein displaying the messaging user interface with the first visual representation of the background layer includes displaying a representation of a first message in a first location relative to the first visual representation of the background layer that obscures at least a portion of the first visual representation of the background layer, the method further comprising:
while displaying the first message in the first location, displaying the representation of the first message with a first visual characteristic at a first level corresponding to the first location in relation to the first visual representation of the background layer; and
in accordance with a determination that the first event satisfies one or more second criteria, including a criterion that is satisfied when the first event includes one or more inputs corresponding to a request to move the visual representation of first message from the first location to a second location, relative to the first visual representation of the background layer, different than the first location:
displaying the first message in the second location relative to the first visual representation of the background layer with the visual characteristic having a second level, different from the first level.

14. An electronic device, comprising:
one or more processors;
memory; and
one or more programs, wherein the one or more programs are stored in the memory and configured to be executed by the one or more processors, the one or more programs including instructions for performing any of the methods of claims 1-13.

15. A non-transitory computer readable storage medium storing one or more programs, the one or more programs comprising instructions, which when executed by one or more processors of an electronic device, cause the electronic device to perform any of the methods of claims 1-13.
